# EUROPEAN PATENT APPLICATION

(11) **EP 4 761 124 A1**
(43) Date of publication of application: **17.06.2026**
(21) Application number: 24852001.7
(22) Date of filing: 25.04.2024
(51) Int. Cl.: H04B 7/0456, H04B 7/06, H04B 7/08, H04W 52/02, H04L 5/00

(54) **DEVICE AND METHOD FOR REPORTING CHANNEL STATE INFORMATION ON BASIS OF SUB-CONFIGURATIONS IN WIRELESS COMMUNICATION SYSTEM**

(30) Priority: 07.08.2023 KR 20230103147; 26.09.2023 KR 20230129695; 30.10.2023 KR 20230146397
(71) Applicant: LG Electronics Inc., Yeongdeungpo-gu Seoul 07336 (KR)
(72) Inventor: KIM, Seonwook, Seoul 06772 (KR); YANG, Suckchel, Seoul 06772 (KR); PARK, Haewook, Seoul 06772 (KR); LEE, Youngdae, Seoul 06772 (KR); KIM, Kijun, Seoul 06772 (KR); KANG, Jiwon, Seoul 06772 (KR)
(74) Representative: Maikowski & Ninnemann Patentanwälte Partnerschaft mbB
(86) International application number: PCT/KR2024/005604
(87) International publication number: WO 2025/033642

(57) **Abstract**

The purpose of the present disclosure is to report channel state information (CSI) on the basis of sub-configurations in a wireless communication system, and a method performed by a terminal may comprise the steps of: receiving configuration information for a CSI report including at least one sub-configuration; identifying information related to an antenna port subset associated with the at least one sub-configuration; identifying rank to port mapping for non-precoding matrix indicator (PMI) feedback per sub-configuration; generating CSI for the at least one sub-configuration on the basis of a measurement result based on at least one CSI-RS related to the CSI report; and transmitting, to a base station, a CSI report including the CSI.

## Description

### TECHNICAL FIELD

The following description relates to a wireless communication system, and to a device and method for reporting channel state information (CSI) based on sub-configurations in a wireless communication system.

### BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### DISCLOSURE

### TECHNICAL PROBLEM

The present disclosure relates to a device and a method for effectively reporting channel state information (CSI) based on sub-configurations in a wireless communication system.

The present disclosure relates to a device and a method for indicating an antenna port (AP) subset of sub-configurations in a wireless communication system.

The present disclosure relates to a device and a method for reporting CSI based on an AP subset of sub-configurations in a wireless communication system.

The present disclosure relates to a device and a method for determining an AP subset in consideration of a code division multiplexing (CDM) group in a wireless communication system.

The present disclosure relates to a device and a method for determining mapping between ranks and APs in a wireless communication system.

The present disclosure relates to a device and a method for determining mapping between ranks and APs by considering an AP subset of a sub-configuration in a wireless communication system.

The present disclosure relates to a device and a method for re-indexing APs by considering an AP subset of a sub-configuration in a wireless communication system.

The present disclosure relates to a device and a method for re-indexing APs based on bitmap information indicating an AP subset of a sub-configuration in a wireless communication system.

The present disclosure relates to a device and a method for determining an AP set per rank based on rank-specific AP set information for non-precoding matrix indicator (PMI) feedback included in a sub-configuration in a wireless communication system.

The present disclosure relates to a device and a method for determining an AP set per rank based on rank-specific AP set information for non-PMI feedback included in another sub-configuration in a wireless communication system.

The present disclosure relates to a device and a method for determining an AP set per rank based on an index order of APs in a wireless communication system.

The technical objectives to be achieved in the present disclosure are not limited to the matters mentioned above, and other technical problems not mentioned may be considered by those skilled in the art to which the technical configuration of the present disclosure is applied from the embodiments of the present disclosure described below.

### TECHNICAL SOLUTION

In one example of the present disclosure, a method performed by a user equipment (UE) in a wireless communication system may comprise: receiving configuration information for a channel state information (CSI) report including at least one sub-configuration; checking information related to an antenna port subset related to the at least one sub-configuration; checking a rank-to-port mapping for a non-precoding matrix indicator (PMI) feedback per sub-configuration; generating CSI for the at least one sub-configurations, based on a measurement result based on at least one CSI-RS related to the CSI report; and transmitting, to a base station, CSI report including the CSI, wherein the CSI may include at least one a rank indicator (RI) or a channel quality information (CQI), wherein the RI or the CQI may be calculated based on the rank-to-port mapping determined based on antenna port indexes mapped to antenna ports included in the antenna port subset, and wherein the antenna port indexes may be determined by mapping the antenna ports to consecutive value starting from a starting value of index, in ascending order of index within an entire set.

In one example of the present disclosure, a user equipment (UE) in a wireless communication system may comprise a transceiver and a processor connected to the transceiver, wherein the processor may control to: receive configuration information for a channel state information (CSI) report including at least one sub-configuration; check information related to an antenna port subset related to the at least one sub-configuration; check a rank-to-port mapping for a non-precoding matrix indicator (PMI) feedback per sub-configuration; generate CSI for the at least one sub-configurations, based on a measurement result based on at least one CSI-RS related to the CSI report; and transmit, to a base station, CSI report including the CSI, wherein the CSI may include at least one a rank indicator (RI) or a channel quality information (CQI), wherein the RI or the CQI may be calculated based on the rank-to-port mapping determined based on antenna port indexes mapped to antenna ports included in the antenna port subset, and wherein the antenna port indexes may be determined by mapping the antenna ports to consecutive value starting from a starting value of index, in ascending order of index within an entire set.

In one example of the present disclosure, a communication device may comprise at least one processor, and at least one computer memory connected to the at least one processor and storing instructions that direct operations when executed by the at least one processor, the operations comprising: receiving configuration information for a channel state information (CSI) report including at least one sub-configuration; checking information related to an antenna port subset related to the at least one sub-configuration; checking a rank-to-port mapping for a non-precoding matrix indicator (PMI) feedback per sub-configuration; generating CSI for the at least one sub-configurations, based on a measurement result based on at least one CSI-RS related to the CSI report; and transmitting, to a base station, CSI report including the CSI, wherein the CSI may include at least one a rank indicator (RI) or a channel quality information (CQI), wherein the RI or the CQI may be calculated based on the rank-to-port mapping determined based on antenna port indexes mapped to antenna ports included in the antenna port subset, and wherein the antenna port indexes may be determined by mapping the antenna ports to consecutive value starting from a starting value of index, in ascending order of index within an entire set.

In one example of the present disclosure, a non-transitory computer-readable medium storing at least one instruction may comprise the at least one instruction executable by a processor, wherein the at least one instruction causing a device, the processor, to: receive configuration information for a channel state information (CSI) report including at least one sub-configuration; check information related to an antenna port subset related to the at least one sub-configuration; check a rank-to-port mapping for a non-precoding matrix indicator (PMI) feedback per sub-configuration; generate CSI for the at least one sub-configurations, based on a measurement result based on at least one CSI-RS related to the CSI report; and transmit, to a base station, CSI report including the CSI, wherein the CSI may include at least one a rank indicator (RI) or a channel quality information (CQI), wherein the RI or the CQI may be calculated based on the rank-to-port mapping determined based on antenna port indexes mapped to antenna ports included in the antenna port subset, and wherein the antenna port indexes may be determined by mapping the antenna ports to consecutive value starting from a starting value of index, in ascending order of index within an entire set.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

### ADVANTAGEOUS EFFECTS

According to embodiments based on the present disclosure, the following effects may be obtained.

According to the present disclosure, channel state information (CSI) feedback for a subset of antenna ports (APs) may be performed using an existing codebook.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

FIG. 1 illustrates an example of a structure of a wireless communication system to which the present disclosure may be applied.
FIG. 2 illustrates an example of a wireless device applicable to the present disclosure.
FIG. 3 illustrates a frame structure in a wireless communication system to which the present disclosure may be applied.
FIG. 4 illustrates an example of a resource grid in a wireless communication system to which the present disclosure may be applied.
FIG. 5 illustrates an example of a physical resource block in a wireless communication system to which the present disclosure may be applied.
FIG. 6 illustrates an example of a slot structure in a wireless communication system to which the present disclosure may be applied.
FIG. 7 illustrates examples of physical channels used in a wireless communication system, to which the present disclosure may be applied, and an example of a general signal transmission and reception method using the physical channels.
FIG. 8 illustrates a diagram illustrating an example in which a physical channel is mapped in a slot to which various embodiments are applicable.
FIG. 9 illustrates an example of beams applicable to the present disclosure.
FIG. 10 illustrates an example of a downlink (DL) beam management (BM) procedure using a synchronization signal block (SSB) applicable to the present disclosure.
FIG. 11 illustrates an example of a DL BM procedure using a channel state information (CSI) reference signal (RS) applicable to the present disclosure.
FIG. 12 illustrates an example of a receive beam determination procedure of a UE applicable to the present disclosure.
FIG. 13 illustrates an example of a transmit beam determination procedure of a base station applicable to the present disclosure.
FIG. 14 illustrates an example of resource allocation in a time and frequency domain applicable to the present disclosure.
FIG. 15 illustrates an example of beam sweeping for uplink (UL) BM using a sounding reference signal (SRS) applicable to the present disclosure.
FIG. 16 illustrates an example of a UL BM procedure using an SRS applicable to the present disclosure.
FIG. 17 illustrates an example of an operation procedure of a base station supporting a network energy saving (NES) technology applicable to the present disclosure.
FIG. 18 illustrates an example of a procedure for channel state information (CSI) measurement and reporting applicable to the present disclosure.
FIG. 19a to FIG. 19c illustrate examples of states of antenna elements according to an embodiment of the present disclosure.
FIG. 20 illustrates an example of configuration information for CSI reporting according to various embodiments of the present disclosure.
FIG. 21a to FIG. 21r illustrate examples of antenna port (AP) mapping of CSI-reference signal (RS) according to various patterns applicable to the present disclosure.
FIG. 22 illustrates an example of a port layout for configuration of a multiple input multiple output (MIMO) codebook applicable to the present disclosure.
FIG. 23a to FIG. 23m illustrate examples of port layouts according to various combinations of N1 and N2 applicable to the present disclosure.
FIG. 24a to FIG. 24h illustrate examples of port layouts according to various combinations of Ng, N1, and N2 applicable to the present disclosure.
FIG. 25a and FIG. 25b illustrate examples of a variation of a port layout for 8-port APs and a port layout for an AP subset applicable to the present disclosure.
FIG. 26 illustrates an example of a procedure for reporting CSI for sub-configurations according to an embodiment of the present disclosure.
FIG. 27 illustrates an example of a procedure for receiving CSI for sub-configurations according to an embodiment of the present disclosure.
FIG. 28a and FIG. 28b illustrate examples of AP mapping of CSI-RS based on on/off per code domain multiplexing (CDM) group according to an embodiment of the present disclosure.
FIG. 29a and FIG. 29b illustrate examples of AP mapping of CSI-RS and a port layout accordingly based on frequency-domain and time-domain priority allocation according to an embodiment of the present disclosure.
FIG. 30a to FIG. 30c illustrate examples of results of re-indexing of APs according to an embodiment of the present disclosure.
FIG. 31 illustrates an example of a procedure for mapping APs based on an AP subset of a sub-configuration according to an embodiment of the present disclosure.
FIG. 32 illustrates an example of a procedure for transmitting CSI reporting based on sub-configurations according to an embodiment of the present disclosure.
FIG. 33 illustrates an example of a procedure for reporting non-PMI-based CSIs for sub-configurations according to an embodiment of the present disclosure.
FIG. 34 illustrates an example of a procedure for receiving non-PMI-based CSIs for sub-configurations according to an embodiment of the present disclosure.
FIG. 35 illustrates an example of a procedure for determining an AP set corresponding to each rank for non-PMI feedback based on an AP subset of a sub-configuration according to an embodiment of the present disclosure.
FIG. 36 illustrates another example of a procedure for determining an AP set corresponding to each rank for non-PMI feedback based on an AP subset of a sub-configuration according to an embodiment of the present disclosure.

### MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

### Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

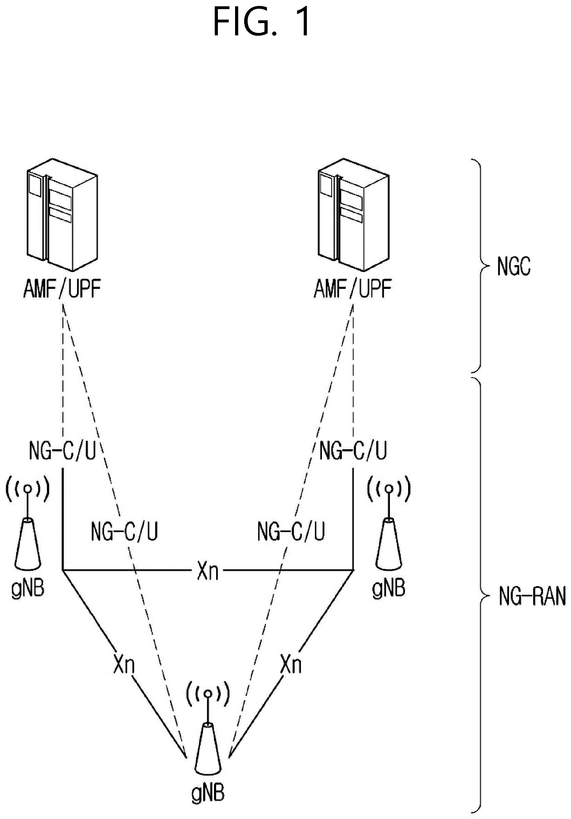

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

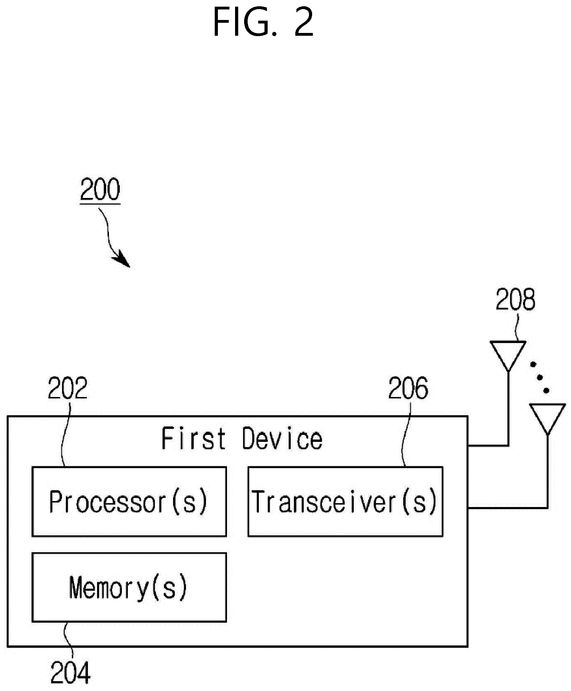

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

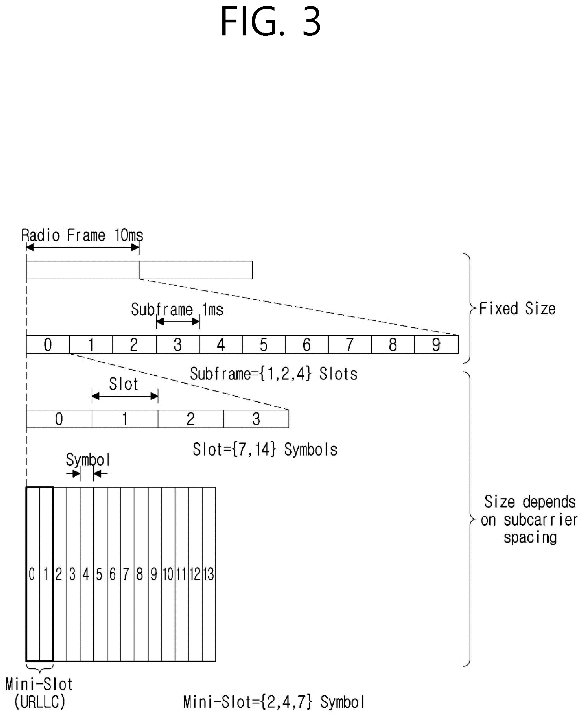

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or µ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2µ · 15[kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

**[Table 2]**

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of T_{c}=1/(Δf ₘₐₓ • N_{f}). Here, Δfₘₐₓ is 480·10³Hz and N_{f} is 4096. Downlink and uplink transmission is configured (organized) with a radio frame having a duration of T_{f}=1/(Δfₘₐₓ • N_{f}/100)T_{c}=10ms. Here, the radio frame is configured with 10 subframes having a duration of T_{sf}=(Δfₘₐₓ • N_{f}/1000)T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset} )T_{c} than a corresponding downlink frame in a corresponding terminal starts. For a subcarrier spacing configuration µ, slots are numbered in an increasing order of nₛ^{µ}∈ {0, ..., Nₛₗₒₜ^{subframe,µ}-1}in a subframe and are numbered in an increasing order of n_{s,f}^{µ}∈ {0,···, Nₛₗₒₜ^{subframe,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that not all OFDM symbols of a downlink slot or an uplink slot are available.

Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 3 is an example on µ=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail. First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

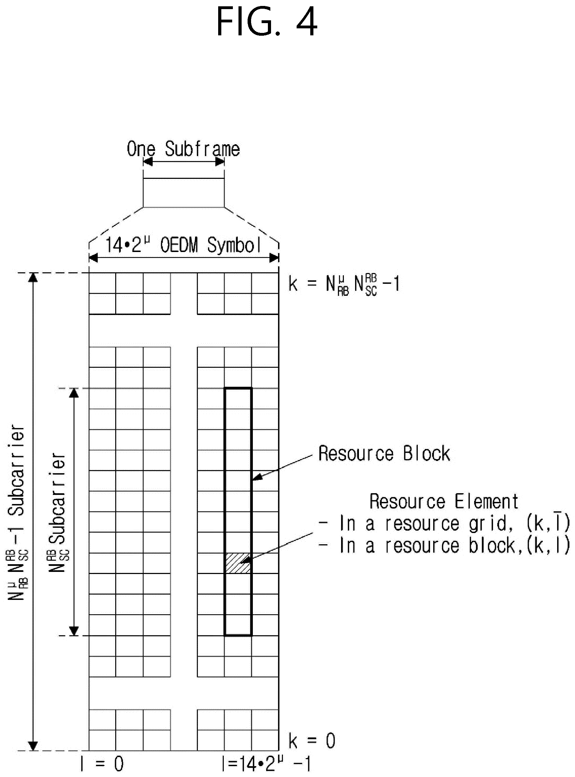

FIG. 4 exemplifies a resource grid in a wireless communication system to which the present disclosure may be applied.

Referring to FIG. 4, as an illustrative description, a resource grid is configured with N_{RB}^{µ}N_{SC}^{RB} subcarriers in a frequency domain, and one subframe is configured with 14·2µOFDM symbols, but the resource grid and the subframe are not limited thereto. In an NR system, a transmitted signal is described by one or more resource grids configured with 2^{µ}N_{symb}^{(µ)} OFDM symbols and N_{RB}^{µ}N_{SC}^{RB} subcarriers. Here, N_{RB}^{µ}≤N_{RB}^{max,u}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k, l'). Here, k=0, ..., N_{RB}^{µ}N_{SC}^{RB}-1 is an index in a frequency domain and l'=0, ..., 2^{µ}N_{symb}^{(µ)}-1 refers to a position of a symbol in a subframe. When referring to a resource element in a slot, an index pair (k, l) is used. Here, l=0, ..., 2^{µ}N_{symb}^{(µ)}-1. A resource element (k, l') for µ and an antenna port p corresponds to a complex value, a_{k,f}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.
- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k, 1) for a subcarrier spacing configuration µ in a frequency domain is given as in the following Equation 1.${{n}_{CRB}}^{μ} = k / {{N}_{sc}}^{RB}$

In Equation 1, k is defined relatively to point A so that k=0 corresponds to a subcarrier centering around point A. Physical resource blocks are numbered from 0 to N_{BWP,i}^{size,µ}-1 in a bandwidth part (BWP) and i is the number of a BWP. A relationship between a physical resource block n_{PRB} and a common resource block n_{CRB} in BWP i is given by the following Equation 2.${{n}_{CRB}}^{μ} = {{n}_{PRB}}^{μ} + {{N}_{BWP , i}}^{start , μ}$

N_{BWP,i}^{start,µ} is a common resource block that a BWP starts relatively to common resource block 0.

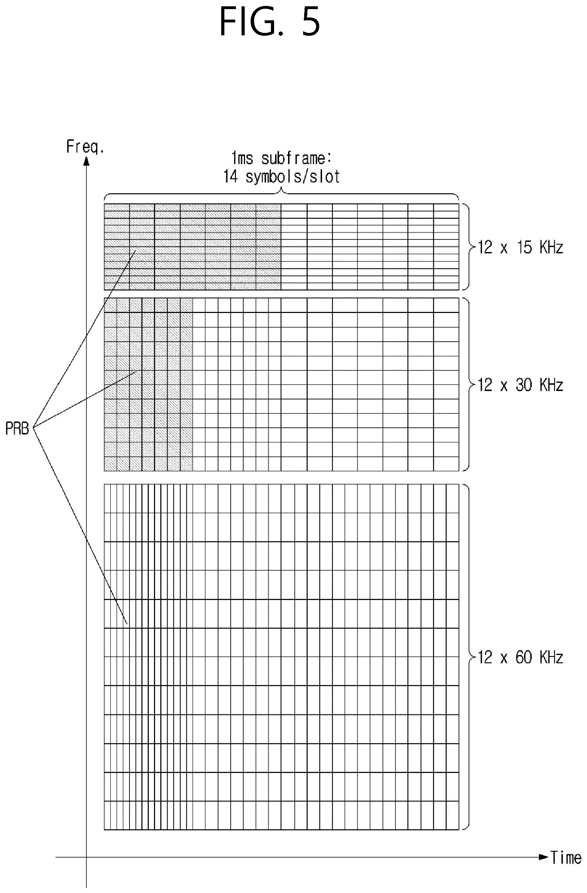

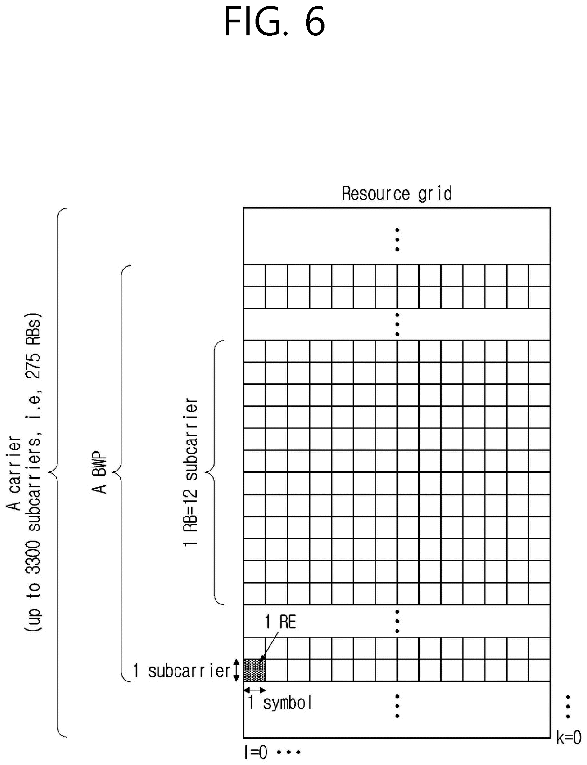

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

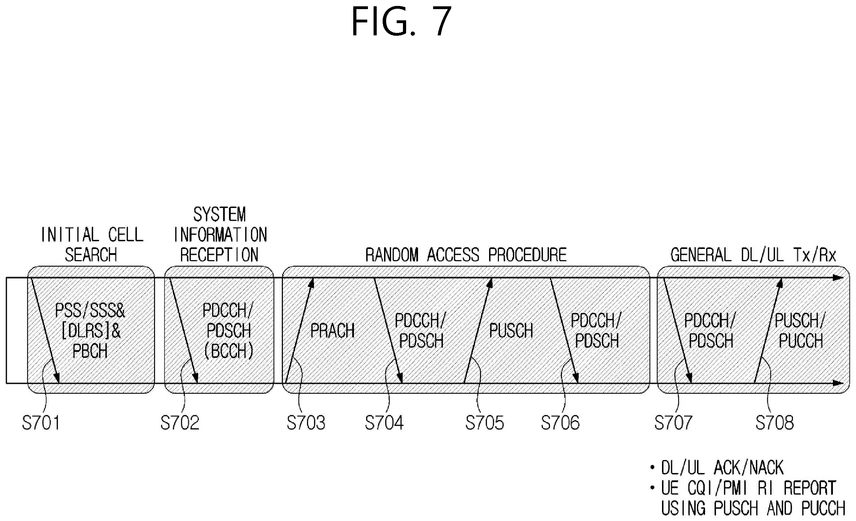

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

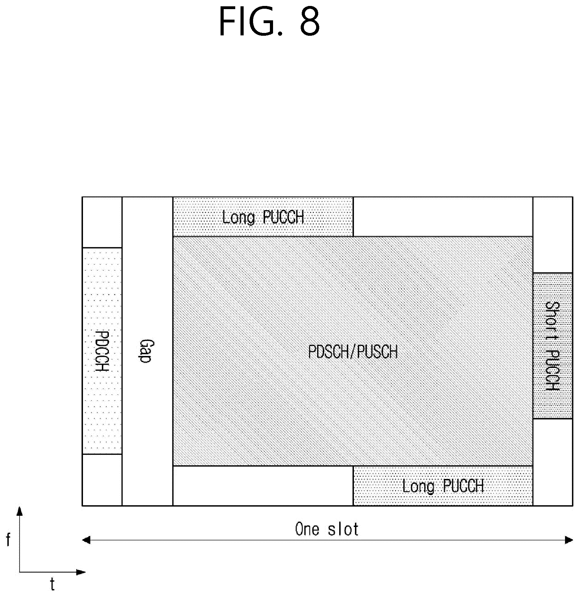

FIG. 8 is a diagram illustrating an example in which a physical channel is mapped in a slot to which various embodiments are applicable.

Referring to FIG. 8, a DL control channel, DL or UL data, UL control channel, etc. may all be included in one slot. For example, the first N symbols in a slot may be used to transmit a DL control channel (hereinafter, DL control region), and the last M symbols in a slot may be used to transmit a UL control channel (hereinafter, UL control region). N and M are each an integer greater than or equal to 0. A resource region (hereinafter, referred to as a data region) between the DL control region and the UL control region may be used for DL data transmission or for UL data transmission. A time gap for DL-to-UL or UL-to-DL switching may exist between the control region and the data region. The PDCCH may be transmitted in the DL control region, and the PDSCH may be transmitted in the DL data region. Some symbols at the time of switching from DL to UL in a slot may be used as a time gap.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 5 shows DCI formats transmitted over the PDCCH.

**[Table 5]**

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs. The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 6 shows the usage of the PDCCH and transport channels according to the type of RNTI. Here, the transport channel means a transport channel related to data carried by a PDSCH/PUSCH scheduled by the PDCCH.

**[Table 6]**

| RNTI | Usage | Transport Channel |
|---|---|---|
| P-RNTI | Paging and System Information change notification | PCH (Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS (Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS (Configured Scheduling)-RNTI | Configured scheduled unicast transmission (activation, reactivation and retransmission) | DL-SCH, UL-SCH |
| CS-RNTI | Configured scheduled unicast transmission(deactivation) | N/A |
| TPC (Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI (Slot Format Indication)-RNTI | Slot Format Indication on the given cell | N/A |
| SP (Semi-persistent)-CSI (Channel State | Activation of Semi-persistent CSI reporting on PUSCH | N/A |
| Information)-RNTI | | |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB. The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.
- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (=6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 7 shows PDCCH search spaces.

**[Table 7]**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS- | Group signaling |
| | | RNTI, C-RNTI, MCS-C-RNTI or CS-RNTI | |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets. - searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 8 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

**[Table 8]**

| PUCCH format | Length in OFDM symbols N_{symb}^{PUCCH} | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1 - 2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0) - Supportable UCI payload size: up to K bits (e.g., K=2)
   - Number of OFDM symbols included in one PUCCH: 1 to X symbols (e.g., X=2)
   - Transmission structure: only a UCI signal is configured with no DM-RS, and a UCI state is transmitted by selecting and transmitting one of a plurality of sequences.
(1) PUCCH Format 1 (PF1)
   - Supportable UCI payload size: up to K bits (e.g., K=2)
   - Number of OFDM symbols included in one PUCCH: Y to Z symbols (e.g., Y=4 and Z=14)
   - Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).
(2) PUCCH Format 2 (PF2)
   - Supportable UCI payload size: more than K bits (e.g., K=2)
   - Number of OFDM symbols included in one PUCCH: 1 to X symbols (e.g., X=2)
   - Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.
(3) PUCCH Format 3 (PF3)
   - Supportable UCI payload size: more than K bits (e.g., K=2)
   - Number of OFDM symbols included in one PUCCH: Y to Z symbols (e.g., Y=4 and Z=14)
   - Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.
(4) PUCCH Format 4 (PF4 or F4)
   - Supportable UCI payload size: more than K bits (e.g., K=2)
   - Number of OFDM symbols included in one PUCCH: Y to Z symbols (e.g., Y=4 and Z=14)
   - Transmission structure: UCI and a DMRS are configured/mapped in/to different symbols based on TDM. The DFT is applied to encoded UCI bits with no multiplexing between UEs.

### Beam Management (BM)

The BM procedure is an L1 (layer 1) / L2 (layer 2) procedure for obtaining and maintaining a set of base station (e.g., gNB, TRP, etc.) and/or terminal (e.g., UE) beams that may be used for downlink (DL) and uplink (UL) transmission/reception, and may include the following procedures and terms.
- Beam measurement: The operation in which a base station or a UE measures characteristics of a received beam forming signal.
- Beam determination: The operation in which a base station or a UE selects its transmit beam (Tx beam) / receive beam (Rx beam).
- Beam sweeping: The operation in which a transmit and/or receive beam is used to cover a spatial domain for a certain time interval in a predetermined manner.
- Beam report: The operation in which a UE reports information of a beamformed signal based on beam measurement.

The BM procedure may be classified into (1) a DL BM procedure using a synchronization signal (SS) / physical broadcast channel (PBCH) block or a CSI-RS, and (2) a UL BM procedure using a sounding reference signal (SRS).

In addition, each BM procedure may include Tx beam sweeping for determining a Tx beam and Rx beam sweeping for determining an Rx beam.

### <DL BM>

The DL BM procedure may include (1) transmission of beamformed DL reference signals (RSs) (e.g., CSI-RS or SS block (SSB)) of a base station, and (2) beam reporting of a UE.

Here, the beam reporting may include a preferred DL RS identifier (ID)(s) and a corresponding L1-reference signal received power (L1-RSRP).

The DL RS ID may be an SSB resource indicator (SSBRI) or a CSI-RS resource indicator (CRI).

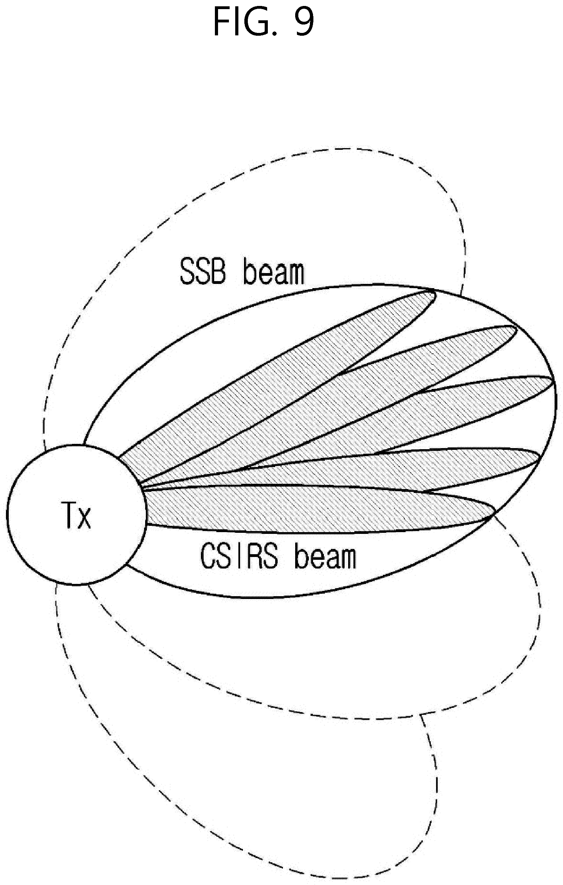

As shown in FIG. 9, an SSB beam and a CSI-RS beam may be used for beam measurement. The measurement metric is L1-RSRP per resource/block. The SSB may be used for coarse beam measurement, and a CSI-RS may be used for fine beam measurement. The SSB may be used for both Tx beam sweeping and Rx beam sweeping.

The Rx beam sweeping using an SSB may be performed across a plurality of SSB bursts while the UE changes an Rx beam for the same SSBRI. Here, one SS burst includes one or more SSBs, and one SS burst set includes one or more SS bursts.

### <DL BM using SSB>

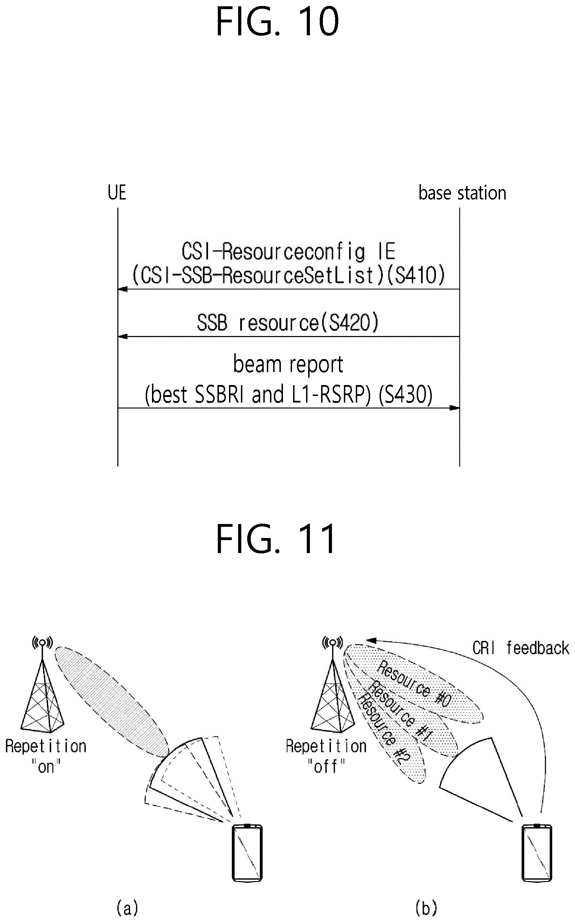

FIG. 10 is a flowchart illustrating an example of the DL BM procedure using SSB.

Configuration of a beam report using an SSB is performed upon
- The UE receives, from the base station, CSI-ResourceConfig IE including CSI-SSB-ResourceSetList which includes SSB resources used for BM (S410).

Table 9 shows an example of CSI-ResourceConfig IE, and like CSI-ResourceConfig IE in Table 9, BM configuration using an SSB is not defined additionally, and the SSB is set as a CSI-RS resource.

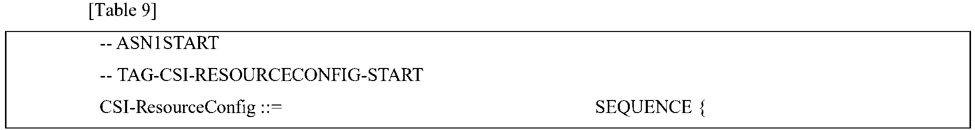

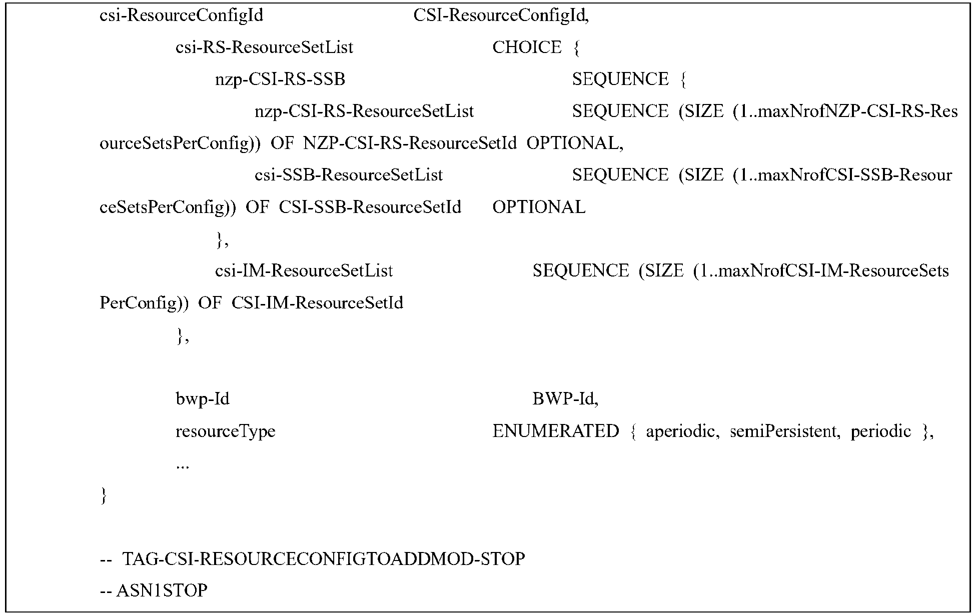

In Table 9, the parameter csi-SSB-ResourceSetList indicates a list of SSB resources used for beam management and reports in a single resource set. Herein, the SSB resource set may be configured as {SSBx1, SSBx2, SSBx3, SSBx4, ...}. An SSB index may be defined from 0 to 63. - The UE receives the SSB resources from the base station based on the CSI-SSB-ResourceSetList (S420).
- When CSI-RS reportConfig for SSBRI and L1-RSRP reporting is configured, the UE (beam) reports the best SSBRI and L1-RSRP corresponding thereto to the base station (S430).

That is, when reportQuantity in the CSI-RS reportConfig IE is configured as ssb-Index-RSRP, the UE reports the best SSBRI and L1-RSRP corresponding thereto to the base station.

Then, when a CSI-RS resource is configured in an OFDM symbol(s) identical to an SSB (SS/PBCH Block) and QCL-TypeD is applicable, the UE may assume that the CSI-RS and the SSB are quasi co-located with each other in terms of "QCL-TypeD".

Herein, the QCL Type D may mean that antenna ports are QCL with each other in terms of the spatial Rx parameter. When the UE receives a plurality of DL antenna ports which are in a QCL Type D relationship with each other, it is possible to apply the same Rx beam. In addition, the UE does not expect that a CSI-RS is configured in an RE overlapping with a RE of the SSB.

### <DL BM using CSI-RS>

Regarding the use of a CSI-RS, i) when a repetition parameter is configured for a specific CSI-RS resource set and TRS_info is not configured, the CSI-RS is used for beam management. ii) when the repetition parameter is not configured and TRS_info is configured, the CSI-RS is used for a tracking reference signal (TRS). iii) when the repetition parameter is not configured and TRS_info is not configured, the CSI-RS is used for CSI acquisition.

This repetition parameter may be set only for CSI-RS resource sets that are associated with CSI-ReportConfig having a report of L1 RSRP or 'No Report or None'.

If the UE receives CSI-ReportConfig in which reportQuantity is set to 'cri-RSRP' or 'none' and, CSI-ResourceConfig for channel measurement (higher layer parameter 'resourcesForChannelMeasurement') does not include higher layer parameter 'trs-Info' but includes NZP-CSI-RS-ResourceSet which is set to higher layer parameter 'repetition' (repetition=ON), the UE may be composed of a port of the same number (1-port or 2-port), which includes higher layer parameter 'nrofPorts' for all CSI-RS resources in the NZP-CSI-RS-ResourceSet.

When (higher layer parameter) repetition is set to "ON," it is related to an Rx beam sweeping procedure of a UE. In this case, when the UE is configured with an NZP-CSI-RS-ResourceSet, the UE may assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through the same Tx beam. Here, at least one CSI-RS resource in the NZP-CSI-RS-ResourceSet may be transmitted in different OFDM symbols. In addition, the UE is not expected to receive different periodicities in periodicityAndOffset among all CSI-RS resources in the NZP-CSI-RS-ResourceSet.

In contrast, when repetition is set to "OFF," it is related to a Tx beam sweeping procedure of a base station. In this case, when repetition is set to "OFF," the UE does not assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through different Tx beams.

FIG. 11 is a diagram illustrating an example of a DL BM procedure using a CSI-RS. FIG. 11(a) shows an Rx beam determination (or refinement) procedure of a UE, and FIG. 11(b) shows a Tx beam determination procedure of a base station. In addition, FIG. 11(a) shows the case where the parameter repetition is set to "ON", and FIG. 11(b) shows the case where the parameter "repetition" is set as "OFF".

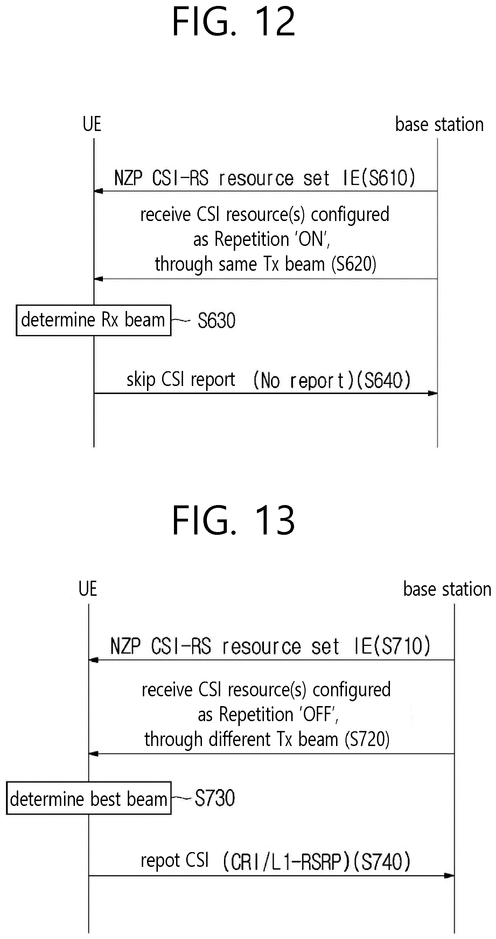

With reference to FIG. 11(a) and FIG. 12, the Rx beam determination procedure of the UE will be described.

FIG. 12 is a flowchart illustrating an example of the Rx beam determination procedure of the UE.
- The UE receives, from the base station, NZP CSI-RS resource set IE including higher layer parameter repetition through RRC signaling (S610). The parameter repetition is set to "ON".
- The UE repeatedly receives a resource(s) in a CSI-RS resource set, in which repetition is set to "ON", from a different OFDM symbol through the same Tx beam (or a DL spatial domain transmission filter) (S620).
- In doing so, the UE determines its own Rx beam (S630).
- The UE may omit a CSI report or may transmit a CSI report including CRI/L1-RSRP to the base station (S640).

That is, when the repetition is set to "ON", the UE may omit a CSI report or may report ID information (CRI) of a beam pair-related preferred beam and a quality value thereof (L1-RSRP).

With reference to FIG. 11(b) and FIG. 13, the Tx beam determination procedure of the base station will be described.

FIG. 13 is a flowchart illustrating an example of the Tx beam determination procedure of the base station.
- the UE receives, from the base station, NZP CSI-RS resource set IE including higher layer parameter repetition through RRC signaling (S710). Here, the repetition parameter is set to "OFF" and relates to a Tx beam sweeping procedure of the base station.
- the UE receives resources in a CSI-RS resource set, in which repetition is set to "OFF", via a different Tx beam (a DL spatial domain transmission filter) (S720).
- the UE selects (or determines) the best beam (S730), and
- the UE reports ID and quality information (e.g., L1-RSRP) of the selected beam to the base station (S740). In this case, reportQuantity of CSI report Config may be configured as "CRI+L1-RSRP".

That is, when the CSI-RS is transmitted for BM, the UE reports CSI and L1-RSRP corresponding thereto to the base station.

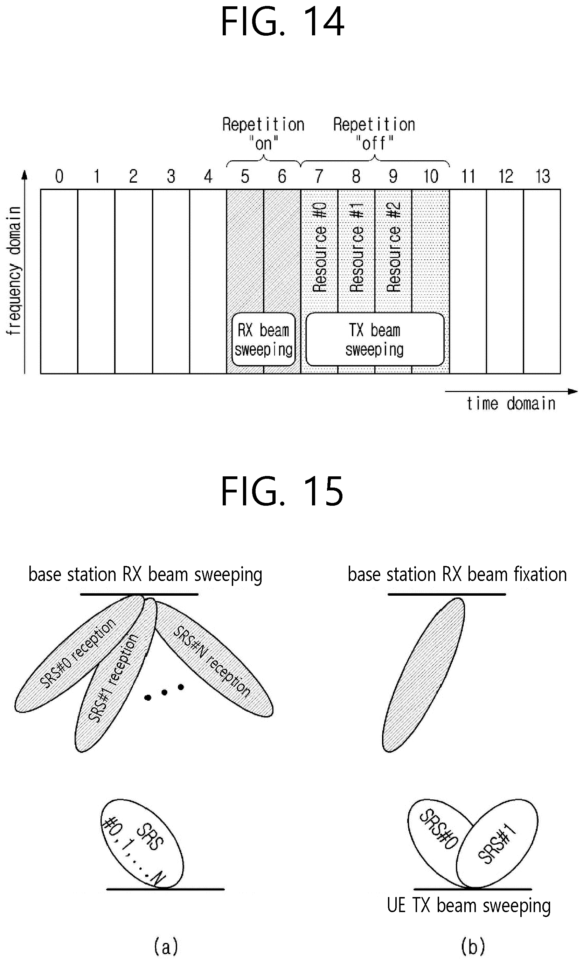

FIG. 14 is a diagram illustrating an example of resource allocation in time and frequency domains, which is related to operation of FIG. 11.

That is, when repetition is set to "ON" for a CSI-RS resource set, a plurality of CSI-RS resources is repeatedly used via the same Tx beam, and, when repetition is set to "OFF" for the CSI-RS resource set, different CSI-RS resources are transmitted via different Tx beams.

### <DL BM-Related Beam Indication>

A UE may receive RRC configuration of a list of a maximum M number of candidate Transmission Configuration Indication (TCI) states at least for the purpose of Quasi Co-location (CQL) indication. Herein, M may be 64.

Each TCI state may be configured as one RS set. ID of each DL RS for a spatial QCL at least in an RS set (QCL Type D) may refer to at least one of DL RS types such as an SSB, a P-CSI RS, a SP-CSI RS, or a A-CSI RS.

Initialization/update of ID of DL RS(s) in an RS set used at least for a spatial QCL purpose may be performed at least via explicit signaling.

Table 10 shows an example of TCI-State IE. The TCI-State IE is associated with a quasi co-location (QCL) type corresponding to one or two DL reference signals (RSs).

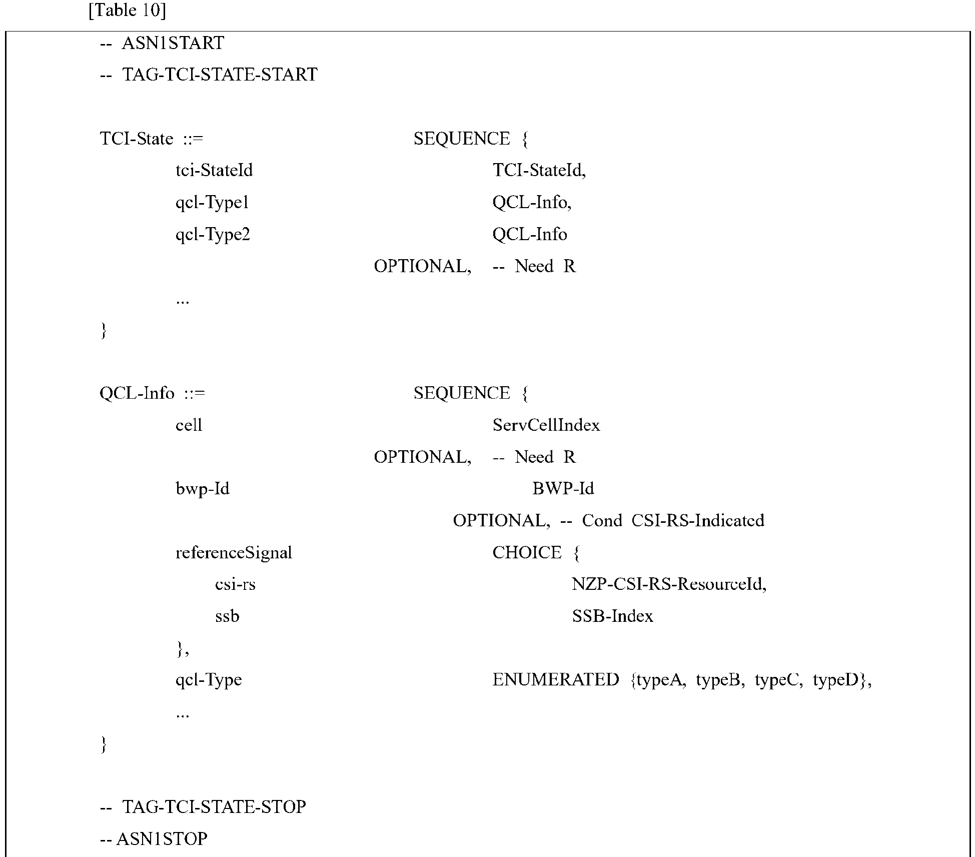

In Table 10, the parameter "bwp-id" indicates a BL BWP where a RS is located, and the parameter "cell" indicates a carrier where an RS is located, and the parameter "reference signal" indicates a reference antenna port(s) which is a quasi colocation source for a corresponding target antenna port(s). The target antenna port(s) may be an example of a CSI-RS, a PDCCH DMRS, or a PDSCH DMRS. For example, in order to indicate QCL reference information for a NZP CSI-RS, TCI state ID may be indicated in each CORESET configuration. In another example, in order to indicate QCL reference information for a PDSCH DMRS antenna port(s), DCI state ID may be indicated via DCI.

### <QCL (Quasi-Co Location)>

An antenna port is defined such that a channel over which a symbol on one antenna port is carried can be inferred from another channel over which a symbol on another antenna port is carried. When properties of the channel over which a symbol on one antenna port is carried can be inferred from a channel over which a symbol on another antenna port is carried, the two antenna ports may be in a quasi co-located or quasi co-location (QC/QCL) relationship.

Herein, the channel properties may include at least one of delay spread, Doppler spread, Doppler shift, average gain, and average delay. Herein, the spatial Rx parameter indicates a spatial (reception) channel property parameter such as an angle of arrival.

In order to decode a PDSCH according to a PDCCH which is detected and has DCI intended for a corresponding UE and a given serving cell, a list of M number of TCI-state configurations in higher layer parameter PDSCH-Config may be set. The number M depends on UE capability.

Each TCI-State includes a parameter for setting a quasi co-location relationship between one or two DL reference signals and a DMRS port of the PDSCH.

The quasi co-location relationship may be configured as higher layer parameter qcl-Type 1 for the first DL RS and qcl-Type 2 (when set) for the second DL RS. If there are the two DL RSs, a QCL type is not the same, regardless of whether the two DL RSs have the same reference or different references.

A quasi co-location type corresponding to each DL RS is given by higher layer parameter "qcl-Type" in QCL-Info, and may take one of the following forms.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, in the case where a target antenna port is a specific NZP CSI-RS, corresponding NZP CSI-RS antenna ports may be indicated/configured to be QCL with a specific TRS in terms of QCL-Type A or with a specific SSB in terms of QCL-Type D. The UE indicated/configured as above may receive a corresponding NZP CSI-RS using a measured Doppler and a delay value, and may apply a Rx beam, which is used in receiving the QCL-TypeD SSB, to receive the corresponding NZP CSI-RS.

The UE receives an activation command used to map eight TCI states to codepoints of a DCI field "Transmission Configuration Indication".

### <UL BM>

In the UL BM, beam reciprocity (or beam correspondence) between a Tx beam and an Rx beam may or may not be established according to terminal implementation. If reciprocity between a Tx beam and an Rx beam is established in both a base station and a terminal, a UL beam pair may be aligned through a DL beam pair. However, when reciprocity between a Tx beam and an Rx beam is not established in either of a base station and a terminal, a UL beam pair determination process is required separately from a DL beam pair determination.

In addition, even when both the base station and the UE maintain beam correspondence, the base station may use a UL BM procedure for DL Tx beam determination without the UE requesting reporting of a preferred beam.

UL BM may be performed through beamformed UL SRS transmission, and whether UL BM of an SRS resource set is applied is configured by (higher layer parameter) usage. When usage is configured to 'BeamManagement (BM)', only one SRS resource may be transmitted in each of a plurality of SRS resource sets at a given time instant.

A terminal may be configured with one or more Sounding Reference Symbol (SRS) resource sets configured by the (higher layer parameter) SRS-ResourceSet (through higher layer signaling, RRC signaling, etc.). For each SRS resource set, a UE may be configured with K≥1 SRS resources (higher layer parameter SRS-resource). Here, K is a natural number, and a maximum value of K is indicated by SRS_capability.

Like DL BM, a UL BM procedure may also be divided into Tx beam sweeping of a terminal and Rx beam sweeping of a base station.

FIG. 15 is a diagram illustrating an example of the UL BM procedure using an SRS. FIG. 15(a) shows an RX beam determination procedure by a base station, and FIG. 15(b) shows a Tx beam determination procedure by a UE.

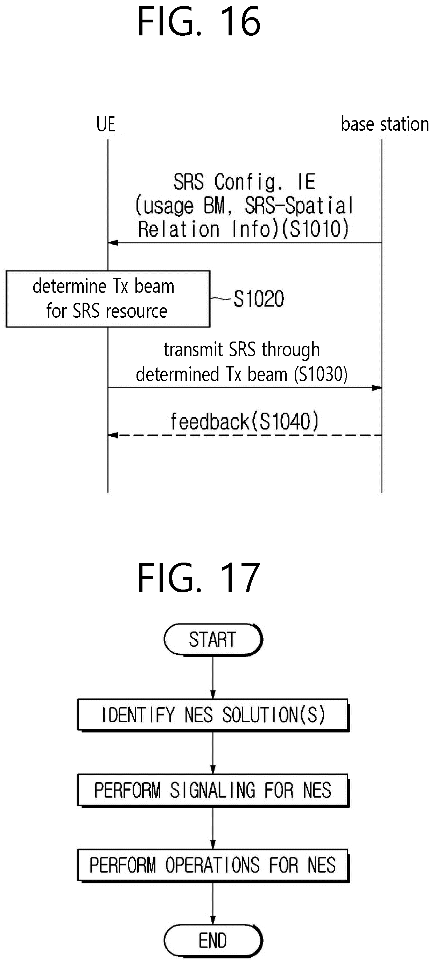

FIG. 16 is a flowchart illustrating a UL BM procedure using an SRS.
- A terminal receives RRC signaling (e.g., SRS-Config 1E) including a usage parameter (higher layer parameter) configured with 'beam management' from a base station (S1010).

Table 11 shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

A network may trigger transmission of an SRS resource set using configured aperiodicSRS-ResourceTrigger (L1 DCI).

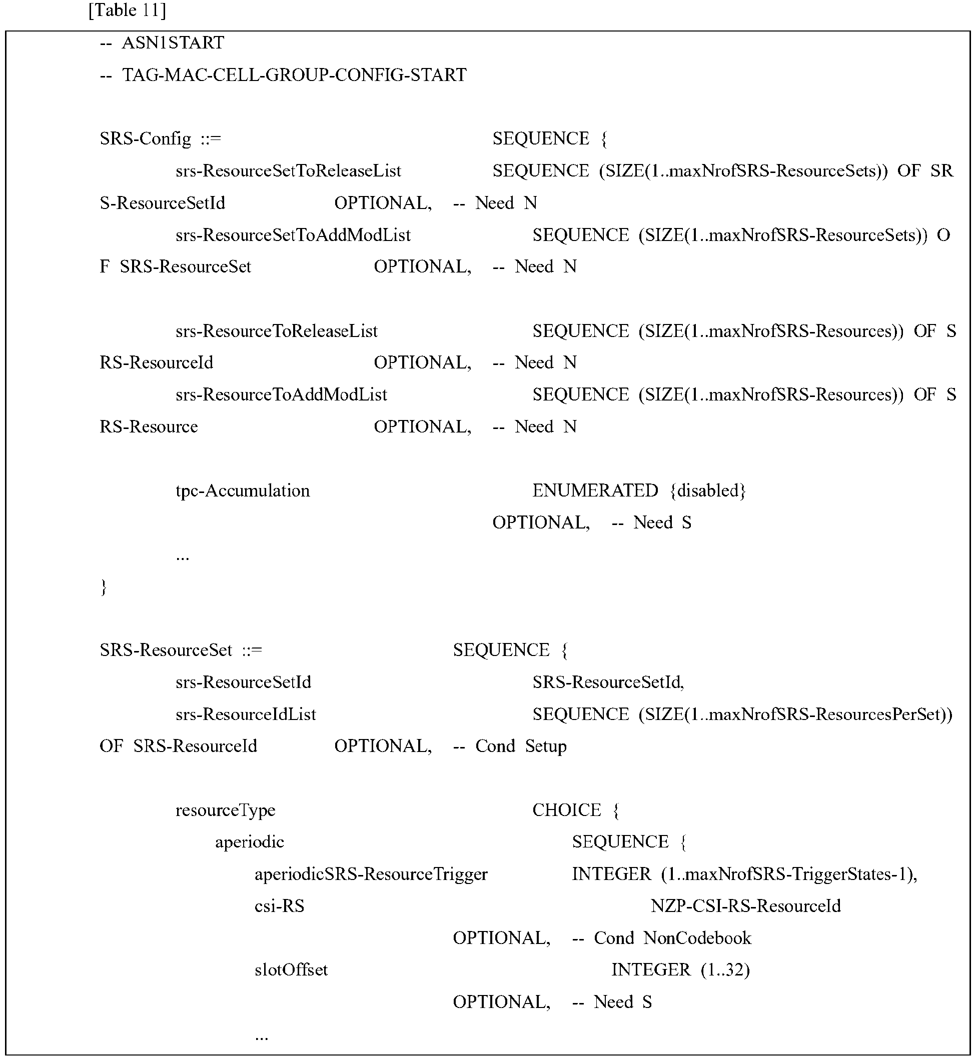

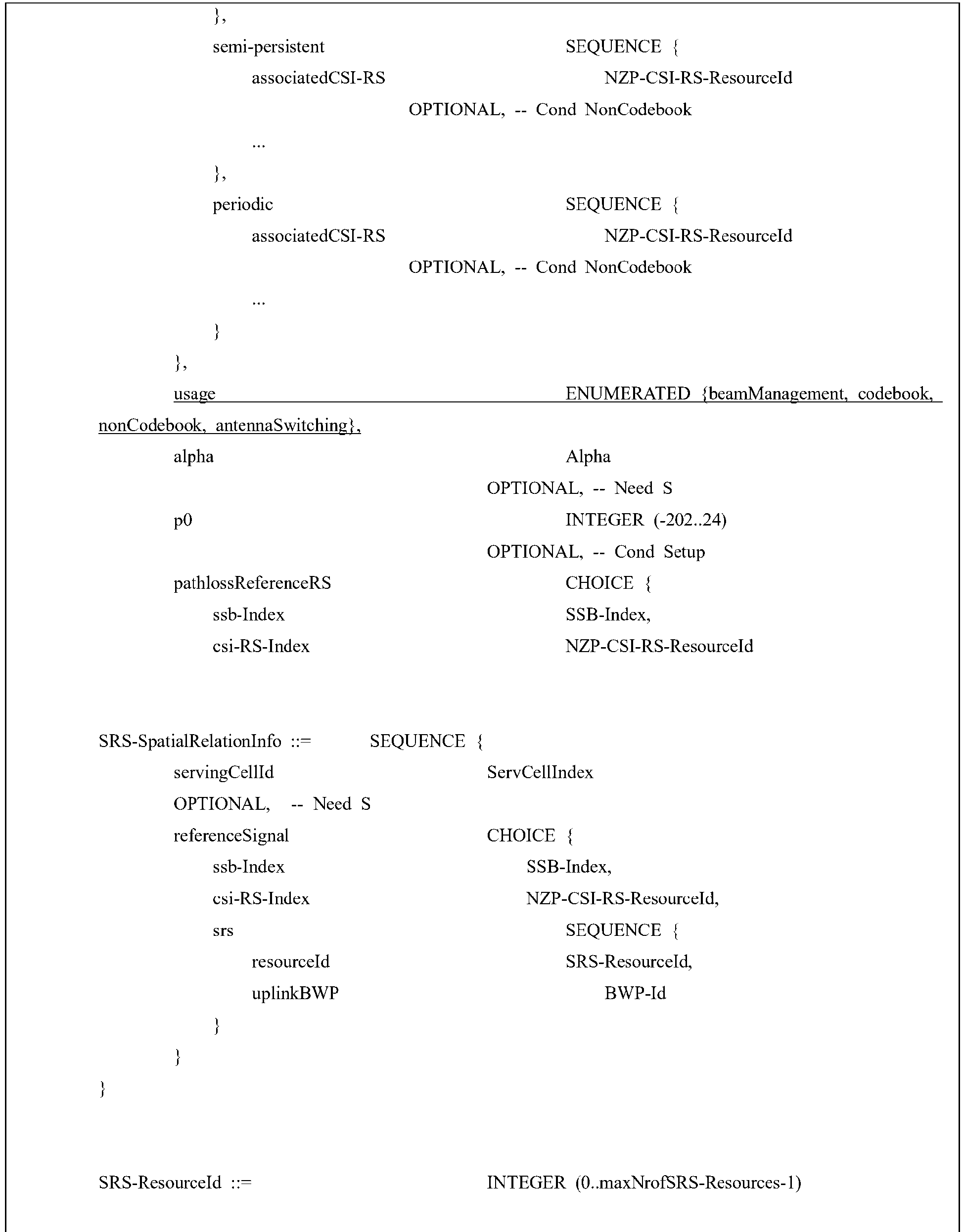

In Table 11, usage represents a higher layer parameter indicating whether an SRS resource set is used for beam management, codebook-based or non-codebook-based transmission. The usage parameter corresponds to an L1 parameter 'SRS-SetUse'. 'spatialRelationInfo' is a parameter indicating a configuration of a spatial relation between a reference RS and a target SRS. Here, a reference RS may be an SSB, a CSI-RS, or an SRS corresponding to the L1 parameter 'SRS-SpatialRelationInfo'. The usage configured for each SRS resource set. - the terminal determines a Tx beam for an SRS resource to be transmitted based on the SRS-SpatialRelation Info included in the SRS-Config IE (S1020). Here, SRS-SpatialRelation Info is configured for each SRS resource, and indicates whether to apply the same beam as a beam used in an SSB, a CSI-RS, or an SRS for each SRS resource. In addition, SRS-SpatialRelationInfo may or may not be configured in each SRS resource.
- If the SRS-SpatialRelationInfo is configured in an SRS resource, the same beam as a beam used in an SSB, a CSI-RS or an SRS is applied and transmitted. However, if the SRS-SpatialRelationInfo is not configured in an SRS resource, the terminal arbitrarily determines a Tx beam and transmits an SRS through the determined Tx beam (S1030).

More specifically, for P-SRS in which 'SRS-ResourceConfigType' is configured to 'periodic':
i) When SRS-SpatialRelationInfo is configured with 'SSB/PBCH', a UE transmits a corresponding SRS resource by applying the same spatial domain transmission filter (or generated from a corresponding filter) as a spatial domain reception (Rx) filter used for reception of an SSB/PBCH; or
ii) When SRS-SpatialRelationInfo is configured with 'CSI-RS', a UE transmits an SRS resource by applying the same spatial domain transmission filter used for reception of a periodic CSI-RS or an SP (semi-persistent) CSI-RS; or
iii) When SRS-SpatialRelationInfo is configured with 'SRS', a UE transmits a corresponding SRS resource by applying the same spatial domain transmission filter used for transmission of a periodic SRS.

Similar to the above, even when 'SRS-ResourceConfigType' is configured with 'SP (semi-persistent)-SRS' or 'AP (aperiodic)-SRS', beam determination and transmission operation may be applied.
- Additionally, a terminal may or may not receive feedback on an SRS from a base station as in the following three cases (S1040).
   i) When Spatial Relation Info is configured for all SRS resources in an SRS resource set, a terminal transmits an SRS in a beam indicated by a base station. For example, when Spatial Relation Info all indicate the same an SSB, a CRI, or an SRI, a terminal repeatedly transmits an SRS in the same beam. This case corresponds to FIG. G(a), for the purpose of a base station selecting an Rx beam.
   ii) Spatial Relation Info may not be configured for all SRS resources in an SRS resource set. In this case, a terminal may freely transmit while changing an SRS beam. That is, this case corresponds to FIG. G(b), for the purpose of a terminal sweeping a Tx beam.
   iii) Spatial Relation Info may be configured only for some SRS resources in an SRS resource set. In this case, for the configured SRS resource, an SRS is transmitted with the indicated beam, and for the SRS resource for which Spatial Relation Info is not configured, a terminal may arbitrarily apply a Tx beam and transmit it.

### Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

**[Table 12]**

| | |
|---|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] | |
| 2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3] | |
| | • Note: No change for SSB transmission due to cell DTX/DRX. |
| | • Note: The impact to IDLE/INACTIVE UEs due to the above enhancement should be avoided. |
| 3. Specify the following techniques in spatial and power domains | |
| | • Specify necessary enhancements on CSI and beam management related procedures including measurement and report, and signaling to enable efficient adaptation of spatial elements (e.g. antenna ports, active transceiver chains) [RAN1, RAN2] |
| | • Specify necessary enhancements on CSI related procedures including measurement and report, and signaling to enable efficient adaptation of power offset values between PDSCH and CSI-RS [RAN1, RAN2] |
| | • Note: Above objectives are only for UE specific channels/signals |
| | • Note: Legacy UE CSI/CSI-RS capabilities applies when considering total number of CSI reports and requirements |
| 4. Specify mechanism(s) to prevent legacy UEs camping on cells adopting the Rel-18 NES techniques, if necessary [RAN2] | |
| 5. Specify CHO procedure enhancement(s) in case source/target cell is in NES mode [RAN2] | |
| 6. Specify inter-node beam activation and enhancements on restricting paging in a limited area [RAN3]. | |
| 7. Specify the corresponding RRM/RF core requirements, if necessary, for the above features [RAN4] | |

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain. FIG. 17 illustrates an example of an operation procedure of a base station supporting an NES technology. Referring to FIG. 17, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 17, the NES technology may be performed. Examples of NES solutions that may be performed through a procedure such as that of FIG. 17 are as follows.
- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

### CSI Measurement and Reporting

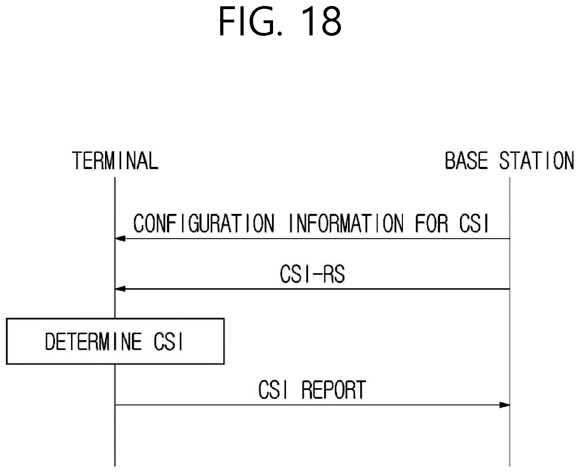

FIG. 18 illustrates an example of a procedure for CSI measurement and reporting.

Referring to FIG. 18, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through a MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

### Specific embodiments of the present disclosure

The present disclosure relates to a technology for reporting CSI based on sub-configurations of CSI reporting in a wireless communication system. In particular, the present disclosure relates to a technology for transmitting CSIs, that is, CSI sub-reportings, for a plurality of sub-configurations considering overhead, and intends to propose various embodiments for transmitting CSIs for the sub-configurations.

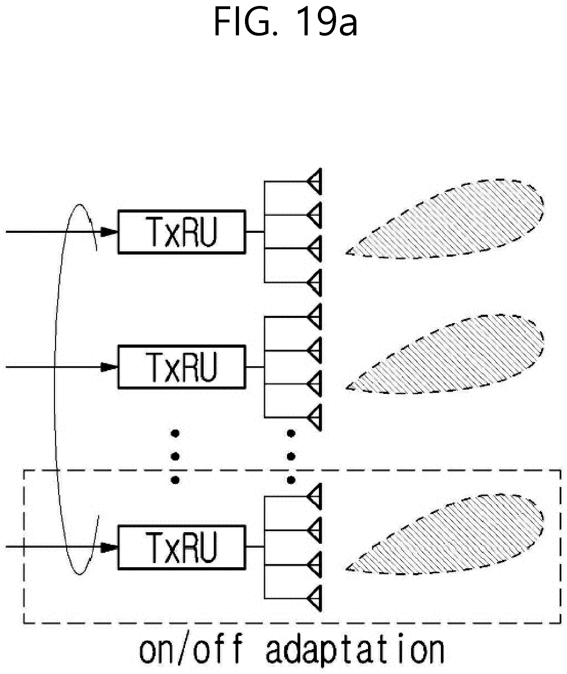

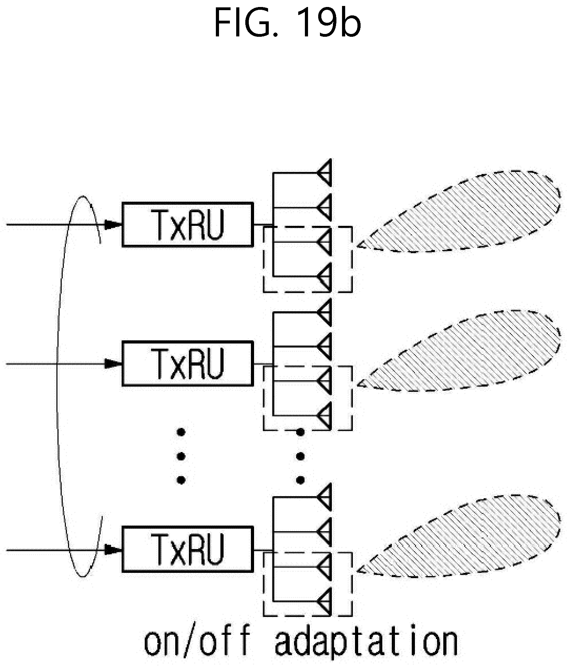

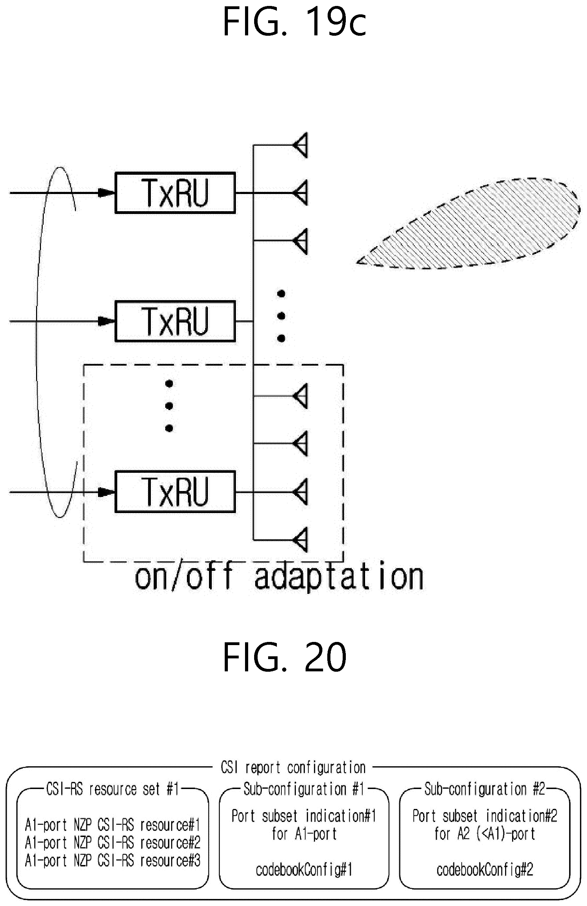

The base station may operate technologies for NES purposes such as controlling the on/off of the UE over a certain duration on a time axis, controlling transmission/reception resources for UE-common or UE-specific signals/channels, changing the amount of resources in a frequency axis, controlling transmission power, or turning on/off antenna ports, TRPs, etc. in a spatial domain. In the present disclosure, the listed technologies are referred to as 'NES technology' or 'NES_tech', and a state in which at least one of the NES_techs is applied is referred to as 'NES mode' or 'NES state'. For example, examples of state control of antenna elements according to the NES mode are as shown in FIG. 19a to FIG. 19c. Referring to FIG. 19a to FIG. 19c, it is possible to save energy by adaptively turning on/off some antenna elements among a plurality of antenna elements connected to a plurality of transmit radio units (TxRUs). The base station may inform the UE which NES_tech(s) are applied for each NES_tech or NES_tech group [Approach 1], or may pre-configure the NES_tech or NES_tech group(s) corresponding to each code-point of a specific indicator [Approach 2]. Here, the specific indicator may be indicated through DCI or MAC CE, or may be configured through higher layer signaling.

In the case of Approach 1, when at least one NES_tech is applied to the UE, the state may be defined as an NES mode or NES state, and furthermore, may be treated as a different NES mode or a different NES state depending on which NES_tech is applied. The NES mode or NES state may be used as a concept indicating whether at least one NES technology is applied, or, in addition thereto, further indicating which NES technology(ies) is applied. When the NES mode or NES state further indicates which NES technology(ies) is applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the corresponding indicator, the state may be defined as an NES mode or NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code-point other than '00' is indicated through the corresponding indicator, the state may be defined as an NES mode or NES state. Furthermore, the UE may determine NES state #1 when '01' is detected, NES state #2 when '10' is detected, and NES state #3 when '11' is detected. Accordingly, whether the state is an NES state and/or which NES state it is may be distinguished for each code-point.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

One CSI report configuration (e.g., CSI-ReportConfig) may include a plurality of sub-configurations based on different numbers of antenna ports or different values of power offsets. Specifically, for one CSI report configuration, CSI-RS resources or CSI-RS resource sets having different numbers of APs may be associated, or a plurality of power offsets may be associated. Here, the power offset includes a powerControlOffset parameter, which is a power offset value between PDSCH and CSI-RS, or a powerControlOffsetSS parameter, which is a power offset value between SSS and CSI-RS. In this case, at least one of the following CSI frameworks may be introduced.
- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.
- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.
- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.
- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.
- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.
- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration. When applying Framework #3, when CSI-RS index #n1 belonging to a resource set is configured with the number of A1 APs (or a P1/P2 power value), sub-configuration index #s 1 is associated with the number of A1 APs (or the P1 power value), and sub-configuration index #s2 is associated with the number of A2 APs less than the number of A1 APs (or the P2 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value, thereby allowing power domain adaptation patterns to be configured differently for each sub-configuration.

By using one of the options #1/2/3 described above, the UE may feedback to the base station a CSI reporting including CSI(s) corresponding to N sub-configurations, where N is between 1 and L among the L sub-configurations.

The present disclosure proposes a scheme of configuring some or all CSI-RS resources within one CSI-RS resource set with a plurality of numbers of APs in CSI Framework #3. Through the proposed technique, when CSI-RS resources corresponding to each sub-configuration and corresponding numbers of APs are determined, if CSI reporting including the sub-configuration is configured/indicated, CSI may be generated by using the CSI-RS resources and the corresponding numbers of APs included in the sub-configuration.

In configuration for CSI reporting (e.g., CSI-ReportConfig), each sub-configuration may be associated according to methods such as Alt#A-1/B-1/C-1 described below.
* Alt#A-1) Information on whether the numbers of APs configured for each CSI-RS resource are whole or subset, and information on which AP indexes configure the subset in the case of a subset (hereinafter, 'port subset indication'), may be included. For example, for a CSI-ReportConfig configuration associated with a resource set consisting of 32-port CSI-RS resources, sub-configuration #1 is associated with all 32 ports, and sub-configuration #2 may be associated with only 16 ports consisting of even indexes. Such a port subset indication may utilize signaling methods (e.g., bitmap) described below in [Embodiment #2].
*Alt#B-1) Without a separate port subset indication, if another parameter (e.g., codebookConfig) in each sub-configuration is configured with a number of APs, the number of APs configured in the parameter is associated, and in this case, AP indexes configuring the number of APs may be predefined.
* Alt#C-1) In a hybrid method of Alt#A-1 and Alt#B-1, the number of APs is implicitly configured through the Alt#B-1 method, and AP indexes configuring the APs may be separately configured within each sub-configuration. For example, K entries for a method of constituting 16 ports among 32-port resources may be preconfigured. That is, entry #1 may consist of 16 ports indexed by odd numbers, entry #2 may consist of 16 ports indexed by even numbers, entry #3 may consist of upper 16 ports, and entry #4 may consist of lower 16 ports. Which entry among them is used to constitute ports may be configured through a separate parameter within the sub-configuration. As shown in FIG. 20, within one resource set, only CSI-RS resources of the number of A1 APs are configured, and through a port subset indication, sub-configuration #1 may be associated with all of the number of A1 APs, and sub-configuration #2 may be associated with the number of A2 APs less than A1.

As in Framework #3 described above, when there is one CSI-RS resource set associated with one CMR or one IMR within one CSI reporting related configuration (e.g., CSI-ReportConfig), some or all CSI-RS resources in the CSI-RS resource set may be configured/indicated with a plurality of AP number values. For example, CSI-RS resource #1 belonging to a CSI-RS resource set is configured with up to 32 APs, and CSI reporting using 16 and/or 8 AP(s) among them may be configured/indicated. In this case, the present disclosure intends to propose a specific AP mapping scheme and a codebook construction scheme for CSI reporting corresponding to the CSI reporting related configuration.

### AP mapping of CSI-RS

The following [Table 13] is the structure of the configuration information for CSI-RS resource mapping defined in the TS 38.331 standard document.

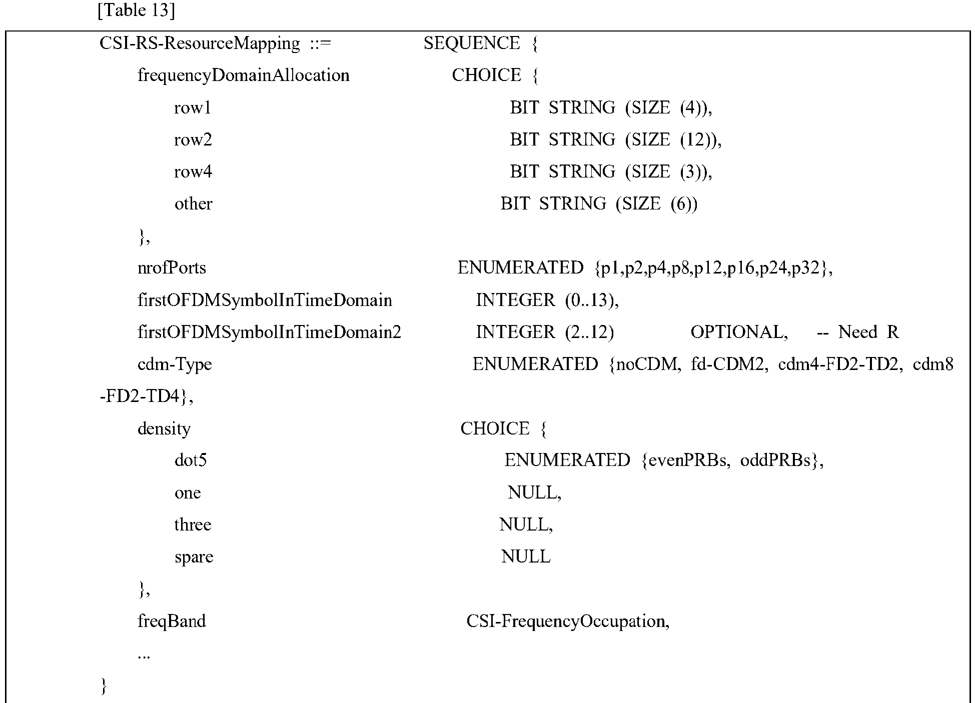

The following [Table 14] is a table related to the location of CSI-RS within a slot defined in the TS 38.211 standard document.

**[Table 14]**

| Row | Ports X | Density ρ | cdm-Type | (*k̅*, *l̅*) | CDM group index j | k' | l' |
|---|---|---|---|---|---|---|---|
| 1 | 1 | 3 | noCDM | (k₀,l₀),(k₀+4,l₀),(k₀+8,l₀) | 0,0,0 | 0 | 0 |
| 2 | 1 | 1, 0.5 | noCDM | (k₀,l₀) | 0 | 0 | 0 |
| 3 | 2 | 1, 0.5 | fd-CDM2 | (k₀,l₀) | 0 | 0, 1 | 0 |
| 4 | 4 | 1 | fd-CDM2 | (k₀,l₀),(k₀+2,l₀) | 0,1 | 0, 1 | 0 |
| 5 | 4 | 1 | fd-CDM2 | (k₀,l₀),(k₀+4,l₀) | 0,1 | 0, 1 | 0 |
| 6 | 8 | 1 | fd-CDM2 | (k₀,l₀),(k₁,l₀),(k₂,l₀),(k₃,l₀) | 0,1,2,3 | 0, 1 | 0 |
| 7 | 8 | 1 | fd-CDM2 | (k₀,l₀),(k₁,l₀),(k₀,l₀+1),(k₁,l₀+1) | 0,1,2,3 | 0, 1 | 0 |
| 8 | 8 | 1 | cdm4-FD2-TD2 | (k₀,l₀),(k₁,l₀) | 0,1 | 0, 1 | 0, 1 |
| 9 | 12 | 1 | fd-CDM2 | (k₀,l₀),(k₁,l₀),(k₂,l₀),(k₃,l₀),(k₄,l₀),(k₅,l₀ ) | 0,1,2,3,4,5 | 0, 1 | 0 |
| 10 | 12 | 1 | cdm4-FD2-TD2 | (k₀,l₀),(k₁,l₀),(k₂,l₀) | 0,1,2 | 0, 1 | 0, 1 |
| 11 | 16 | 1, 0.5 | fd-CDM2 | (k₀,l₀),(k₁,l₀),(k₂,l₀),(k₃,l₀),(k₀,l₀+1),(k ₁,l₀+1),(k₂,l₀+l),(k₃,l₀+1) | 0,1,2,3,4,5,6,7 | 0, 1 | 0 |
| 12 | 16 | 1, 0.5 | cdm4-FD2-TD2 | (k₀,l₀),(k₁,l₀),(k₂,l₀),(k₃,l₀) | 0,1,2,3 | 0, 1 | 0, 1 |
| 13 | 24 | 1, 0.5 | fd-CDM2 | (k₀,l₀),(k₁,l₀),(k₂,l₀),(k₀,l₀+1),(k₁,l₀+1) ,(k₂,l₀+1),(k₀,l₁),(k₁,l₁),(k₂,l₁),(k₀,l₁+1 ),(k₁,l₁+1),(k₂,l₁+1) | 0,1,2,3,4,5,6,7, 8,9,10,11 | 0, 1 | 0 |
| 14 | 24 | 1, 0.5 | cdm4-FD2-TD2 | (k₀,l₀),(k₁,l₀),(k₂,l₀),(k₀,l₁),(k₁,l₁),(k₂,l₁ ) | 0,1,2,3,4,5 | 0, 1 | 0, 1 |
| 15 | 24 | 1, 0.5 | cdm8-FD2-TD4 | (k₀,l₀),(k₁,l₀),(k₂,l₀) | 0,1,2 | 0, 1 | 0, 1, 2, 3 |
| 16 | 32 | 1, 0.5 | fd-CDM2 | (k₀,l₀),(k₁,l₀),(k₂,l₀),(k₃,l₀),(k₀,l₀+1),(k ₁,l₀+1),(k₂,l₀+1),(k₃,l₀+1),(k₀,l₁),(k₁,l₁ ),(k₂,l₁),(k₃,l₁),(k₀,l₁+1),(k₁,l₁+1),(k₂,l ₁+1),(k₃,l₁+1) | 0,1,2,3,4,5,6,7, 8,9,10,11,12,13 ,14,15 | 0, 1 | 0 |
| 17 | 32 | 1, 0.5 | cdm4-FD2-TD2 | (k₀,l₀),(k₁,l₀),(k₂,l₀),(k₃,l₀),(k₀,l₁),(k₁,l₁ ),(k₂,l₁),(k₃,l₁) | 0,1,2,3,4,5,6,7 | 0, 1 | 0, 1 |
| 18 | 32 | 1, 0.5 | cdm8-FD2-TD4 | (k₀,l₀),(k₁,l₀),(k₂,l₀),(k₃,l₀) | 0,1,2,3 | 0,1 | 0,1, 2, 3 |

The AP mapping method of CSI-RS may be determined by RRC parameters included in the configuration information of [Table 13] and a combination of the table of [Table 14]. Currently, the NR specification supports a total of 18 patterns (e.g., from the first row to the 18th row in the table of [Table 14]), and examples of AP mapping for each pattern are as follows with reference to the drawings.

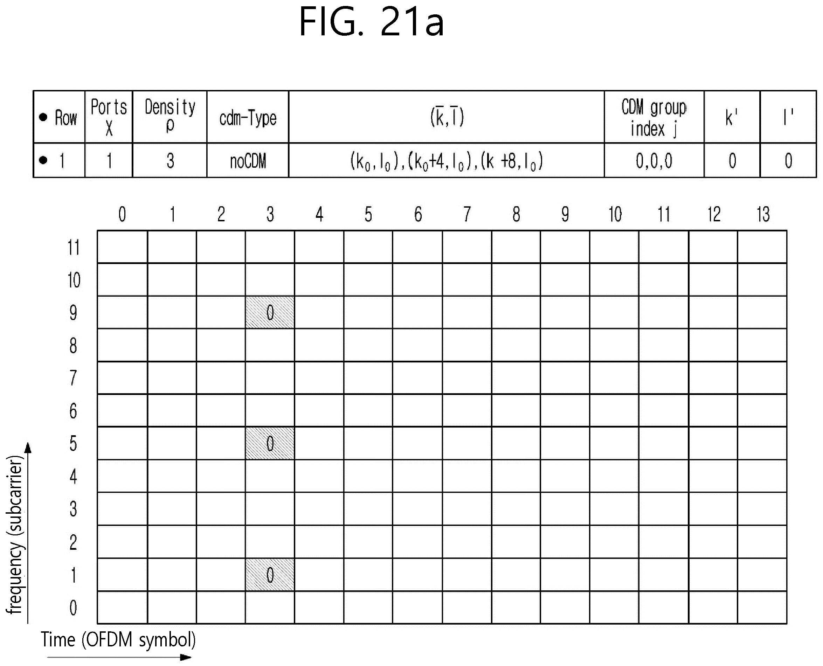

FIG. 21a to FIG. 21r illustrate examples of AP mapping of CSI-RS according to various patterns applicable to the present disclosure. In FIG. 21a to FIG. 21r, each of 0 to 13 on the horizontal axis of the grid structure are OFDM symbol indexes, and 0 to 11 on the vertical axis of the grid structure represent REs or subcarrier indexes within one RB.

FIG. 21a illustrates an example of AP mapping of CSI-RS according to a first pattern. FIG. 21a exemplifies a case where a firstOFDMSymbolInTimeDomain parameter is configured to 3, and a frequencyDomainAllocation parameter (e.g., a parameter corresponding to a bitmap [b₃...b₀] of the TS 38.211 specification) is configured to 0010, that is, an l₀ value is configured to 3 and a k₀ value is configured to 1. In FIG. 21a, CSI-RS AP #3000 is mapped to REs indicated as '0'.

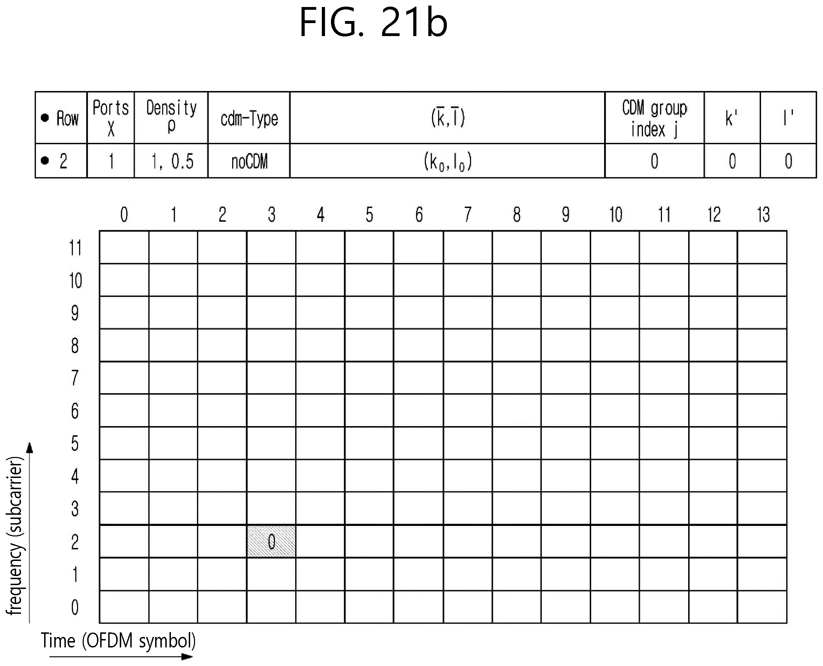

FIG. 21b illustrates an example of AP mapping of CSI-RS according to a second pattern. FIG. 21b exemplifies a case where a firstOFDMSymbolInTimeDomain parameter is configured to 3, and a frequencyDomainAllocation parameter (e.g., a parameter corresponding to a bitmap [b₁₁...b₀] of the TS 38.211 specification) is configured to 0000 0000 0010, that is, an l₀ value is configured to 3 and a k₀ value is configured to 1. In FIG. 21b, CSI-RS AP #3000 is mapped to REs indicated as '0'.

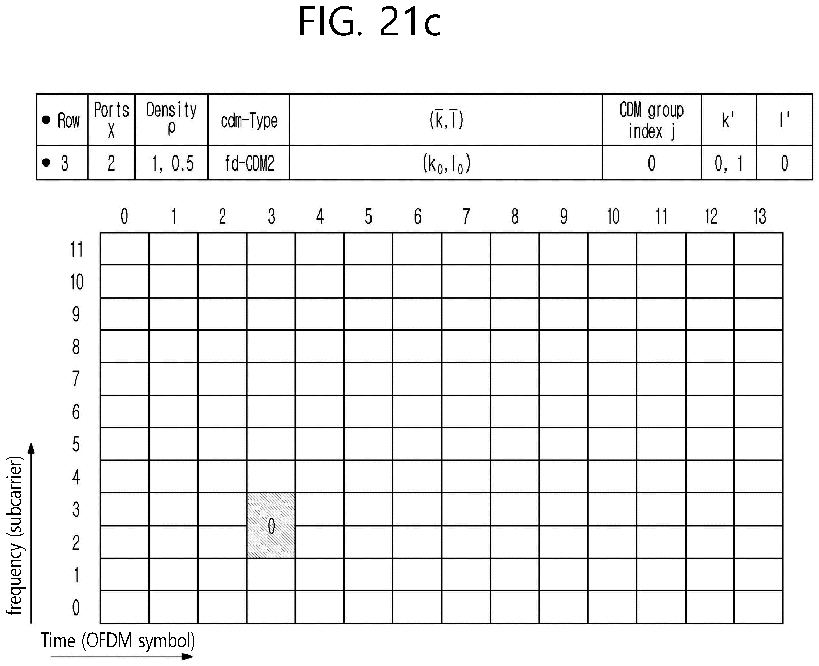

FIG. 21c illustrates an example of AP mapping of CSI-RS according to a third pattern. FIG. 21c exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 000010, that is, an l₀ value is configured to 3 and a k₀ value is configured to 2. In FIG. 21c, two APs are CDMed by applying frequency-domain OCC (orthogonal cover code) to RE groups or CDM (code domain multiplexing) groups indicated as '0', and CSI-RS AP #3000 and CSI-RS AP #3001 are mapped.

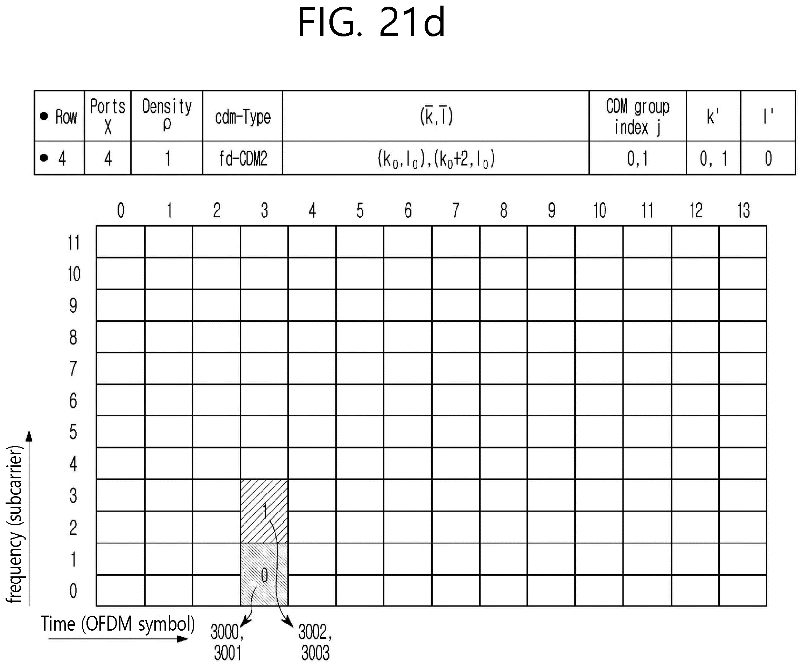

FIG. 21d illustrates an example of AP mapping of CSI-RS according to a fourth pattern. FIG. 21d exemplifies a case where a firstOFDMSymbolInTimeDomain parameter is configured to 3, and a frequencyDomainAllocation parameter (e.g., a parameter corresponding to a bitmap [b₂...b₀] of the TS 38.211 specification) is configured to 001, that is, an l₀ value is configured to 3 and a k₀ value is configured to 0. In FIG. 21d, two APs are CDMed by applying frequency-domain OCC to each of RE groups or CDM groups indicated as '0' or '1', and accordingly, CSI-RS AP #3000 and CSI-RS AP #3001 are mapped to CDM group #0, and CSI-RS AP #3002 and CSI-RS AP #3003 are mapped to CDM group #1.

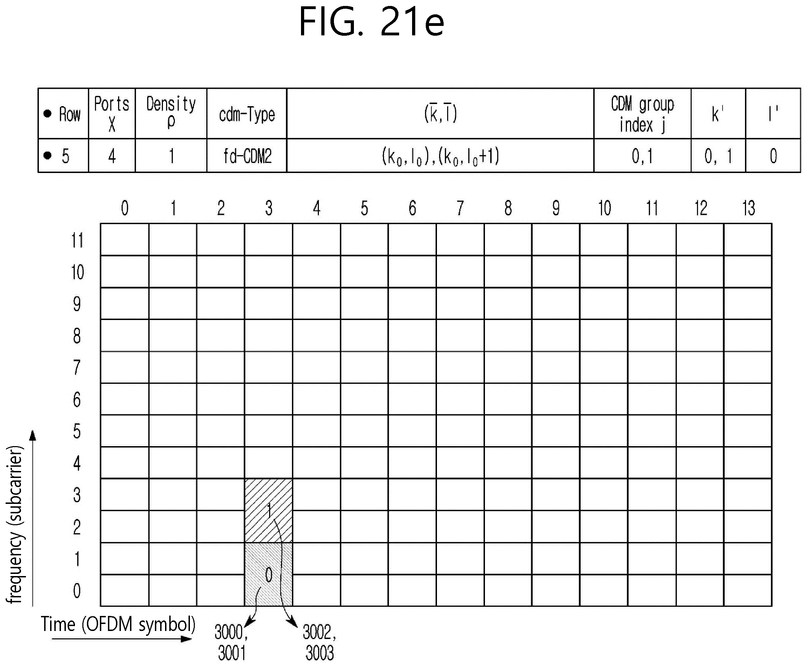

FIG. 21e illustrates an example of AP mapping of CSI-RS according to a fifth pattern. FIG. 21e exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 000010, that is, an l₀ value is configured to 3 and a k₀ value is configured to 2. In FIG. 21e, two APs are CDMed by applying frequency-domain OCC to each of RE groups or CDM groups indicated as '0' or '1', and accordingly, CSI-RS AP #3000 and CSI-RS AP #3001 are mapped to CDM group #0, and CSI-RS AP #3002 and CSI-RS AP #3003 are mapped to CDM group #1.

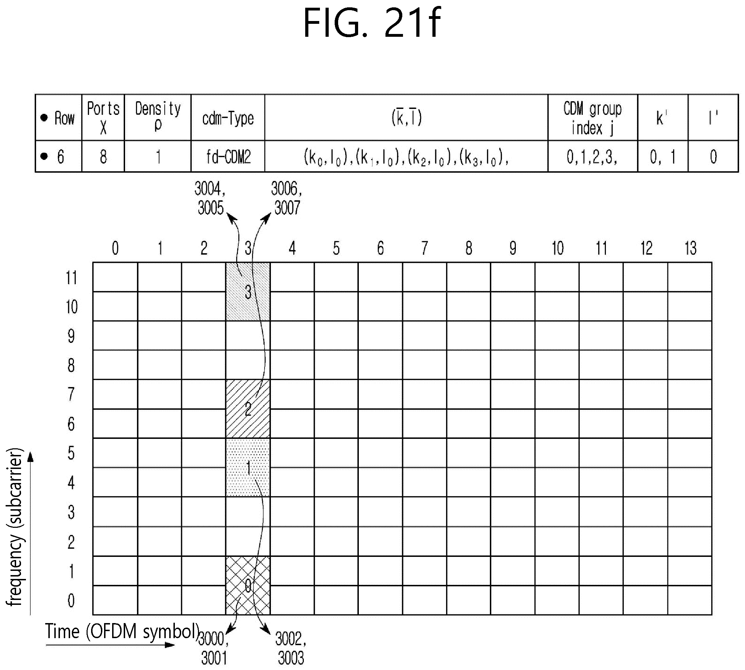

FIG. 21f illustrates an example of AP mapping of CSI-RS according to a sixth pattern. FIG. 21f exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 101101, that is, an l₀ value is configured to 3 and k₀, k₁, k₂, and k₃ values are configured to 0, 4, 6, and 10, respectively. In FIG. 21f, two APs are CDMed by applying frequency-domain OCC to each of RE groups or CDM groups indicated as '0', '1', '2', or '3', and accordingly, CSI-RS AP #3000 and CSI-RS AP #3001 are mapped to CDM group #0, CSI-RS AP #3002 and CSI-RS AP #3003 are mapped to CDM group #1, CSI-RS AP #3004 and CSI-RS AP #3005 are mapped to CDM group #2, and CSI-RS AP #3006 and CSI-RS AP #3007 are mapped to CDM group #3.

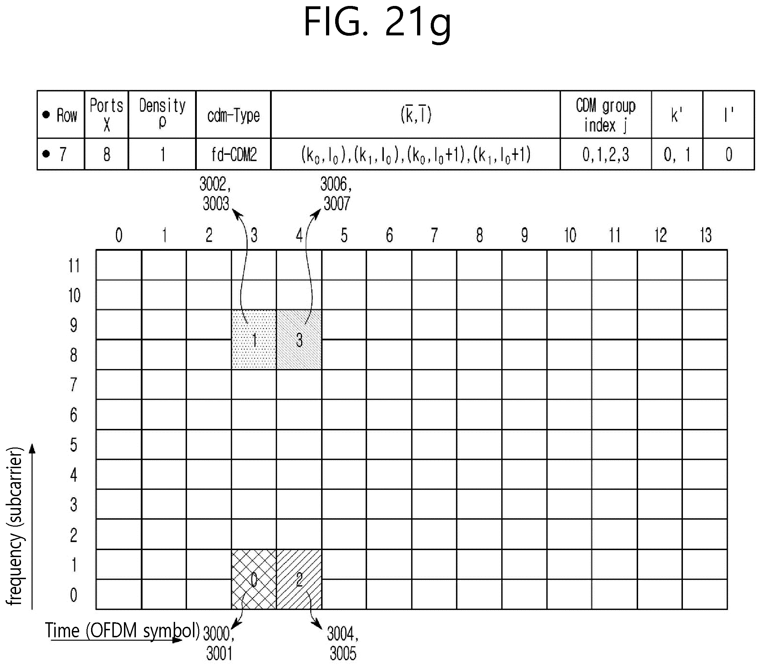

FIG. 21g illustrates an example of AP mapping of CSI-RS according to a seventh pattern. FIG. 21g exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 010001, that is, an l₀ value is configured to 3 and k₀ and k₁ values are configured to 0 and 8, respectively. In FIG. 21g, two APs are CDMed by applying frequency-domain OCC to each of RE groups or CDM groups indicated as '0', '1', '2', or '3', and accordingly, CSI-RS AP #3000 and CSI-RS AP #3001 are mapped to CDM group #0, CSI-RS AP #3002 and CSI-RS AP #3003 are mapped to CDM group #1, CSI-RS AP #3004 and CSI-RS AP #3005 are mapped to CDM group #2, and CSI-RS AP #3006 and CSI-RS AP #3007 are mapped to CDM group #3.

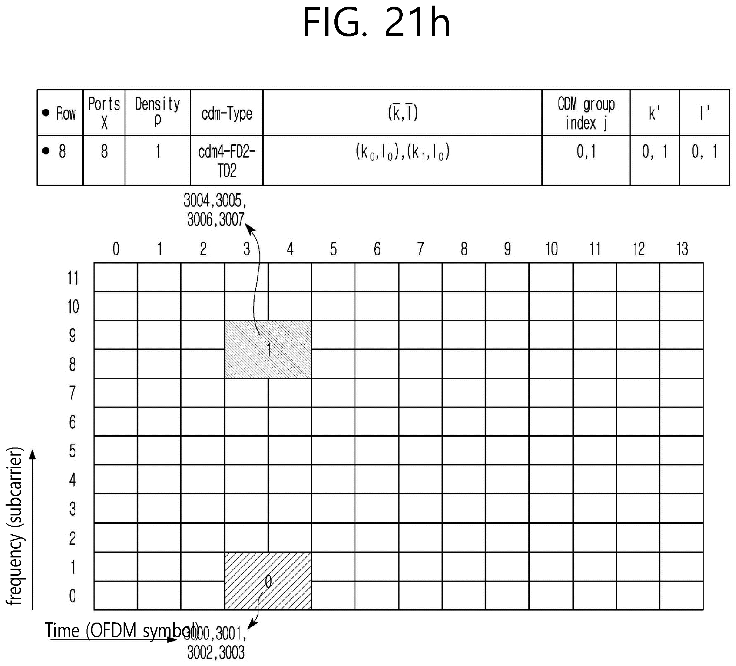

FIG. 21h illustrates an example of AP mapping of CSI-RS according to an eighth pattern. FIG. 21h exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 010001, that is, an l₀ value is configured to 3 and k₀ and k₁ values are configured to 0 and 8, respectively. In FIG. 21h, four APs are CDMed by applying frequency-domain OCC to each of RE groups or CDM groups indicated as '0' or '2', and accordingly, CSI-RS AP #3000 to CSI-RS AP #3003 are mapped to CDM group #0, and CSI-RS AP #3004 to CSI-RS AP #3007 are mapped to CDM group #1.

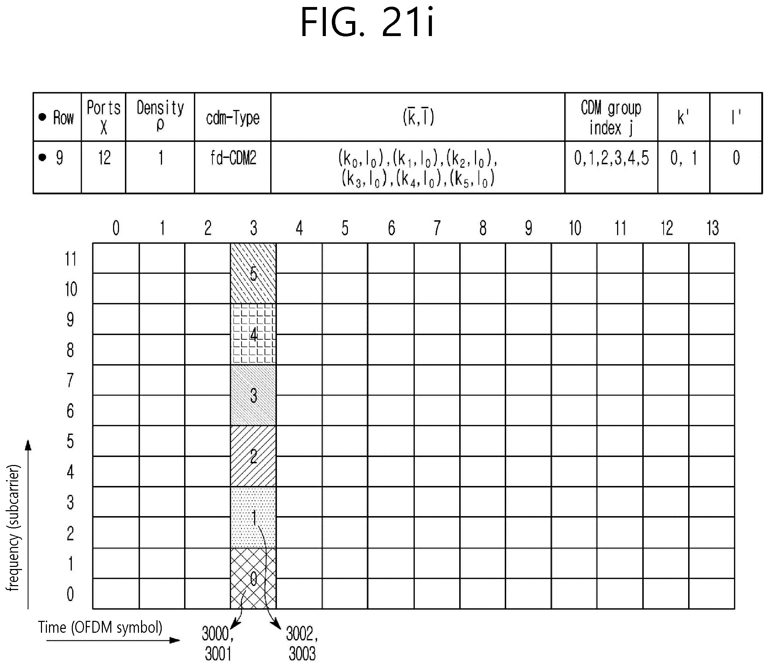

FIG. 21i illustrates an example of AP mapping of CSI-RS according to a ninth pattern. FIG. 21i exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 111111, that is, an l₀ value is configured to 3 and ko, k₁, k₂, k₃, k₄, and k₅ values are configured to 0, 2, 4, 6, and 8, respectively. In FIG. 21i, two APs are CDMed by applying frequency-domain OCC to each of RE groups or CDM groups indicated as '0', '1', '2', '3', '4', or '5', and accordingly, CSI-RS AP #3000 and CSI-RS AP #3001 are mapped to CDM group #0, CSI-RS AP #3002 and CSI-RS AP #3003 are mapped to CDM group #1, CSI-RS AP #3004 and CSI-RS AP #3005 are mapped to CDM group #2, CSI-RS AP #3006 and CSI-RS AP #3007 are mapped to CDM group #3, CSI-RS AP #3008 and CSI-RS AP #3009 are mapped to CDM group #4, and CSI-RS AP #3010 and CSI-RS AP #3011 are mapped to CDM group #5.

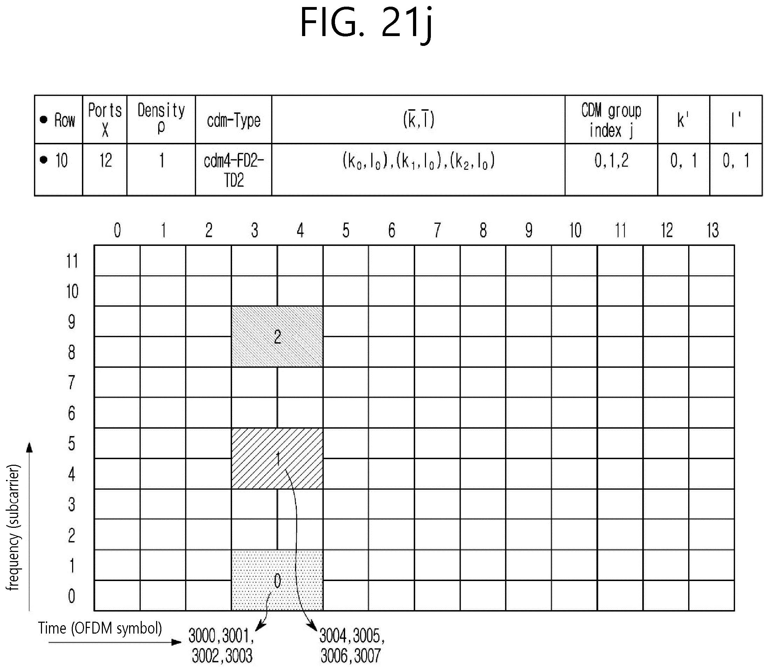

FIG. 21j illustrates an example of AP mapping of CSI-RS according to a tenth pattern. FIG. 21j exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 010101, that is, an l₀ value is configured to 3 and k₀, k₁, and k₂ values are configured to 0, 4, and 8, respectively. In FIG. 21j, four APs are CDMed by applying frequency-domain OCC to each of RE groups or CDM groups indicated as '0', '1', or '2', and accordingly, CSI-RS AP #3000 to CSI-RS AP #3003 are mapped to CDM group #0, CSI-RS AP #3004 to CSI-RS AP #3007 are mapped to CDM group #1, and CSI-RS AP #3008 to CSI-RS AP #3011 are mapped to CDM group #2.

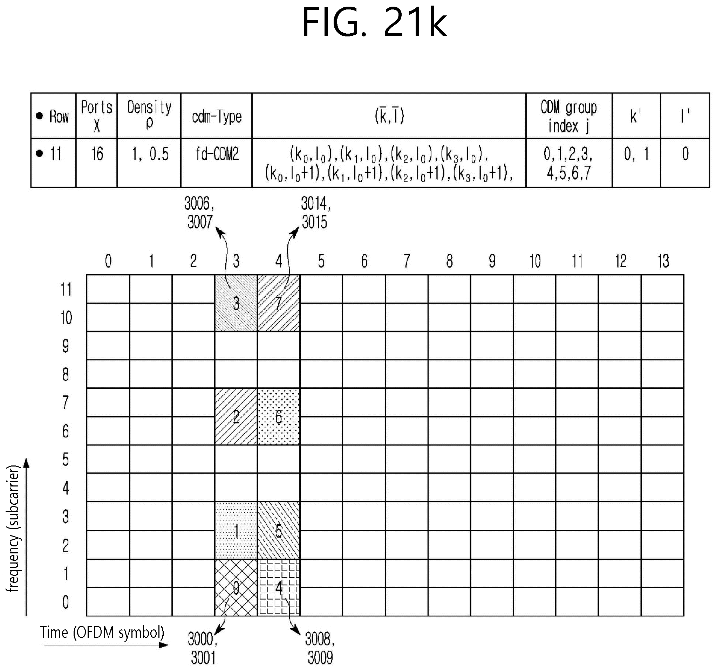

FIG. 21k illustrates an example of AP mapping of CSI-RS according to an eleventh pattern. FIG. 21k exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 101011, that is, an l₀ value is configured to 3 and k₀, k₁, k₂, and k₃ values are configured to 0, 2, 6, and 10, respectively. In FIG. 21k, four APs are CDMed by applying frequency-domain OCC to each of RE groups or CDM groups indicated as '0', '1', '2', '3', '4', '5', '6', or '7', and accordingly, CSI-RS AP #3000 and CSI-RS AP #3001 are mapped to CDM group #0, CSI-RS AP #3002 and CSI-RS AP #3003 are mapped to CDM group #1, CSI-RS AP #3004 and CSI-RS AP #3005 are mapped to CDM group #2, CSI-RS AP #3006 and CSI-RS AP #3007 are mapped to CDM group #3, CSI-RS AP #3008 and CSI-RS AP #3009 are mapped to CDM group #4, CSI-RS AP #3010 and CSI-RS AP #3011 are mapped to CDM group #5, CSI-RS AP #3012 and CSI-RS AP #3013 are mapped to CDM group #6, and CSI-RS AP #3014 and CSI-RS AP #3015 are mapped to CDM group #7.

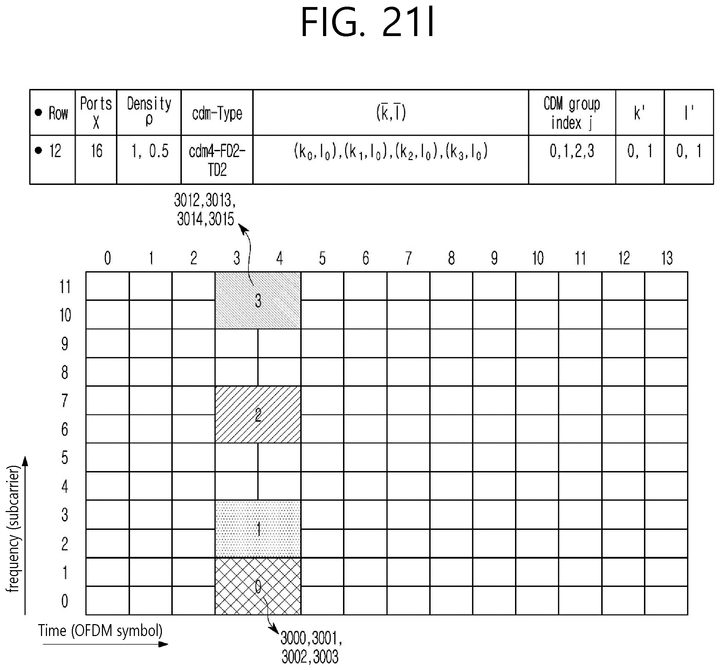

FIG. 21l illustrates an example of AP mapping of CSI-RS according to a twelfth pattern. FIG. 21l exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 101011, that is, an l₀ value is configured to 3 and k₀, k₁, k₂, and k₃ values are configured to 0, 2, 6, and 10, respectively. In FIG. 21l, four APs are CDMed by applying frequency-domain OCC to each of RE groups or CDM groups indicated as '0', '1', '2', or '3', and accordingly, CSI-RS AP #3000 to CSI-RS AP #3003 are mapped to CDM group #0, CSI-RS AP #3004 to CSI-RS AP #3007 are mapped to CDM group #1, CSI-RS AP #3008 to CSI-RS AP #3011 are mapped to CDM group #2, and CSI-RS AP #3012 to CSI-RS AP #3015 are mapped to CDM group #3.

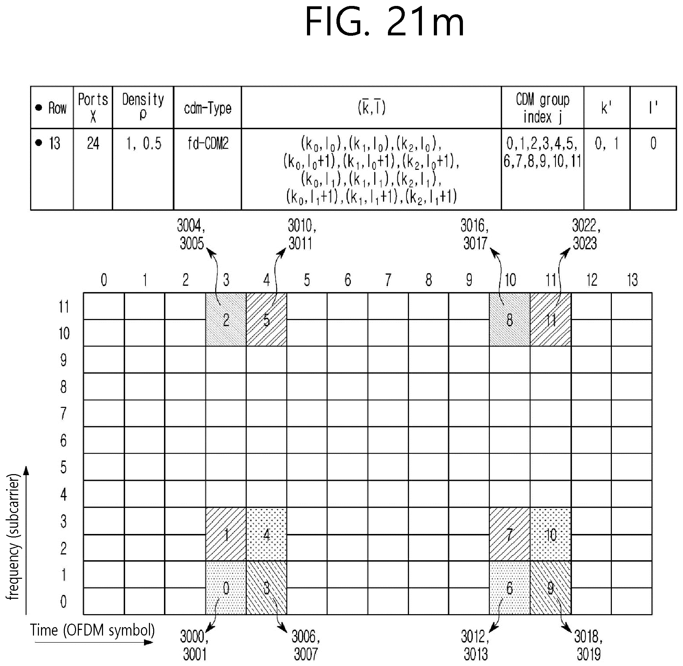

FIG. 21m illustrates an example of AP mapping of CSI-RS according to a thirteenth pattern. FIG. 21m exemplifies a case where a firstOFDMSymbolInTimeDomain parameter is configured to 3, a firstOFDMSymbolInTimeDomain2 parameter is configured to 10, and a frequencyDomainAllocation parameter (e.g., a parameter corresponding to a bitmap [b₅...b₀] of the TS 38.211 specification) is configured to 100011, that is, l₀ and l₁ values are configured to 3 and 10, respectively, and k₀, k₁, and k₂ values are configured to 0, 8, and 10, respectively. In FIG. 21m, two APs are CDMed by applying frequency-domain OCC to each of RE groups or CDM groups indicated as '0', '1', '2', '3', '4', '5', '6', '7', '8', '9', '10', or '11', and accordingly, CSI-RS AP #3000 and CSI-RS AP #3001 are mapped to CDM group #0, CSI-RS AP #3002 and CSI-RS AP #3003 are mapped to CDM group #1, CSI-RS AP #3004 and CSI-RS AP #3005 are mapped to CDM group #2, CSI-RS AP #3006 and CSI-RS AP #3007 are mapped to CDM group #3, CSI-RS AP #3008 and CSI-RS AP #3009 are mapped to CDM group #4, CSI-RS AP #3010 and CSI-RS AP #3011 are mapped to CDM group #5, CSI-RS AP #3012 and CSI-RS AP #3013 are mapped to CDM group #6, CSI-RS AP #3014 and CSI-RS AP #3015 are mapped to CDM group #7, CSI-RS AP #3016 and CSI-RS AP #3017 are mapped to CDM group #8, CSI-RS AP #3018 and CSI-RS AP #3019 are mapped to CDM group #9, CSI-RS AP #3020 and CSI-RS AP #3021 are mapped to CDM group #10, and CSI-RS AP #3022 and CSI-RS AP #3023 are mapped to CDM group #11.

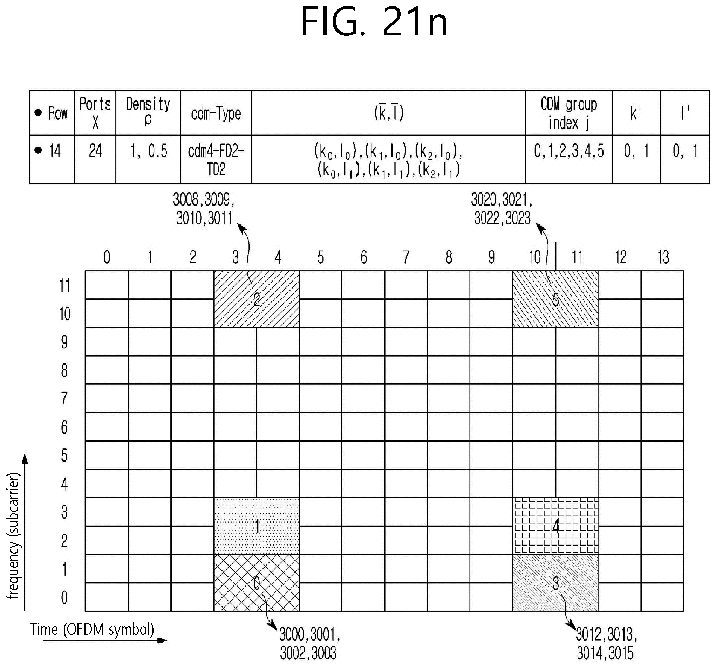

FIG. 21n illustrates an example of AP mapping of CSI-RS according to a fourteenth pattern. FIG. 21n exemplifies a case where a firstOFDMSymbolInTimeDomain parameter is configured to 3, a firstOFDMSymbolInTimeDomain2 parameter is configured to 10, and a frequencyDomainAllocation parameter (e.g., a parameter corresponding to a bitmap [b₅...b₀] of the TS 38.211 specification) is configured to 100011, that is, l₀ and l₁ values are configured to 3 and 10, respectively, and k₀, k₁, and k₂ values are configured to 0, 2, and 10, respectively. In FIG. 21n, four APs are CDMed by applying frequency-domain OCC to each of RE groups or CDM groups indicated as '0', '1', '2', '3', '4', or '5', and accordingly, CSI-RS AP #3000 to CSI-RS AP #3003 are mapped to CDM group #0, CSI-RS AP #3004 to CSI-RS AP #3007 are mapped to CDM group #1, CSI-RS AP #3008 to CSI-RS AP #3011 are mapped to CDM group #2, CSI-RS AP #3012 to CSI-RS AP #3015 are mapped to CDM group #3, CSI-RS AP #3016 to CSI-RS AP #3019 are mapped to CDM group #4, and CSI-RS AP #3020 to CSI-RS AP #3023 are mapped to CDM group #5.

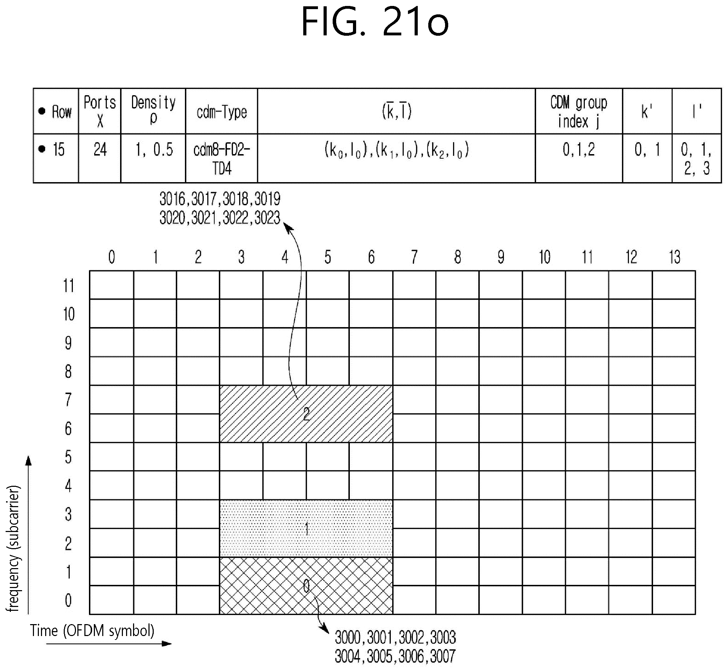

FIG. 21o illustrates an example of AP mapping of CSI-RS according to a fifteenth pattern. FIG. 21o exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 001011, that is, an l₀ value is configured to 3 and ko, k₁, and k₂ values are configured to 0, 2, and 6, respectively. In FIG. 21o, eight APs are CDMed by applying frequency-domain OCC to each of RE groups or CDM groups indicated as '0', '1', or '2', and accordingly, CSI-RS AP #3000 to CSI-RS AP #3007 are mapped to CDM group #0, CSI-RS AP #3008 to CSI-RS AP #3015 are mapped to CDM group #1, and CSI-RS AP #3016 to CSI-RS AP #3023 are mapped to CDM group #2.

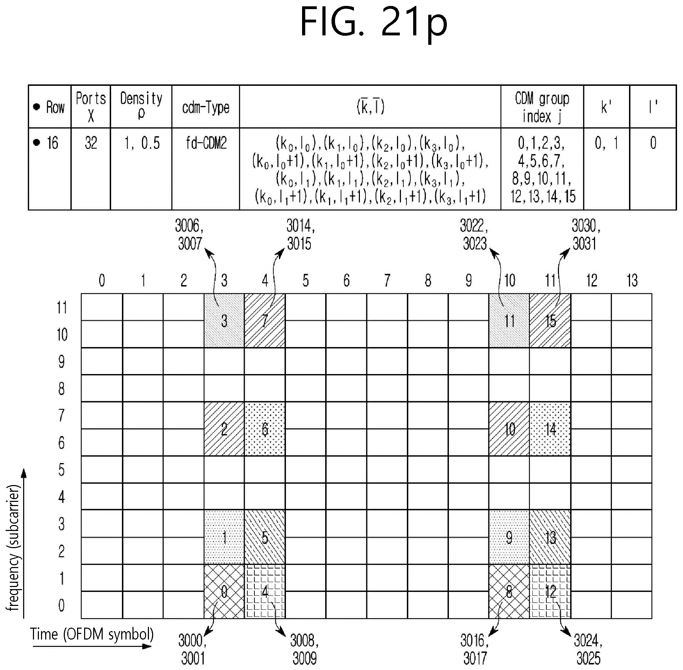

FIG. 21p illustrates an example of AP mapping of CSI-RS according to a thirteenth pattern. FIG. 21p exemplifies a case where a firstOFDMSymbolInTimeDomain parameter is configured to 3, a firstOFDMSymbolInTimeDomain2 parameter is configured to 10, and a frequencyDomainAllocation parameter (e.g., a parameter corresponding to a bitmap [b₅...b₀] of the TS 38.211 specification) is configured to 101011, that is, l₀ and l₁ values are configured to 3 and 10, respectively, and k₀, k₁, k₂, and k₃ values are configured to 0, 2, 6, and 10, respectively. In FIG. 21p, two APs are CDMed by applying frequency-domain OCC to each of RE groups or CDM groups indicated as '0', '1', '2', '3', '4', '5', '6', '7', '8', '9', '10', '11', '12', '13', '14', or '15', and accordingly, CSI-RS AP #3000 and CSI-RS AP #3001 are mapped to CDM group #0, CSI-RS AP #3002 and CSI-RS AP #3003 are mapped to CDM group #1, CSI-RS AP #3004 and CSI-RS AP #3005 are mapped to CDM group #2, CSI-RS AP #3006 and CSI-RS AP #3007 are mapped to CDM group #3, CSI-RS AP #3008 and CSI-RS AP #3009 are mapped to CDM group #4, CSI-RS AP #3010 and CSI-RS AP #3011 are mapped to CDM group #5, CSI-RS AP #3012 and CSI-RS AP #3013 are mapped to CDM group #6, CSI-RS AP #3014 and CSI-RS AP #3015 are mapped to CDM group #7, CSI-RS AP #3016 and CSI-RS AP #3017 are mapped to CDM group #8, CSI-RS AP #3018 and CSI-RS AP #3019 are mapped to CDM group #9, CSI-RS AP #3020 and CSI-RS AP #3021 are mapped to CDM group #10, CSI-RS AP #3022 and CSI-RS AP #3023 are mapped to CDM group #11, CSI-RS AP #3024 and CSI-RS AP #3025 are mapped to CDM group #12, CSI-RS AP #3026 and CSI-RS AP #3027 are mapped to CDM group #13, CSI-RS AP #3028 and CSI-RS AP #3029 are mapped to CDM group #14, and CSI-RS AP #3030 and CSI-RS AP #3031 are mapped to CDM group #15.

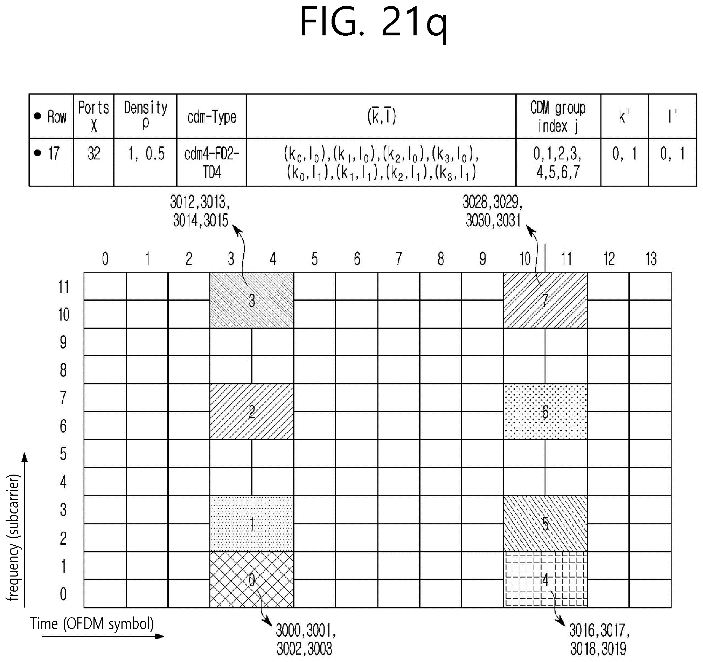

FIG. 21q illustrates an example of AP mapping of CSI-RS according to a fourteenth pattern. FIG. 21q exemplifies a case where a firstOFDMSymbolInTimeDomain parameter is configured to 3, a firstOFDMSymbolInTimeDomain2 parameter is configured to 10, and a frequencyDomainAllocation parameter (e.g., a parameter corresponding to a bitmap [b₅...b₀] of the TS 38.211 specification) is configured to 110011, that is, l₀ and l₁ values are configured to 3 and 10, respectively, and k₀, k₁, k₂, and k₃ values are configured to 0, 2, 8, and 10, respectively. In FIG. 21q, four APs are CDMed by applying frequency-domain OCC to each of RE groups or CDM groups indicated as '0', '1', '2', '3', '4', '5', '6', or '7', and accordingly, CSI-RS AP #3000 to CSI-RS AP #3003 are mapped to CDM group #0, CSI-RS AP #3004 to CSI-RS AP #3007 are mapped to CDM group #1, CSI-RS AP #3008 to CSI-RS AP #3011 are mapped to CDM group #2, CSI-RS AP #3012 to CSI-RS AP #3015 are mapped to CDM group #3, CSI-RS AP #3016 to CSI-RS AP #3019 are mapped to CDM group #4, CSI-RS AP #3020 to CSI-RS AP #3023 are mapped to CDM group #5, CSI-RS AP #3024 to CSI-RS AP #3027 are mapped to CDM group #6, and CSI-RS AP #3028 to CSI-RS AP #3031 are mapped to CDM group #7.

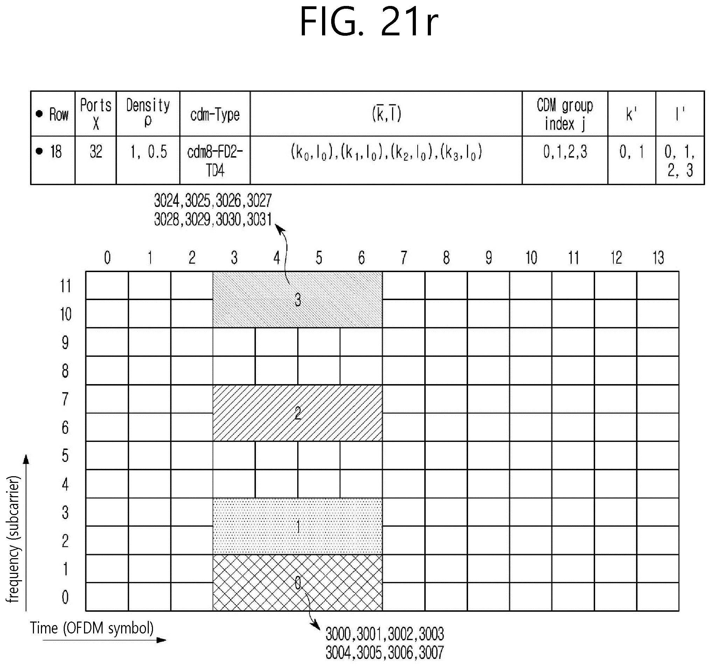

FIG. 21r illustrates an example of AP mapping of CSI-RS according to a fifteenth pattern. FIG. 21r exemplifies a case where a firstOFDMSymbolInTimeDomain parameter is configured to 3, and a frequencyDomainAllocation parameter (e.g., a parameter corresponding to a bitmap [b₅...b₀] of the TS 38.211 specification) is configured to 101011, that is, an l₀ value is configured to 3 and k₀, k₁, k₂, and k₃ values are configured to 0, 2, 6, and 10, respectively. In FIG. 21r, eight APs are CDMed by applying frequency-domain OCC to each of RE groups or CDM groups indicated as '0', '1', '2', or '3', and accordingly, CSI-RS AP #3000 to CSI-RS AP #3007 are mapped to CDM group #0, CSI-RS AP #3008 to CSI-RS AP #3015 are mapped to CDM group #1, CSI-RS AP #3016 to CSI-RS AP #3023 are mapped to CDM group #2, and CSI-RS AP #3024 to CSI-RS AP#3031 are mapped to CDM group #3.

### Port layout for codebook configuration

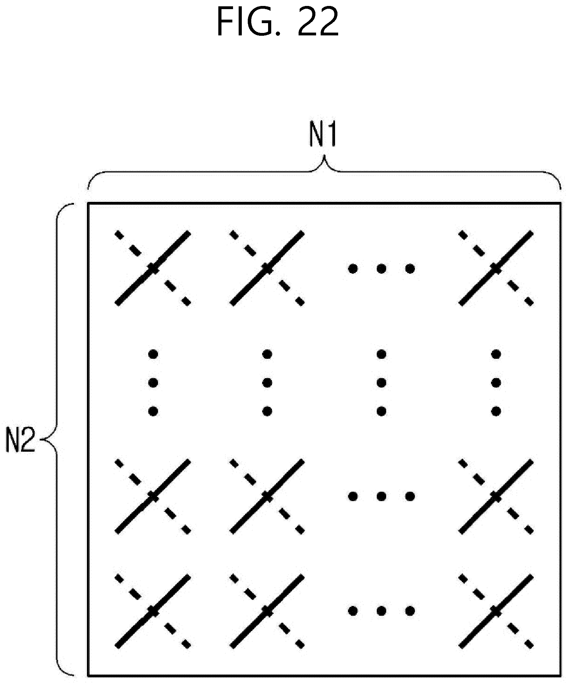

One of the pieces of information constituting CSI feedback in an NR system is a precoder matrix index (PMI). To define the PMI, various types of codebooks are supported. Specifically, a type I single-panel codebook, a type I multi-panel codebook, a type II codebook, an enhanced type II codebook, a type II port selection codebook, and a further enhanced or enhanced type II port selection codebook may be supported. The type I codebook is designed for single-user MIMO, and the type II codebook is designed for multi-user MIMO transmission. In configuration of a MIMO codebook, an assumed port layout is an (N1, N2) structure as shown in FIG. 22. FIG. 22 illustrates an example of a port layout for configuration of a MIMO codebook applicable to the present disclosure. If a base station has a plurality of Ng panels, the (N1, N2) structure as shown in FIG. 22 is repeated for each panel. Meanwhile, the number of CSI-RS APs in an (N1, N2) structure or an (Ng, N1, N2) structure is 2×N1×N2 or 2×Ng×N1×N2. For example, in a port layout of (N1, N2) = (4, 2), the number of CSI-RS APs may be 16.

Specifically, in the NR specification (e.g., TS 38.214, 5.2.2.2.1), combinations of (N1, N2) as shown in [Table 15] below are defined for a single panel. In the tables below, O₁ and O₂ are oversampling factors.

**[Table 15]**

| Number of CSI-RS antenna ports, P_{CSI-RS} | (N₁,N₂) | (O₁,O₂) |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

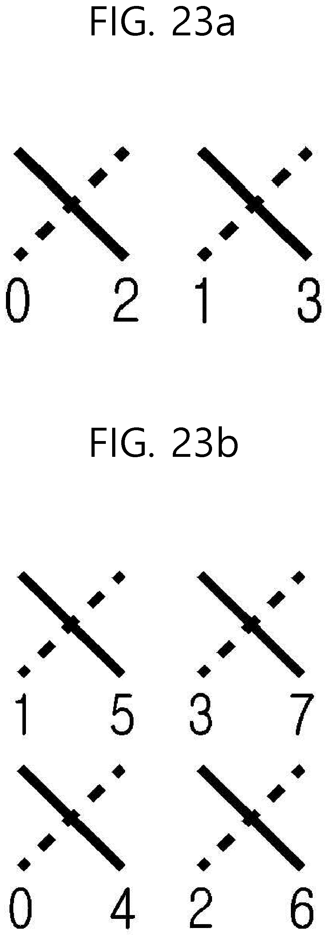

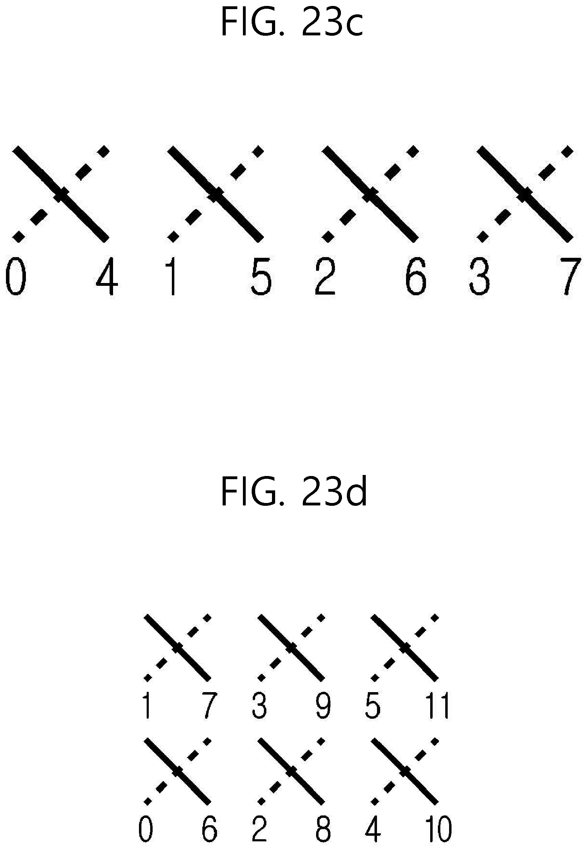

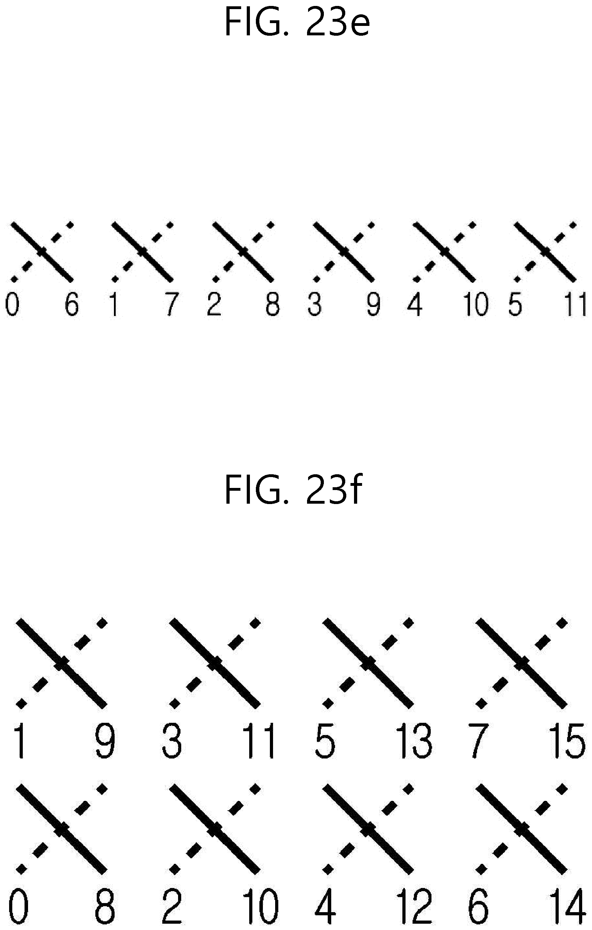

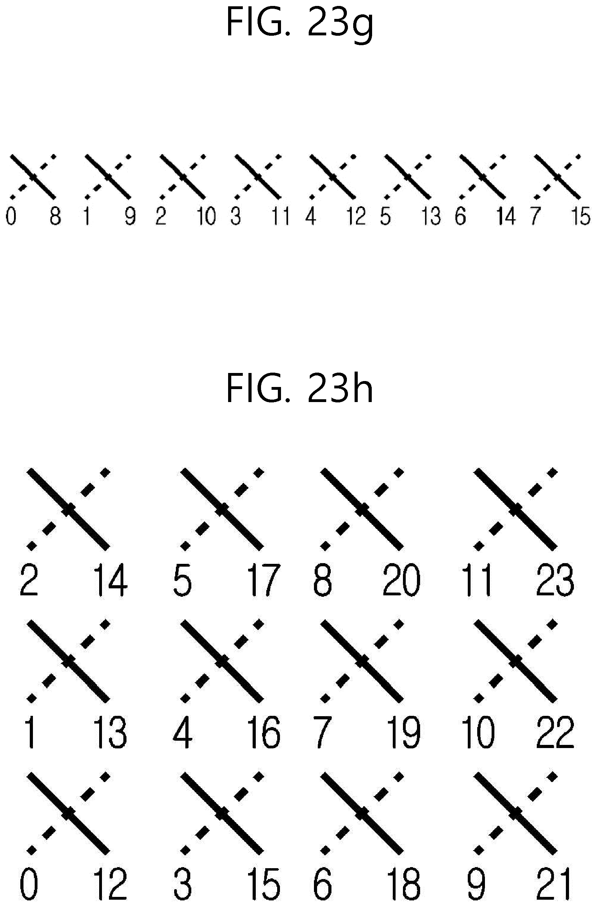

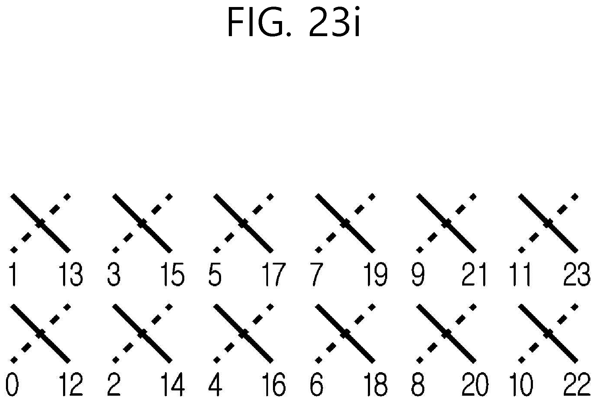

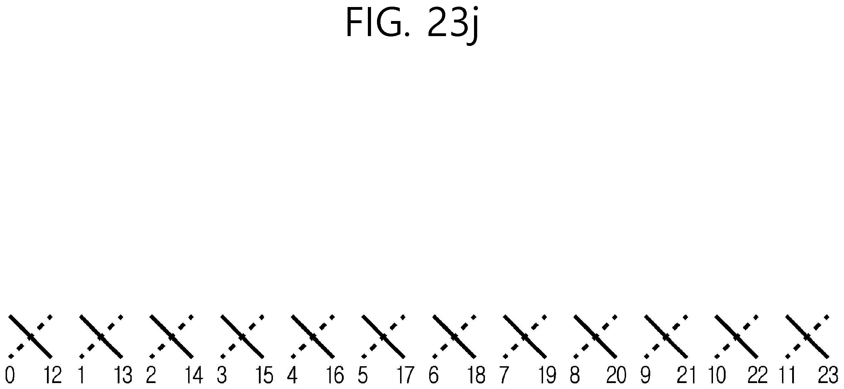

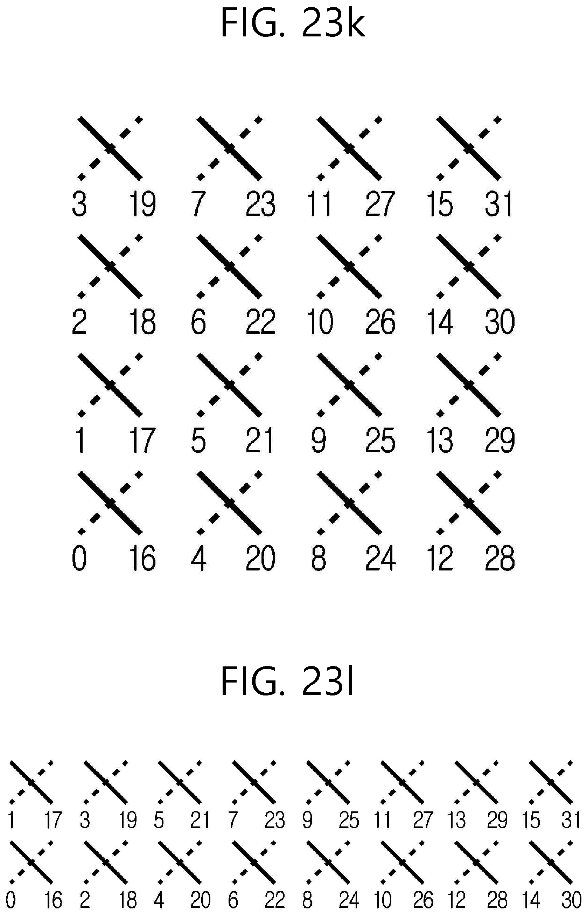

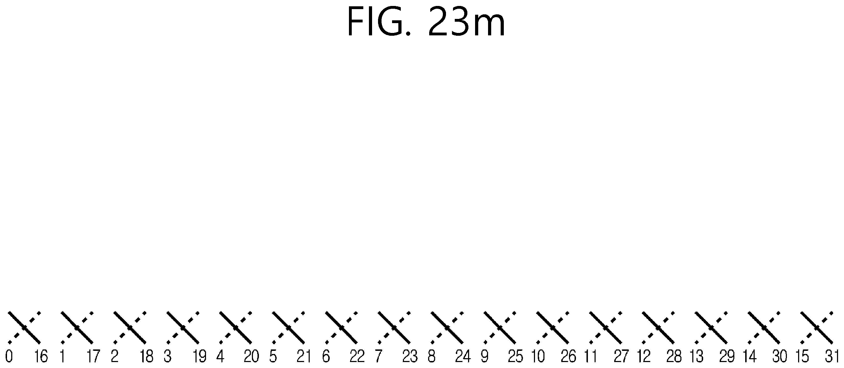

FIG. 23a to FIG. 23m illustrate examples of port layouts according to various combinations of N1 and N2 applicable to the present disclosure. FIG. 23a illustrates port mapping in a case of (N1, N2) = (2, 1), FIG. 23b illustrates (N1, N2) = (2, 2), FIG. 23c illustrates (N1, N2) = (4, 1), FIG. 23d illustrates (N1, N2) = (3, 2), FIG. 23e illustrates (N1, N2) = (6, 1), FIG. 23f illustrates (N1, N2) = (4, 2), FIG. 23g illustrates (N1, N2) = (8, 1), FIG. 23h illustrates (N1, N2) = (4, 3), FIG. 23i illustrates (N1, N2) = (6, 2), FIG. 23j illustrates (N1, N2) = (12, 1), FIG. 23k illustrates (N1, N2) = (4, 4), FIG. 23l illustrates (N1, N2) = (8, 2), and FIG. 23m illustrates (N1, N2) = (16, 1). FIG. 23a to FIG. 23m illustrate examples of port layouts according to various combinations of N1 and N2 applicable to the present disclosure. Referring to FIG. 23a to FIG. 23m, port layouts in which N1 is greater than or equal to N2 are defined. A port number X may correspond to port index #3000 + X.

In addition, in the NR specification (e.g., TS 38.214, 5.2.2.2.2), combinations of (Ng, N1, N2) as shown in [Table 16] below are defined for a case of multiple panels.

**[Table 16]**

| Number of CSI-RS antenna ports, P_{CSI-RS} | (N_{g},N₁,N₂) | (O₁,O₂) |
|---|---|---|
| 8 | (2,2,1) | (4,1) |
| 16 | (2,4,1) | (4,1) |
| | (4,2,1) | (4,1) |
| | (2,2,2) | (4,4) |
| 32 | (2,8,1) | (4,1) |
| | (4,4,1) | (4,1) |
| | (2,4,2) | (4,4) |
| | (4,2,2) | (4,4) |

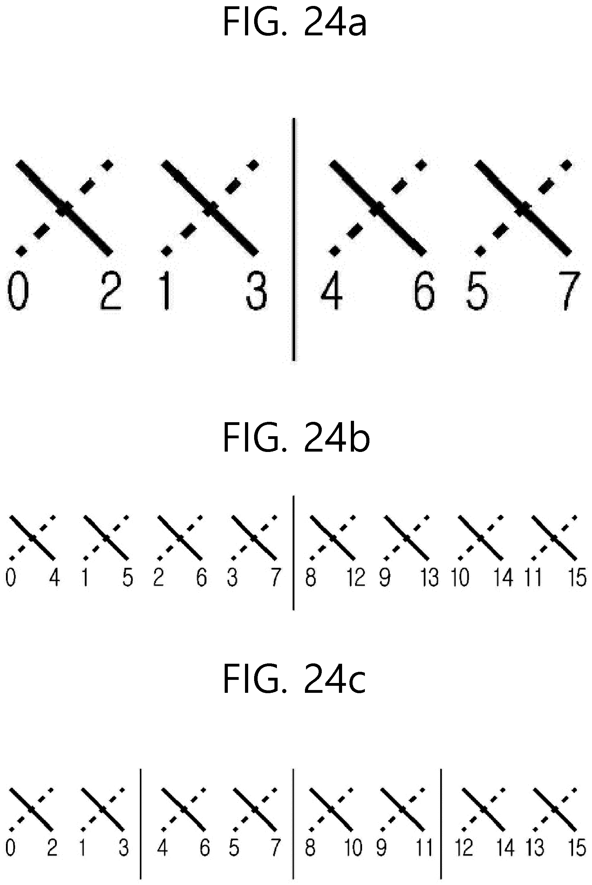

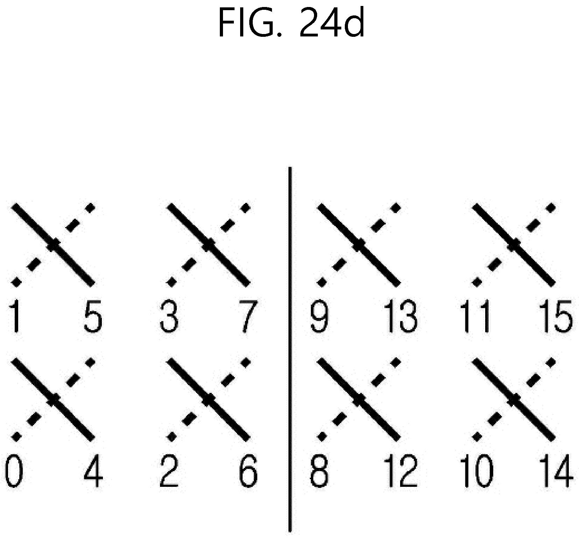

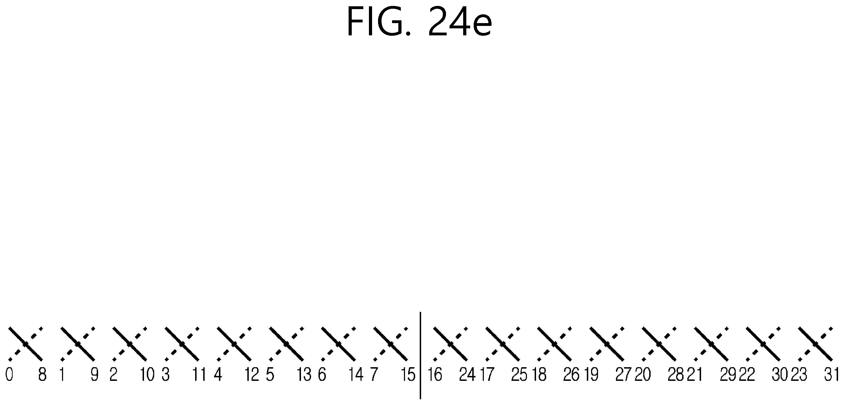

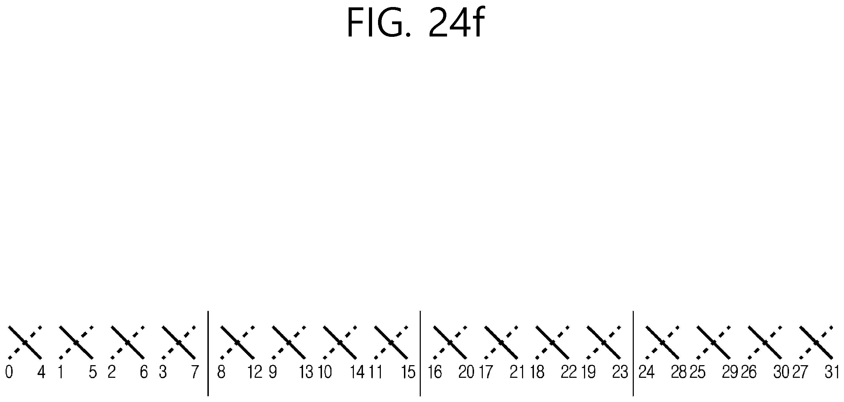

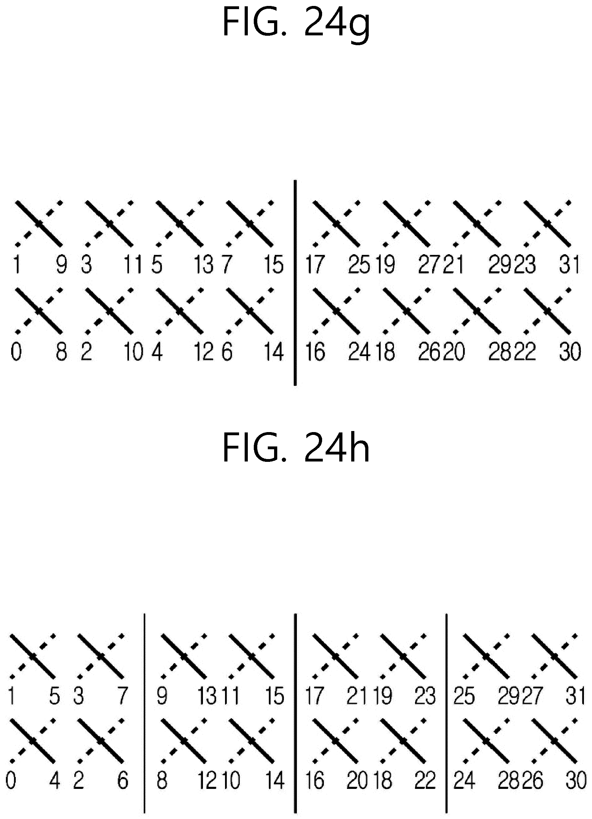

FIG. 24a to FIG. 24h illustrate examples of port layouts according to various combinations of Ng, N1, and N2 applicable to the present disclosure. FIG. 24a illustrates port mapping in a case of (Ng, N1, N2) = (2, 2, 1), FIG. 24b illustrates (Ng, N1, N2) = (2, 4, 1), FIG. 24c illustrates (Ng, N1, N2) = (4, 2, 1), FIG. 24d illustrates (Ng, N1, N2) = (2, 2, 2), FIG. 24e illustrates (Ng, N1, N2) = (2, 8, 1), FIG. 24f illustrates (Ng, N1, N2) = (4, 4, 1), FIG. 24g illustrates (Ng, N1, N2) = (2, 4, 2), and FIG. 24h illustrates (Ng, N1, N2) = (4, 2, 2). A port number X may correspond to port index #3000 + X.

According to the CSI frameworks described above, particularly Framework #3, when configuration information (e.g., CSI-ReportConfig) for CSI reporting includes one CSI-RS resource set associated with one CMR or one IMR, some or all CSI-RS resources in the set may be configured with a plurality of numbers of APs values and/or power offset values. In this case, one CSI-RS resource is configured with up to N1 APs (e.g., N1 = 32), and CSI reporting using some N2 (< N1) AP(s) (e.g., N2 = 16 or 8) among them may be configured. In such a situation, the present disclosure intends to propose a technique for first configuring/indicating whether the CSI reporting is using which N2 or N1 APs among the N1 APs.

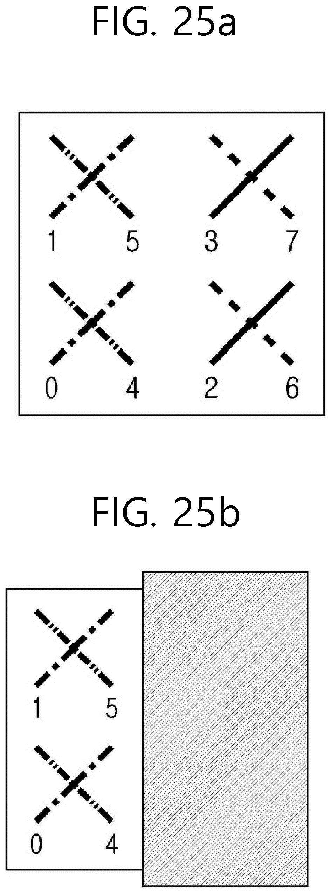

FIG. 25a and FIG. 25b illustrate examples of variations of a port layout for 8-port APs and a port layout for an AP subset applicable to the present disclosure. For example, as in FIG. 21g, when an 8-port CSI-RS is configured and (N1, N2) = (2, 2), a port layout as shown in FIG. 25a may be applied. If APs corresponding to CDM group #1 and CDM group #3 among the CSI-RS are muted, and CSI reporting may be configured with the remaining 4 APs, a port layout corresponding to the remaining 4 APs may be as shown in FIG. 25b. However, since such a port layout is not defined in a table (e.g., [Table 15]) for codebook configuration currently, it may be difficult to configure a codebook for calculating a PMI using the remaining 4 APs.

Therefore, the present disclosure proposes embodiments for CSI-RS AP mapping and efficient codebook configuration to support PMI reporting when CSI reporting is configured by muting some CSI-RS APs.

Hereinafter, in the present disclosure, '/' means 'and', 'or', or 'and/or' depending on the context. In addition, in the following description, the expression that 'an AP is transmitted' is to be understood as 'a signal (e.g., CSI-RS) is transmitted through the AP in the corresponding resource' or 'the AP is used for transmitting the signal in the corresponding resourceC'.

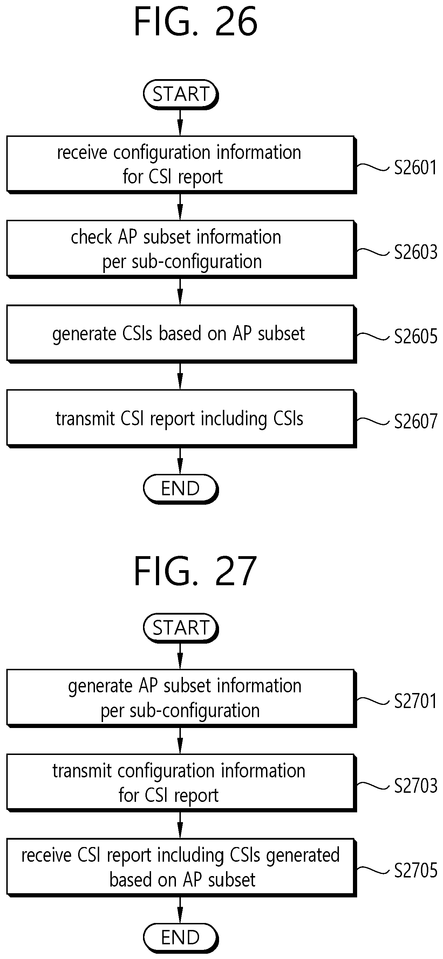

FIG. 26 illustrates an example of a procedure for reporting CSIs for sub-configurations according to an embodiment of the present disclosure. FIG. 26 exemplifies a method performed by a UE.

Referring to FIG. 26, in step S2601, the UE receives configuration information for CSI reporting. The configuration information may include information related to CSI-RS resources or resource sets, the number of APs, and power offsets related to CSI reporting. In addition, the configuration information may include a plurality of sub-configurations, and the sub-configurations may be related to at least one of different number of APs values, AP subsets, or power offset values.

In step S2603, the UE checks AP subset information for each sub-configuration. The configuration information received from the base station may include AP subset information for each sub-configuration. Specifically, the configuration information received from the base station may include a list of a plurality of sub-configurations, and the sub-configurations may include different AP subsets. That is, the sub-configurations may be associated with information on AP subsets. Accordingly, the UE may check AP subsets applied to the corresponding sub-configuration, that is, indexes of AP(s) turned on and/or indexes of AP(s) turned off, by using bitmap information. For example, an AP subset may be expressed in a format of a bitmap.

In step S2605, the UE generates CSIs based on AP subsets. Here, the CSI may include a precoding matrix indicator (PMI). To determine the PMI, selection of a codebook is required, and the codebook is selected based on an AP layout. Accordingly, the UE may determine the AP layout of the AP subset based on configured or predefined rules, select a codebook based on the determined layout, and determine the PMI based on the selected codebook. For this purpose, although not illustrated in FIG. 26, the UE may obtain or check restriction information on codebook-related parameters (e.g., N1, N2, Ng, etc.) corresponding to the AP subset. In addition, although not illustrated in FIG. 26, the UE may receive at least one CSI-RS through CSI-RS resources associated with configuration information for CSI reporting, measure a channel or interference using the received at least one CSI-RS, and determine the PMI based on the measurement result and the codebook. Accordingly, the UE may generate CSIs including PMIs for each sub-configuration.

In step S2607, the UE transmits a CSI report including CSIs. In other words, the UE feeds back CSIs for each sub-configuration to the base station. That is, the UE transmits the CSI report using resources indicated by configuration information for CSI reporting. Here, the CSI report may be transmitted through one message or a plurality of messages.

FIG. 27 illustrates an example of a procedure for receiving CSIs for sub-configurations according to an embodiment of the present disclosure. FIG. 27 exemplifies a method performed by a base station.

Referring to FIG. 27, in step S2701, the base station generates AP subset information for each sub-configuration. In providing configuration related to CSI reporting, the base station may provide a plurality of sub-configurations for one CSI-RS resource or CSI-RS resource set. At this time, the sub-configurations may be distinguished by at least one of the number of APs, AP subsets, or power offsets. For example, the base station may generate AP subset information for each sub-configuration that expresses AP subsets in the form of a bitmap.

In step S2703, the base station transmits configuration information for CSI reporting. The configuration information may include information related to CSI-RS resources or resource sets, the number of APs, and power offsets related to CSI reporting. In addition, the configuration information may include a plurality of sub-configurations, and the sub-configurations may be related to at least one of different number of APs values, AP subsets, or power offset values. At this time, the configuration information may include AP subset information for each sub-configuration generated in step S2701.

In step S2705, the UE generates CSIs based on AP subsets. Here, the CSI may include a precoding matrix indicator (PMI). To determine the PMI, selection of a codebook is required, and the codebook is selected based on an AP layout. Accordingly, the UE may determine the AP layout of the AP subset based on configured or predefined rules, select a codebook based on the determined layout, and determine the PMI based on the selected codebook. For this purpose, although not illustrated in FIG. 27, the UE may receive at least one CSI-RS through CSI-RS resources associated with configuration information for CSI reporting, measure a channel or interference using the received at least one CSI-RS, and determine the PMI based on the measurement result and the codebook. Accordingly, the UE may generate CSIs including PMIs for each sub-configuration.

In step S2705, the base station receives a CSI report including CSIs generated based on AP subsets. In other words, the base station receives CSIs for each sub-configuration from the UE.

For this purpose, although not illustrated in FIG. 27, the base station may transmit at least one CSI-RS through CSI-RS resources associated with configuration information for CSI reporting. In addition, the base station may receive a CSI report using resources indicated by configuration information for CSI reporting. Here, each CSI may include a PMI. To interpret the PMI, selection of a codebook is required, and the codebook is selected based on an AP layout. Accordingly, the base station may determine the AP layout of the AP subset based on configured or predefined rules, select a codebook based on the determined layout, and interpret the PMI based on the selected codebook.

As described with reference to FIG. 26 and FIG. 27, CSIs may be generated and transmitted for sub-configurations associated with AP subsets. Hereinafter, the present disclosure proposes embodiments for signaling for AP subsets and CSI generation based on AP subsets, as embodiments applicable to the procedure illustrated in FIG. 26.

### [Embodiment #1] Signaling scheme for on/off of APs of a base station, AP muting pattern, or port subset indication

This embodiment relates to a technique for saving energy of a base station by controlling on/off of some APs among N1 APs for a CSI-RS resource or a CSI-RS resource set consisting of N1 APs. Specifically, at least one of the following indication methods may be performed through DCI and/or MAC CE.

In addition, by receiving DCI or MAC CE that indicates switching between groups, between configuration indexes, between bitmap information, between numbers of APs, or directly indicates bitmap information, and after an application delay for a certain time, the UE may perform the indicated switching operation. For example, from the time of receiving the DCI or MAC CE, after K1 symbols, slots, or msec defined/configured in advance or reported through UE capability signaling, or from the nearest slot or slot-group boundary thereafter, the UE may perform the indicated switching operation. As another example, from the time of transmitting corresponding HARQ-ACK feedback after receiving MAC CE or DCI, after K2 msec, symbols, or slots defined/configured in advance or reported through UE capability signaling, or from the nearest slot or slot-group boundary thereafter, the UE may perform the indicated switching operation.

In addition to the signaling described below, a timer/duration and/or a time-domain pattern indicator indicating how long the indication is to be applied may be configured/indicated through DCI and/or MAC CE, or according to prior configuration/definition. For example, with respect to the timer/duration, the indication may be applied for T2 slots after T1 slots from a reference time point such as HARQ-ACK corresponding to reception of DCI or MAC CE, so that fewer than N1 APs are used for transmission, and thereafter, N1 APs may be indicated to be used for transmission. For example, with respect to the time-domain pattern indicator, the indication may be applied for T2 slots so that fewer than N1 APs are used for transmission, and may be indicated to repeat a T2/T3 slot pattern in which N1 APs are used for transmission for T3 slots. As another example, with respect to the time-domain pattern indicator, N1 APs may be used for transmission in even-indexed slots, and fewer than N1 AP(s) may be used for transmission in odd-indexed slots.
(1) On/off of APs per AP or per AP group may be indicated through a bitmap. For example, on/off of each AP may be controlled through an N1-bit bitmap. As another example, in consideration of signaling overhead, on/off of APs may be controlled through an X(<N1)-bit bitmap, and indexes of AP(s) linked to each bit may be predefined or determined by a rule. For example, according to a predefined setting or a rule, when X = 2, a first bit may be mapped to even indexes and a second bit may be mapped to odd indexes. As another example, according to a predefined setting or a rule, a first bit may be mapped to APs less than or equal to {N1/2}, and a second bit may be mapped to other APs.
   Each bit of the X-bit bitmap may correspond to one CDM group or a plurality of CDM groups illustrated in FIG. 21a to FIG. 21r described above. For example, as in FIG. 21g, when an 8-port CSI-RS is configured, the bitmap is configured with 4 bits, and each bit may be linked to one of four CDM groups. When the bitmap information is configured to '1010', the UE may assume that AP indexes 3000/3001/3004/3005 belonging to CDM groups 0/2 are in an on state and AP indexes 3002/3003/3006/3007 belonging to CDM groups 1/3 are in an off state, and may transmit CSI reporting for APs in the on state.
(2) On/off may be indicated through an N3-bit field, and for each code point exceeding 2^(N3-1) and less than or equal to 2^N3, which indexes of AP(s) are turned on/off may be predefined. In other words, information on on/off of K APs or information on which AP indexes are to be used to configure CSI reporting is predefined, and AP index(es) necessary for on/off or configuration related to CSI reporting may be indicated through a field consisting of ceiling{log2(K)} bits. Alternatively, information on on/off of K APs or information on which AP indexes are to be used to configure CSI reporting is predefined, and AP index(es) necessary for on/off or configuration related to CSI reporting may be indicated through a field consisting of a K-bit bitmap. Here, information on on/off of K APs or AP index(es) necessary for configuration related to CSI reporting may specifically include N1-bit (e.g., the number or maximum number of APs of corresponding CSI-RS) bitmap information or X(<N1)-bit bitmap information.

Meanwhile, in the N1-port CSI-RS resource configuration, when N2(<N1) port(s) are additionally configured, N1-bit or X-bit bitmap information may correspond to each N2-port information. For example, as in FIG. 21g, when an 8-port CSI-RS is configured, the bitmap is composed of 4 bits, and each bit may be linked to one of four CDM groups. Additionally, when numbers of APs such as 4 APs and 2 APs are added to the CSI-RS resource or CSI-RS resource set configuration, in the case of 4 ports, bitmap information of '1010' may be linked, and in the case of 2 ports, bitmap information of '1000' may be linked. As another example, as in FIG. 21g, when an 8-port CSI-RS is configured, the bitmap is configured with 4 bits, and each bit may be linked to one of four CDM groups. In this case, in addition to bitmap information of '1111', bitmap information of '1010' representing 4 ports and bitmap information of '1000' representing 2 ports may be predefined in the CSI-RS resource configuration or CSI-RS resource set configuration. Accordingly, through a 2-bit field or a 3-bit bitmap field using DCI or MAC CE, it may be indicated whether CSI reporting corresponding to 8 ports, 4 ports, or 2 ports is to be transmitted, or which bitmap information among '1111', '1010', or '1000' is to be applied for transmitting the corresponding CSI reporting.

When at least one sub-configuration is configured in configuration related to CSI reporting, the signaling methods described above may be used for port subset indication. As in the example of FIG. 20, sub-configuration #1 is associated with the number of A1 APs, and sub-configuration #2 may be associated with the number of A2 APs. At this time, for port subset indication of sub-configuration #1/sub-configuration #2, a bitmap (e.g., a 32-bit bitmap or an X-bit bitmap in which each bit is mapped to one or more AP indexes by a predefined rule) may be configured for each sub-configuration.

Alternatively, port subset indication for each sub-configuration may be expressed through Y-bit information, and for each code point exceeding 2^(Y-1) and equal to or less than 2^Y, which indexes of AP(s) are turned on/off may be predefined or pre-defined in the specification. Here, in Y-bit information, Alt1) both the numbers of APs and indexing information may be included, or Alt2) only indexing information is included and separate information is configured for each number of APs. For Alt2, for example, Y1-bit information for 16 ports and Y2-bit information for 8 ports may be predefined or pre-defined in the specification. For sub-configuration #n, if the UE may recognize that the corresponding number of APs is 16 through another parameter (e.g., codebookConfig), Y1-bit information may be additionally configured in the corresponding sub-configuration so that the UE may know which 16 APs are turned on. Similarly, for sub-configuration #k, if the UE may recognize that the corresponding number of APs is 8 through another parameter (e.g., codebookConfig), Y2-bit information may be additionally configured in the corresponding sub-configuration so that the UE may know which 8 APs are turned on.

In the methods described above, turning on specific APs may mean that the UE, in performing CSI reporting, reports only CSI information (e.g., RI, PMI, CQI, etc.) corresponding to the APs in the on state. For this purpose, configuration of codebook-related configuration information (e.g., codebookConfig) corresponding to the CSI-RS resource or CSI-RS resource set may need to be individually configured for all candidates of the number of APs that may be turned on. For example, as some APs are turned on and off according to the methods described above, three different codebookConfigs may be individually configured for the CSI-RS resource or CSI-RS resource set in which N1, N2, or N3 AP(s) may be turned on, which means that codebook subset restriction and/or RI restriction may be differently configured depending on each number of APs. Therefore, when the UE receives signaling indicating that only N2 APs are turned on for the CSI-RS resource or CSI-RS resource set according to the proposed technique, the UE may calculate CSI for the CSI-RS resource or CSI-RS resource set based on the codebookConfig configuration corresponding to the N2 APs, and may report the calculated CSI information to the base station. The CSI information may include, in particular within CSI part 1 information, information on which the CSI report corresponds to the number of APs may be included, and the information may be the bitmap information described above or may indicate which of K predefined AP on/off information items (e.g., a number of APs information, bitmap information, etc.) is applied.

This embodiment #1 relates to on/off signaling for APs, but may also be extended to on/off signaling for panels or TRPs.

### [Embodiment #2] CSI-RS resource configuration scheme according to on/off of APs of a base station, muting pattern, or port subset indication

When only some of a plurality of APs belonging to a CDM group are turned off, a CSI-RS resource may be reduced in consideration of the number of OCCs corresponding to the APs turned on and time/frequency-domain dimensions. [Table 17] is an excerpt from the TS 38.211 v17.4.0 specification document regarding resource mapping of CSI-RS.

**[Table 17]**

| | | |
|---|---|---|
| 7.4.1.5.3 Mapping to physical resources | | |
| For each CSI-RS configured, the UE shall assume the sequence *r*(*m*) being mapped to resources elements (*k*, *l*)*_{p,µ}* according to | | |
| | ${a}_{k , l}^{\left(p, μ\right)} = {β}_{CSIRS} {w}_{f} \left(k′\right) ⋅ {w}_{t} \left(l′\right) ⋅ {r}_{l , {n}_{s , f}} \left(m′\right)$ | |
| | $m ′ = \left[nα\right] + k ′ + \left[\frac{\overline{k} ρ}{{N}_{sc}^{RB}}\right]$ | |
| | $k = n {N}_{sc}^{RB} + \overline{k} + k ′$ | |
| | $l = \overline{l} + l ′$ | |
| | $a = \left\{\begin{matrix}ρ for X = 1 \\ 2 ρ for X > 1\end{matrix}\right.$ | |
| | n = 0, 1,... | |
| when the following conditions are fulfilled: | | |
| | - the resource element (*k, l*)*_{p,µ}* is within the resource blocks occupied by the CSI-RS resource for which the UE is configured | |
| The reference point for *k* = 0 is subcarrier 0 in common resource block 0. | | |
| The value of *ρ* is given by the higher-layer parameter *density* in the *CSI-RS-ResourceMapping* IE or the *CSI-RS-CellMobility* IE and the number of ports *X* is given by the higher-layer parameter *nrofPorts.* For NZP CSI-RS configured by the *TRS-ResourceSet* IE, the density *ρ* = 3 and number of ports *X* = 1. | | |
| The UE is not expected to receive CSI-RS and DM-RS on the same resource elements. | | |
| The UE shall assume *β*_{CSIRS} > 0 for a non-zero-power CSI-RS where *β*_{CSIRS} is selected such that the power offset specified by the higher-layer parameter *powerControlOffsetSS* in the *NZP-CSI-RS-Resource* IE or in the *TRS-ResourceSet* IE, if provided, is fulfilled. | | |
| The quantities *k', l', w_{f}*(*k'*), and *wₜ*(*l'*) are given by Tables 7.4.1.5.3-1 to 7.4.1.5.3-5 where each (*k̅*, *l̅*) in a given row of Table 7.4.1.5.3-1 corresponds to a CDM group of size 1 (no CDM) or size 2, 4, or 8. The CDM type is provided by the higher | | |
| layer parameter *cdm-Type* in the *CSI-RS-ResourceMapping* IE. For NZP CSI-RS configured by the *TRS-ResourceSet* IE, the CDM type is 'noCDM'. The indices *k'* and *l'* index resource elements within a CDM group. | | |
| The time-domain locations *l*₀ ∈ {0,1, ..., 13} and *l*₁ ∈ {2, 3, ..., 12} are provided by the higher-layer parameters *firstOFDMSymbolInTimeDomain* and *firstOFDMSymbolInTimeDomain2,* respectively, in the *CSI-RS-ResourceMapping* IE or the *CSI-RS-ResourceConfigMobility* IE and defined relative to the start of a slot. For NZP CSI-RS configured by *TRS-ResourceSet* IE, the time-domain location *l*₀ ∈ {0,1, ..., 13} i s provided by the higher-layer parameter *firstOFDMSymbolInTimeDomain* or*firstOFDMSymbolInTimeDomain*+4. | | |
| The frequency-domain location is given by a bitmap provided by the higher-layer parameter *frequencyDomainAllocation* in the *CSI-RS-ResourceMapping* IE, the *CSI-RS-ResourceConfigMobility* IE, or the *TRS-ResourceSet* IE, with the bitmap and value of *kᵢ* in Table 7.4.1.5.3-1 given by | | |
| | - [*b*₃ ··· *b*₀], *k*_{*i*-1} = *f*(*i*) for row 1 of Table 7.4.1.5.3-1 | |
| | - [*b*₁₁ ··· *b*₀], *k*_{*i*-1} *= f*(*i*) for row 2 of Table 7.4.1.5.3-1 | |
| | - [*b*₂ ··· *b*₀], *k*_{*i*-1} = 4*f*(*i*) for row 4 of Table 7.4.1.5.3-1 | |
| | - [*b*₅ ··· *b*₀], *k*_{*i*-1} = 2*f*(*i*) for all other cases | |
| where *f*(*i*) is the bit number of the *i*^{th} bit in the bitmap set to one, repeated across every [1/*ρ*] of the resource blocks configured for CSI-RS reception by the UE. The starting position and number of the resource blocks in which the UE shall assume that CSI-RS is transmitted are given by the higher-layer parameters *freqBand* and *density* in the *CSI-RS-ResourceMapping* IE for the bandwidth part given by the higher-layer parameter *BWP-Id* in the *CSI-ResourceConfig* IE or given by the higher-layer parameters *nrofPRBs* in the *CSI-RS-CellMobility* IE where the the *startPRB* given by *csi-rs-MeasurementBW* is relative to common resource block 0. For NZP CSI-RS configured by *TRS-ResourceSet* IE, the starting position and number of the resource blocks in which the CSI-RS can be transmitted are given by the higher-layer parameters *nrofRBs,* and *startingRB* in the *TRS-ResourceSet* IE, where *startingRB* is relative to common resource block 0 and the density *ρ =* 3. | | |
| The UE shall assume that a CSI-RS is transmitted using antenna ports *p* numbered according to | | |
| | | *p* = 3000 + *s* + *jL*; |
| | | *j* = 0,1,...··,*N*/*L* - 1 |
| | | *s* = 0,1,...*,L* - 1; |
| where *s* is the sequence index provided by Tables 7.4.1.5.3-2 to 7.4.1.5.3-5, *L* ∈ {1,2,4,8} is the CDM group size, and *N* is the number of CSI-RS ports. The CDM group index *j* given in Table 7.4.1.5.3-1 corresponds to the time/frequency locations (*k̅*, *l̅*) for a given row of the table. The CDM groups are numbered in order of increasing frequency domain allocation first and then increasing time domain allocation. | | |
| For a CSI-RS resource configured as periodic or semi-persistent by the higher-layer parameter *resourceType,* configured by the higher-layer parameter *CSI-RS-CellMobility* or configured by the higher-layer parameter *TRS-ResourceSet-r17,* the UE shall assume that the CSI-RS is transmitted in slots satisfying | | |
| $\left({N}_{slot}^{frame , μ}{n}_{f}+{n}_{s , f}^{μ}-{T}_{offset}\right) {modT}_{CSI - RS} = 0$ | | |
| where the periodicity *T*_{CSI-RS} (in slots) and slot offset *T*_{offset} are obtained from the higher-layer parameter *CSI-ResourcePeriodicityAndOffset, slotConfig* or *periodicityAndOffset-r17.* The UE shall assume that CSI-RS is transmitted in a candidate slot as described in clause 11.1 of [5, TS 38.213], clause 10.4B of [5, TS 38.213]. | | |
| The UE may assume that antenna ports within a CSI-RS resource are quasi co-located with QCL Type A, Type D (when applicable), and average gain. | | |

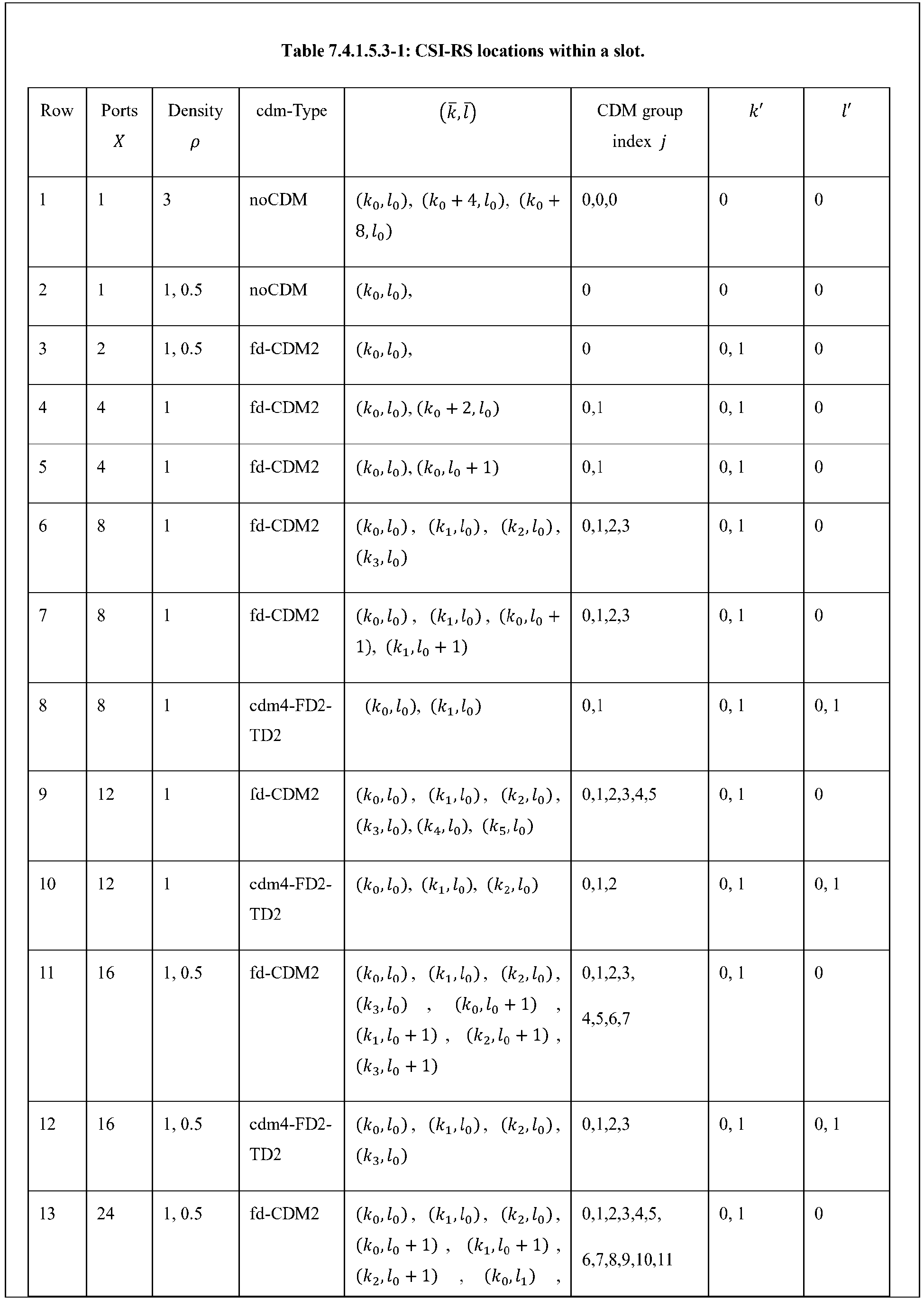

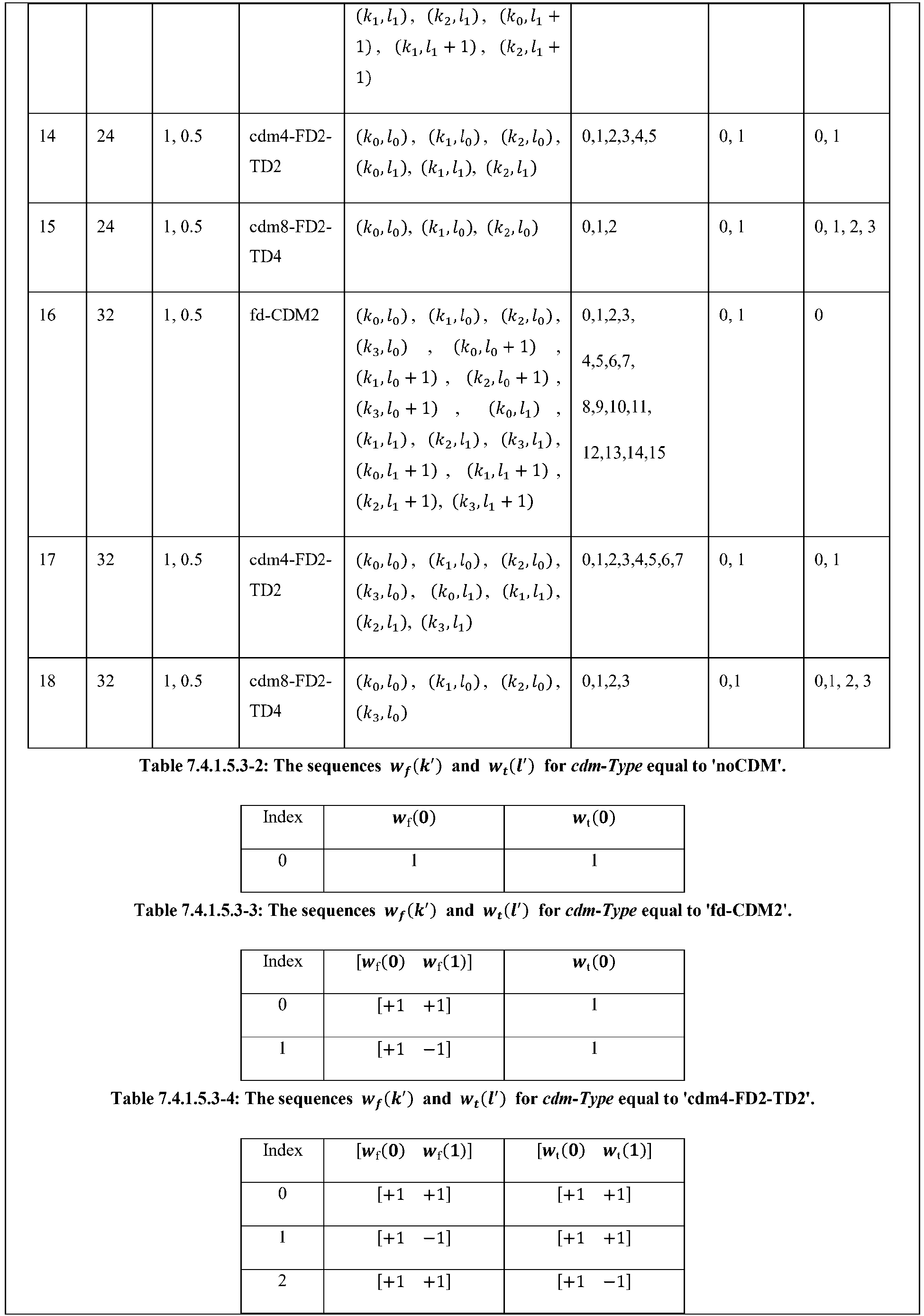

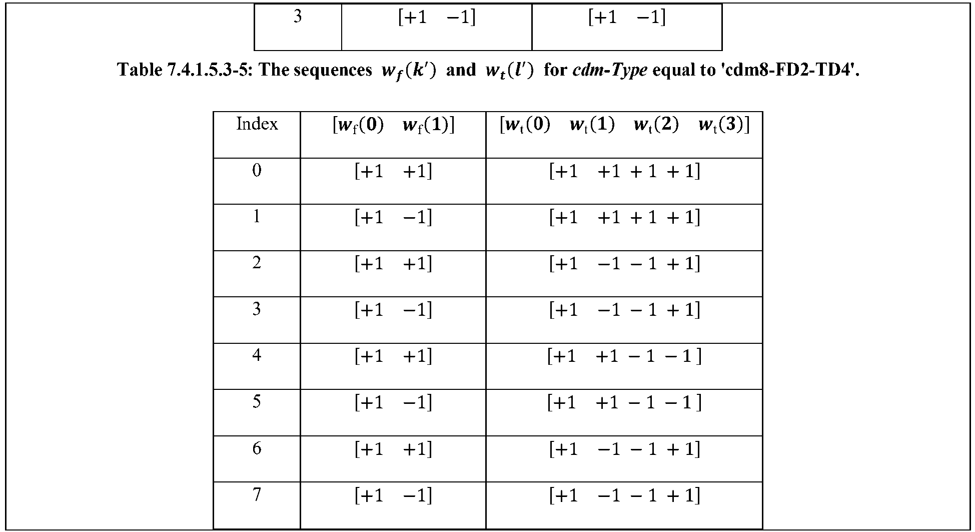

In [Table 17], as confirmed from the formula for determining the AP index p, i.e., p = 3000 + s + j × L, the order of AP indices within one CDM group is determined by the sequence index s, and the sequence index s is determined by [Table 17], Tables 7.4.1.5.3-2 through 7.4.1.5.3-5.

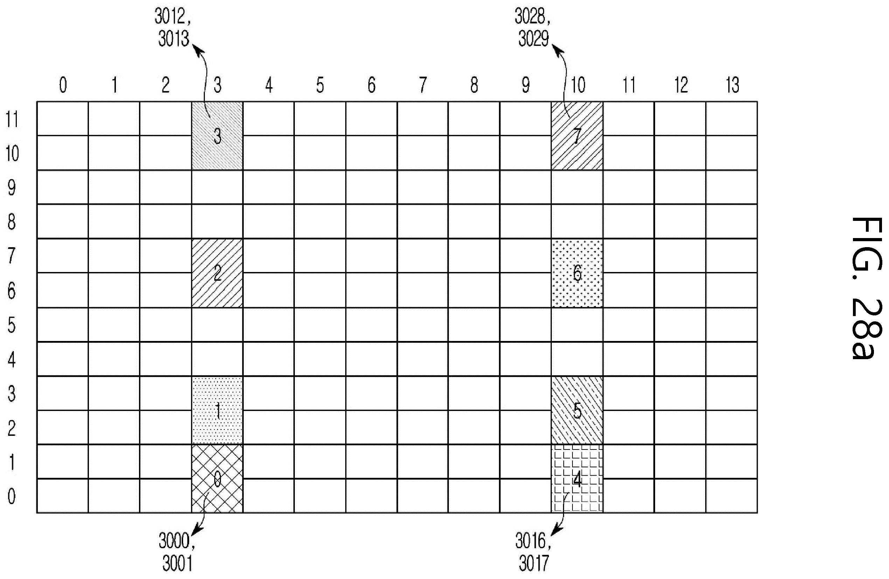

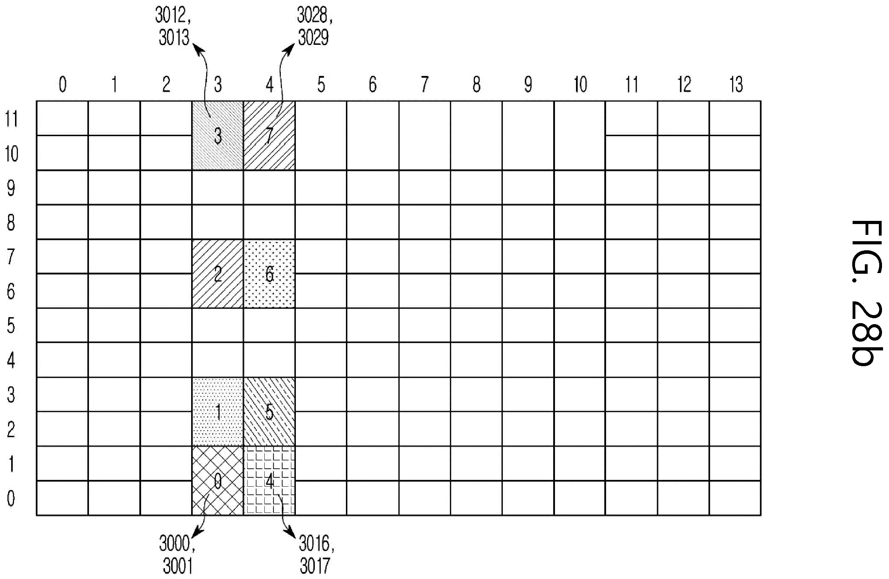

For example, as shown in FIG. 21q, when cdm4-FD2-TD2 is applied for a 32-port CSI-RS, AP indices 3000/3001/3002/3003 transmitted in CDM group #0 may correspond respectively to indices 0/1/2/3 of Table 7.4.1.5.3-4 in [Table 17]. If AP indices 3002/3003 are off and AP indices 3000/3001 are on, or conversely if AP indices 3002/3003 are on and AP indices 3000/3001 are off, the time-domain OCC is the same and only the frequency-domain OCC is orthogonal. In this case, the time-domain resource corresponding to CDM group #0 may be sufficient with one symbol rather than two symbols. Utilizing this, if among AP indices n/n+1/n+2/n+3 in one CDM group, AP indices n+2/n+3 are off and AP indices n/n+1 are on, or conversely if AP indices n/n+1 are off and AP indices n+2/n+3 are on, the two symbols of the time-domain resource corresponding to the CDM group may be replaced with one symbol. FIG. 28a and FIG. 28b illustrate examples of AP mapping of CSI-RS based on on/off of CDM groups according to an embodiment of the present disclosure. As shown in FIG. 28a, the base station may transmit a CSI-RS configured with the remaining 16 ports through two symbols such as symbol #3 and symbol #10, and the UE may transmit CSI reporting. Alternatively, in order for the base station to minimize the RF-on time for CSI-RS transmission, by narrowing the interval between transmission symbols, as shown in FIG. 28b, the base station may transmit a CSI-RS configured with the remaining 16 ports through two symbols such as symbol #3 and symbol #4, and the UE may transmit CSI reporting.

As described above, the method of shortening part of time-domain and/or frequency-domain resources of the corresponding CDM group by utilizing OCC characteristics of remaining CSI-RS ports within the same CDM group may be applied also to other number of APs and/or other CDM types. For example, when fd-CDM2 is applied, if one AP among AP indices n/n+1 existing in one CDM group is off, only the AP of on state may be transmitted in one of the two REs corresponding to the CDM group, and the remaining RE may not be mapped with a CSI-RS AP. As another example, when cdm8-FD2-TD4 is applied, if AP indices n+4/n+5/n+6/n+7 among AP indices n/n+1/n+2/n+3/n+4/n+5/n+6/n+7 existing in one CDM group are off and AP indices n/n+1/n+2/n+3 are on, the APs of on state may be transmitted in two of the four symbols corresponding to the CDM group, and the remaining symbols may not be mapped with CSI-RS APs.

As described above, although only some APs within one CDM group may be off, there may also be a case where all APs belonging to the CDM group are off. As described above, even if only some APs are off, variation may occur in time/frequency-domain resources corresponding to the CDM group, or as the entire CDM group is off, when the resources allocated to the corresponding CDM group are not used as CSI-RS, utilizing the remaining resources for other DL transmission (e.g., PDSCH transmission) from the perspective of the base station may contribute to increasing system efficiency. To implement this efficiently, a separate set of rate matching pattern(s) may be associated depending on a CSI-RS muting pattern or AP on/off pattern. For example, as in [Embodiment #1], when information related to K AP on/off patterns or information related to which AP indices are used to configure CSI reporting is preconfigured, a set of rate matching pattern(s) corresponding to each pattern or each index combination may be associated. If K = 2, a set #1 of rate matching patterns corresponding to information related to a first AP on/off pattern may be configured, and a set #2 of rate matching patterns corresponding to information related to a second AP on/off pattern may be configured. If information related to the first AP on/off pattern is indicated through DCI or MAC-CE, the UE may assume that the rate matching patterns included in set #1 are valid and may receive the PDSCH. In this case, with respect to REs indicated as rate matching patterns, the UE may determine that the REs are not available for receiving the PDSCH. In addition, that a specific set of rate matching patterns is valid may mean that, if the corresponding rate matching pattern is configured only through RRC signaling, the UE may consider the corresponding pattern for receiving the PDSCH. Alternatively, when the corresponding rate matching patterns are configured by indication through DCI, the UE that has received the corresponding DCI indication may assume that only the rate matching patterns included in the corresponding set may be indicated through DCI.

### [Embodiment #3] Mapping scheme for physical resources of CSI-RS

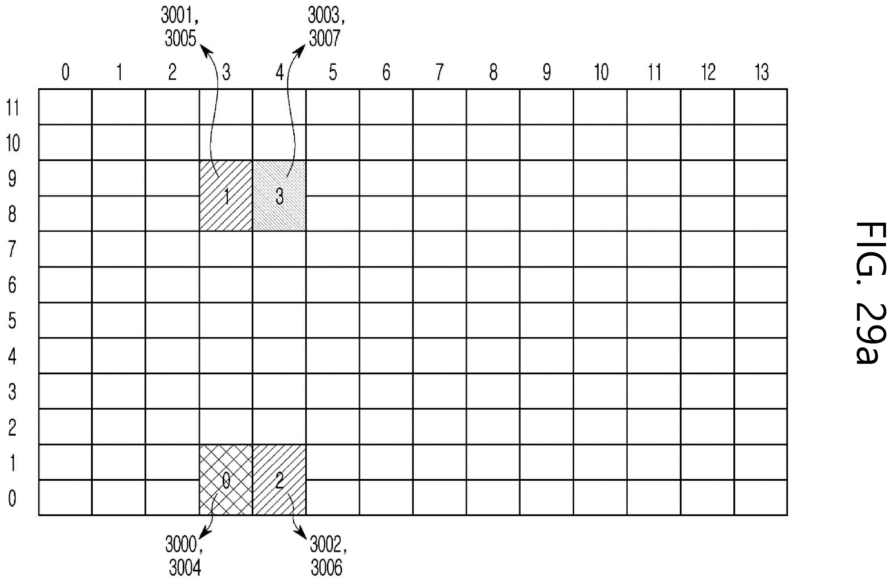

According to the formula in [Table 17], i.e., p = 3000 + s + j × L, AP indexing is performed in such a manner that, after completing indexing for all APs belonging to a specific CDM group, indexing is performed for APs belonging to the next CDM group. In this manner, when only the remaining APs are left after some APs are muted, there may be difficulty in directly reusing the existing codebook. Accordingly, the present disclosure proposes a new AP indexing method. The specific formula is p = 3000 + s × N/L + j, and definitions for s, N, L, and j are the same as in [Table 17]. That is, s is a sequence index provided by Tables 7.4.1.5.3-2 to 7.4.1.5.3-5, L is a CDM group size of 1, 2, 4, or 8, and N is the number of CSI-RS ports. The CDM group index*j* given in Table 7.4.1.5.3-1 corresponds to a time/frequency location (*k̅*, *l̅*) for a given row of Table 7.4.1.5.3-1. The CDM groups are numbered in order of increasing frequency domain allocation first and then increasing time domain allocation. In this mapping scheme, indexing is performed for one AP belonging to a specific CDM group, then indexing is performed for one AP belonging to the next CDM group, and this process is repeated. For FIG. 21g, when the aforementioned mapping scheme is applied, a result as shown in FIG. 29a is obtained.

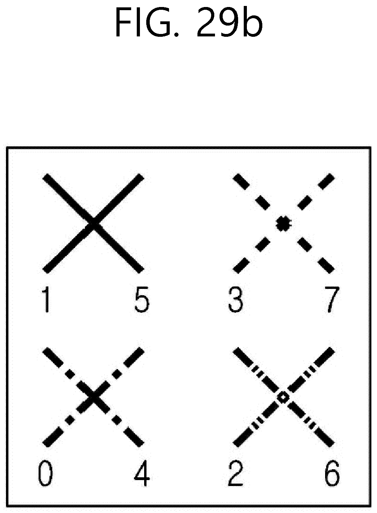

FIG. 29a and FIG. 29b illustrate examples of AP mapping of CSI-RS and a port layout according to frequency-domain-first and time-domain-first allocation, in accordance with an embodiment of the present disclosure. Referring to FIG. 29a, in each of RE groups or CDM groups indicated by '0', '1, '2', or '3', two APs are CDMed by applying frequency-domain OCC, such that CSI-RS APs #3000 and #3004 are mapped to CDM group #0, CSI-RS APs #3001 and #3005 are mapped to CDM group #1, CSI-RS APs #3002 and #3006 are mapped to CDM group #2, and CSI-RS APs #3003 and #3007 are mapped to CDM group #3. In addition, in this case, the mapping of APs for codebook configuration, when (N1, N2) = (2, 2), is as shown in FIG. 29b.

In the example of FIG. 29a, when all APs belonging to CDM group #0/2 are turned off, even if the codebook is configured only with the remaining APs, the structure becomes (N1, N2) = (2, 1). Therefore, there is an advantage that the structure supported in the existing NR specification may be reused as it is.

In this embodiment, the newly proposed AP mapping scheme may have advantages or disadvantages depending on coexistence with legacy UEs, whether a single panel or multiple panels are used, and the maximum number of APs. Therefore, in configuring a specific CSI-RS resource, the base station may additionally configure whether to apply the legacy mapping scheme or to apply the new mapping scheme according to the proposed technique. Alternatively, the mapping scheme may be determined by a predefined rule, for example, when a codebook for a single panel is configured, the mapping method according to the proposed technique may be applied, and when a codebook for multiple panels is configured, the legacy mapping method may be applied by the rule. As another example, in the case of N1-port (e.g., N1 = 32) CSI-RS, the legacy mapping scheme may be applied, and in the case of N2-port (e.g., N2 = 16) CSI-RS, the mapping scheme according to the proposed technique may be applied by the rule.

### [Embodiment #4] CSI-RS AP indexing scheme considering on/off, muting pattern, or port subset indication of APs of the base station, and codebook structure

When the number of APs of a CSI-RS resource or a CSI-RS resource set corresponding to a specific CSI report may vary due to signaling of on/off, muting pattern, or port subset indication of APs of the base station, configuration information related to codebook configuration or codebook subset restriction corresponding to each number of APs (e.g., parameters such as n1-n2 for a single-panel Type-1 codebook, ng-n1-n2 for a multi-panel Type-1 codebook, and n1-n2-codebookSubsetRestriction for a Type-2 codebook) may be required. Here, the codebook subset restriction mainly refers to a technique that may reduce PMI calculation complexity of the UE by allowing omission of PMI calculation related to some APs in consideration of interference with neighboring cells and the like. If the number of APs or the maximum number of APs of a CSI-RS resource or a CSI-RS resource set corresponding to the CSI report is 32, in the case of a single-panel Type-1 codebook, a four-four-TypeI-SinglePanel-Restriction parameter, i.e., (N1, N2) = (4, 4), may be configured as 256-bit bitmap information. Additionally, if the CSI-RS resource may be changed to a 16-port by signaling related to on/off, muting pattern, or port subset indication of APs, assuming the same type of codebook, a four-two-TypeI-SinglePanel-Restriction parameter, i.e., (N1, N2) = (4, 2), may be configured as 128-bit bitmap information. Alternatively, even if the number of APs differs by sub-configuration due to a configuration such as Framework #3, bitmap information for codebook subset restriction may be provided as single information in consideration of RRC signaling overhead.

As described above, when the four-four-TypeI-SinglePanel-Restriction parameter, i.e., (N1,N2) = (4,4), is configured as 256-bit bitmap information, another sub-configuration within the same CSI report configuration may configure 16 ports. For the 256-bit information, the UE may identify which bit information corresponds to which AP index based on the AP layout and oversampling factor. Furthermore, since the UE may identify which AP indices are turned on through port subset indication information, the UE may extract codebook subset restriction information corresponding to 16 ports based on the given 256-bit bitmap information. Based on the extracted information, the UE may calculate PMI information for the sub-configuration corresponding to 16 ports by performing codebook subset restriction.

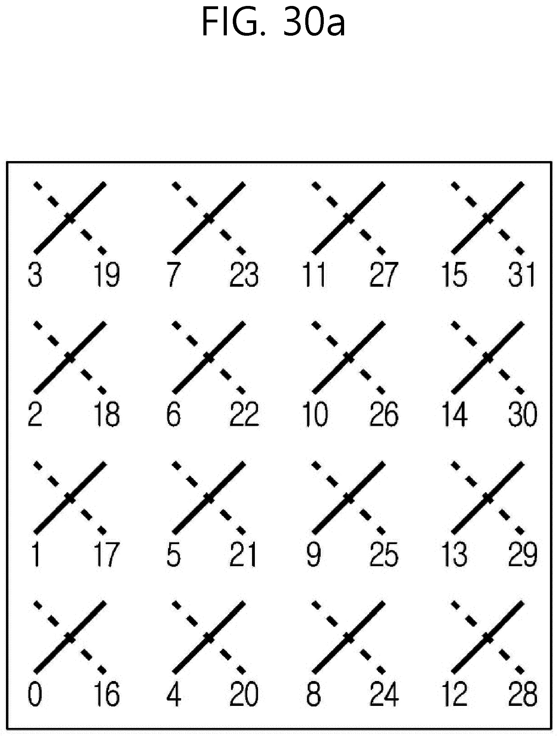

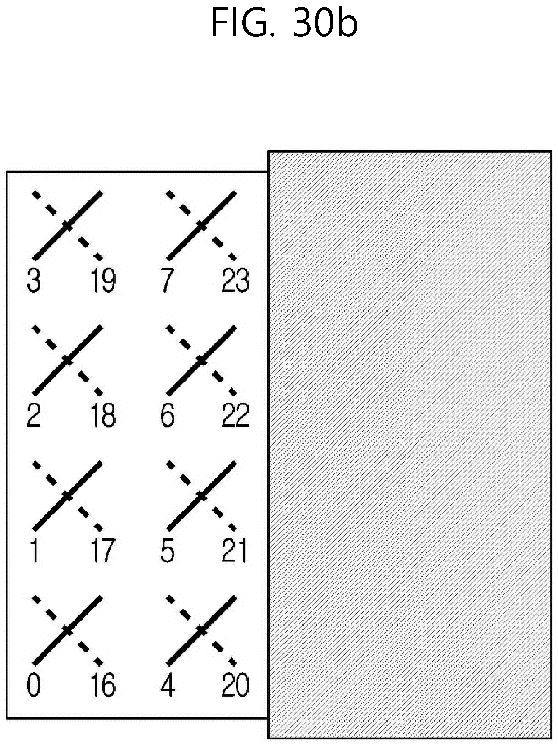

As shown in FIG. 21q, when a 32-port CSI-RS is configured, AP indexing for the (4,4) port layout may be performed as shown in FIG. 30a. If an off is indicated for CDM groups 2/3/6/7 of the 32-port CSI-RS, a port layout configured with the remaining APs may be determined as shown in FIG. 30b. However, the port layout consisting of the remaining APs, such as in Figure 30b, is (N1,N2) = (2, 4), which is a structure not supported by the current NR standard. Therefore, the present disclosure proposes embodiments for aligning the result as in FIG. 30b into the structure of (N1,N2) = (4,2) as shown in FIG. 23f.

[Embodiment #4-1] A method may be applied in which the remaining AP indices are arranged in ascending or descending order and then mapped one-to-one in sequence with the indices on the port layout that configures the codebook. For example, the UE may assume that the AP indices 0, 1, 2, 3, 4, 5, 6, 7, 16, 17, 18, 19, 20, 21, 22, and 23 of FIG. 30b are sequentially mapped one-to-one to 0 through 15 of FIG. 23f, calculate the PMI, and then report it to the base station. That is, with respect to the APs included in the AP subset, in other words, the APs in the on-state, the indices are mapped starting from index 0, in ascending order of the indices allocated within the entire set. In other words, the APs included in the AP subset are mapped to consecutive APs starting from an index start value (e.g., 0) in ascending order of the indices allocated within the entire set. Here, index 0 may be understood as 3000+0.

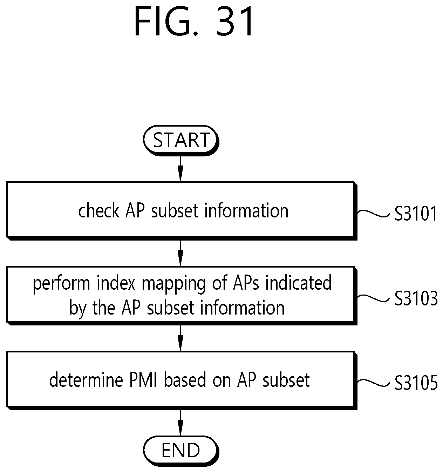

FIG. 31 illustrates an example procedure for mapping APs based on an AP subset of a sub-configuration according to an embodiment of the present disclosure. FIG. 31 exemplifies a method performed by a UE.

Referring to FIG. 31, in step S3101, the UE checks AP subset information. In order to generate CSI for one sub-configuration among a plurality of sub-configurations, the UE checks information related to the AP subset associated with the sub-configuration. The AP subset may be indicated in the form of a bitmap, each bit of the bitmap corresponds to APs, and the positions of the bits set to '1' indicate the AP(s) used, i.e., the AP(s) in the on-state, in the corresponding sub-configuration.

In step S3103, the UE performs index mapping for the APs indicated by the AP subset information. In other words, the UE performs mapping between the APs included in the AP subset and the AP indices. That is, the UE re-indexes the APs indicated by the AP subset information. The AP subset is a subset of APs associated with the corresponding CSI reporting. Therefore, if the indexing result of the entire APs is used without change, the APs in the AP subset may have discontinuous indices. Accordingly, in order for the APs in the AP subset to have consecutive indices, the UE may re-map the indices to the APs. For example, for the derivation of PMI, antenna ports corresponding to all bits with a value of 1 in the bitmap are mapped to consecutive antenna ports starting at CSI-RS antenna port 3000 in increasing order of the bit positions in the bitmap.

In step S3105, the UE determines a PMI based on the AP subset. The UE may determine an AP layout corresponding to the AP subset based on the AP layout corresponding to the entire APs and the index mapping result of the AP subset, select a codebook corresponding to the AP layout, and determine a PMI based on the selected codebook. To this end, although not illustrated in FIG. 31, the UE may receive CSI-RSs from the base station.

As described with reference to FIG. 31, the UE may determine AP indices for the APs indicated by the AP subset information. In this case, in order for the base station to interpret a PMI received from the UE, the base station has to select the same codebook as the UE, and accordingly, the base station may perform index mapping for the APs of the AP subset in the same manner.

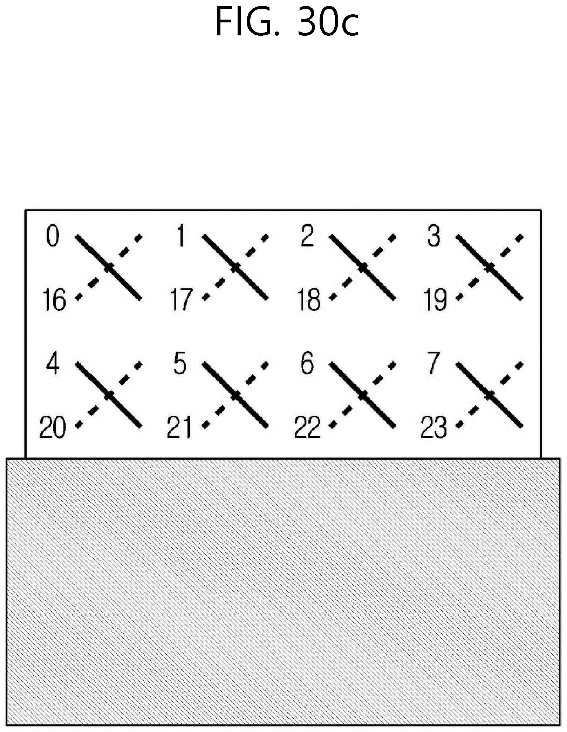

[Embodiment #4-2] A method of adjusting to an (N1,N2) combination by rotating a port layout composed of the remaining APs by 90 degrees clockwise or counterclockwise may be applied. For example, the UE may assume an (N1,N2) = (4, 2) port layout based on the AP indices as shown in FIG. 30c by rotating the result as shown in FIG. 30b by 90 degrees clockwise, calculate a PMI, and report it to the base station. That is, the UE may select a codebook and determine a PMI based on a port layout with changed N1 and N2, in which the value of N1 and the value of N2 of the port layout of the remaining APs are interchanged.

For a codebook type based on multi-panel, the [Embodiment #4-1] described above and [Embodiment #4-2] may be applied to each panel. In addition, even after applying a new AP mapping method as described in [Embodiment #3], the present [Embodiment #4] may be applied.

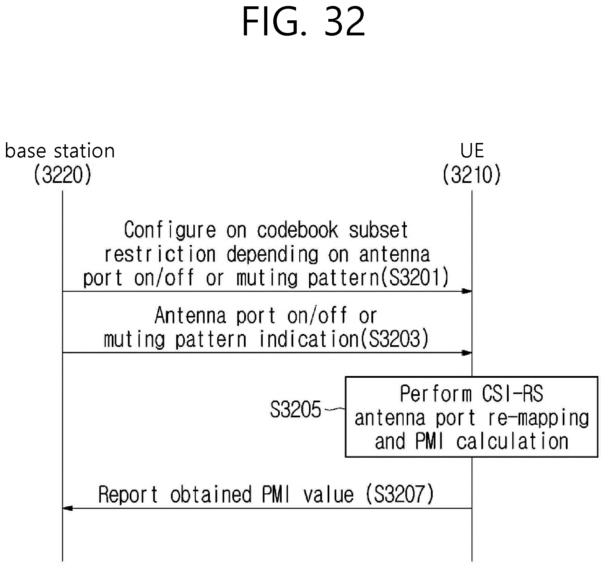

FIG. 32 illustrates an example of a procedure for transmitting a CSI report based on sub-configurations according to an embodiment of the present disclosure. FIG. 32 illustrates signal exchanges between a UE 3210 and a base station 3220.

Referring to FIG. 32, in step S3201, the base station 3220 transmits configuration information on codebook subset restriction dependent on AP on/off or muting patterns to the UE 3210. That is, a plurality of numbers of APs values may be configured for a CSI-RS resource or a CSI-RS resource set associated with a specific CSI report. In this case, information related to codebook subset restriction for each number of APs may be pre-configured.

In step S3203, the base station 3220 transmits an indicator on AP on/off or muting patterns to the UE 3210. For example, the base station 3220 may transmit configuration information related to a CSI report, and the configuration information may include information related to an AP subset as an indicator on AP on/off or muting patterns.

In step S3205, the UE 3210 performs CSI AP remapping and PMI calculation. When a specific number of APs is indicated by the instruction of the base station 3220, the UE 3210 may determine a port layout corresponding to the number of APs. For example, the UE 3210 may determine the port layout according to [Embodiment #4]. Then, the UE 3210 may modify AP indexing based on pre-configured information on codebook subset restriction.

In step S3207, the UE 3210 reports the obtained PMI value. In other words, the UE 3210 transmits a CSI report including the PMI value. The UE 3210 may calculate the PMI value based on the port layout determined in step S3205, and may transmit a CSI report including the PMI value to the base station 3220.

### [Embodiment #5] non-PMI indication scheme

Hereinafter, [Table 18] shows content related to UE operation according to a configuration related to CSI reporting, extracted from TS 38.214. Referring to [Table 18] below, when, in configuration information related to CSI reporting (e.g., CSI-ReportConfig), a parameter for a reporting item (e.g., report quantity) is configured as 'cri-RI-CQI', a port index order for each rank may be determined according to pre-configured/defined rules. In a conventional CSI-ReportConfig, CSI-RS resources configured with the same number of APs may be configured for CMR. However, when a CSI framework such as [Embodiment #3] described above is introduced for NES, different values of the number of APs may be configured for each sub-configuration by port subset indication information. In this case, an existing non-PMI indication mechanism that operates based on the number of APs within a CSI-RS resource configuration may not operate properly.

**[Table 18]**

| | |
|---|---|
| If the UE is configured with a *CSI-ReportConfig* with the higher layer parameter *reportQuantity* set to 'cri-RI-CQI', | |
| | - if the UE is configured with higher layer parameter *non-PMI-PortIndication* contained in a *CSI-ReportConfig, r* ports are indicated in the order of layer ordering for rank r and each CSI-RS resource in the CSI resource setting is linked to the *CSI-ReportConfig* based on the order of the associated *NZP-CSI-RS-ResourceId* in the linked CSI resource setting for channel measurement given by higher layer parameter *resourcesForChannelMeasurement.* The configured higher layer parameter *non-PMI-PortIndication* contains a sequence ${p}_{0}^{\left(1\right)} , {p}_{0}^{\left(2\right)} , {p}_{1}^{\left(2\right)} , {p}_{0}^{\left(3\right)} , {p}_{1}^{\left(3\right)} , {p}_{2}^{\left(3\right)} , … , {p}_{0}^{\left(R\right)} , {p}_{1}^{\left(R\right)} , … , {p}_{R - 1}^{\left(R\right)}$ of port indices, where ${p}_{0}^{\left(ν\right)} , … , {p}_{ν - 1}^{\left(ν\right)}$ are the CSI-RS port indices associated with rank v and *R* ∈ {1,2,..., *P*} where*P* ∈ {1,2,4,8} is the number of ports in the CSI-RS resource. The UE shall only report RI corresponding to the configured fields of *PortIndexFor8Ranks.* |
| $\left\{0,…,ν-1\right\}$ | - if the UE is not configured with higher layer parameter *non-PMI-PortIndication,* the UE assumes, for each CSI-RS resource in the CSI resource setting linked to the *CSI-ReportConfig,* that the CSI-RS port indices ${p}_{0}^{\left(ν\right)} , … , {p}_{ν - 1}^{\left(ν\right)} =$ are associated with ranks *v* = 1,2,...,*P* where *P* ∈ {1,2,4,8} is the number of ports in the CSI-RS resource. |
| | - When calculating the CQI for a rank, the UE shall use the ports indicated for that rank for the selected CSI-RS resource. The precoder for the indicated ports shall be assumed to be the identity matrix scaled by $\frac{1}{\sqrt{ν}}$. |

Since the number of APs corresponding to each sub-configuration may be different, one of the embodiments described below may be applied, or different embodiments may be applied for each sub-configuration. The embodiments described below may be applied in a situation where, when at least one sub-configuration configured within a CSI report configuration exists, bitmap-based port subset indication information is configured for at least one sub-configuration.

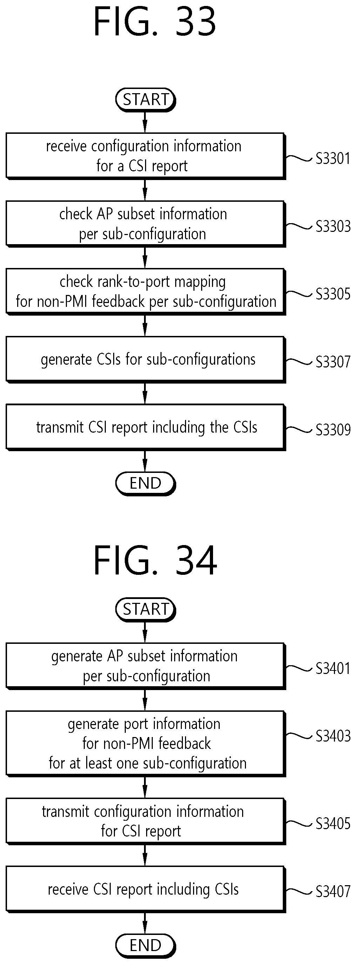

FIG. 33 illustrates an example of a procedure for reporting non-PMI-based CSIs for sub-configurations according to an embodiment of the present disclosure. FIG. 33 illustrates a method performed by the UE.

Referring to FIG. 33, in step S3301, the UE receives configuration information for CSI reporting. The configuration information may include information related to a CSI-RS resource or resource set related to CSI reporting, the number of APs, and a power offset. Additionally, the configuration information may include a plurality of sub-configurations, and the sub-configurations may be related to at least one of different values of the number of APs, AP subsets, or power offset values. In this case, in the present embodiment, the configuration information for CSI reporting may be configured not to include PMI as a report quantity.

In step S3303, the UE checks AP subset information per sub-configuration. Configuration information received from the base station may include AP subset information per sub-configuration. Specifically, the configuration information received from the base station may include a list of a plurality of sub-configurations, and the sub-configurations may include different AP subsets. That is, the sub-configurations may be related to information on AP subsets. Accordingly, the UE may check, using bitmap information, an AP subset applied to the corresponding sub-configuration, that is, indices of AP(s) that are turned on and/or indices of AP(s) that are turned off. For example, an AP subset may be represented in a bitmap format.

In step S3305, the UE checks rank-to-port mapping for non-PMI feedback per sub-configuration. When performing non-PMI-based CSI feedback, the UE may transmit at least one of CRI, RI, and CQI without PMI. For this, which AP(s) measurements are performed for each rank is configured using port indices/numbers. In this case, when APs configured per sub-configuration are different, the UE may determine port set(s) for each rank value according to pre-defined or configured rules. For this, the UE may perform AP re-indexing for at least some of the sub-configurations or may reuse port configuration information applied to another sub-configuration.

In step S3307, the UE generates CSIs for the sub-configurations. Here, the CSI may include at least one of CRI, RI, and CQI. To calculate RI and/or CQI, the UE may perform measurements based on a mapping relationship between rank values and ports. That is, although not illustrated in FIG. 33, after receiving at least one CSI-RS, the UE may generate CSIs for each of the sub-configurations based on a port set for each rank and measurement results for the CSI-RS.

In step S3309, the UE transmits a CSI report including the CSIs. In other words, the UE feeds back CSIs per sub-configuration to the base station. That is, the UE transmits the CSI report using resources indicated by configuration information for CSI reporting. Here, the CSI report may be transmitted through one message or a plurality of messages.

FIG. 34 illustrates an example of a procedure for receiving non-PMI-based CSIs for sub-configurations according to an embodiment of the present disclosure. FIG. 34 illustrates a method performed by a base station.

Referring to FIG. 34, in step S3401, the base station generates AP subset information per sub-configuration. In providing a configuration related to CSI reporting, the base station may provide a plurality of sub-configurations for one CSI-RS resource or CSI-RS resource set. In this case, the sub-configurations may be distinguished by at least one of the number of APs, an AP subset, or a power offset. For example, the base station may generate AP subset information per sub-configuration in which an AP subset is represented in a bitmap format.

In step S3403, the base station generates port information for non-PMI feedback for at least one sub-configuration. The port information for non-PMI feedback indicates an AP set per rank, and specifically indicates at least one AP index corresponding to each rank. Here, the port information for non-PMI feedback may be generated for each of all sub-configurations or may be generated for each of some sub-configurations.

In step S3405, the base station transfers configuration information for CSI reporting. The configuration information may include information related to a CSI-RS resource or resource set related to CSI reporting, the number of APs, and a power offset. Additionally, the configuration information may include a plurality of sub-configurations, and the sub-configurations may be related to at least one of different values of the number of APs, AP subsets, or power offset values. In this case, the configuration information may include the AP subset information per sub-configuration generated in step S3401 and the port information for non-PMI feedback generated in step S3403.

In step S3407, the base station receives a CSI report including CSIs. Here, the CSI report may include CSIs per sub-configuration. In other words, the base station receives CSIs per sub-configuration from the UE.

Although not illustrated in FIG. 34, the base station may transfer at least one CSI-RS through CSI-RS resources related to the configuration information for CSI reporting. And, the base station may receive the CSI report using resources indicated by the configuration information for CSI reporting. Here, each CSI may include RI and/or CQI. To interpret the RI and/or CQI, mapping between a rank and an AP set is required. Therefore, the base station may determine port set(s) for each rank value based on configured or pre-defined rules. For this, the base station may perform AP re-indexing for at least some of the sub-configurations or may reuse port configuration information applied to another sub-configuration.

[Embodiment #5-1] A parameter related to rank-specific port mapping for non-PMI feedback (e.g., non-PMI-PortIndication) may be configured for each sub-configuration. For example, 8-port NZP CSI-RS resource #1/#2 may be configured for CMR, port subset indication information of '1111 1111' may be configured for sub-configuration index #1, and port subset indication information of '0000 1111' may be configured for sub-configuration index #2. In this case, when [Embodiment #5-1] is applied, the non-PMI-PortIndication parameter may be configured based on P=8 for sub-configuration #1, and the non-PMI-PortIndication parameter may be configured based on P=4 for sub-configuration #2. When the non-PMI-PortIndication parameter is configured based on P=4 for sub-configuration #2, each AP index may be maintained to be identical to existing port indexing (e.g., port indices 4/5/6/7), or may be re-indexed or re-mapped in ascending order or descending order based on ports in an on state (e.g., port indices 0/1/2/3).

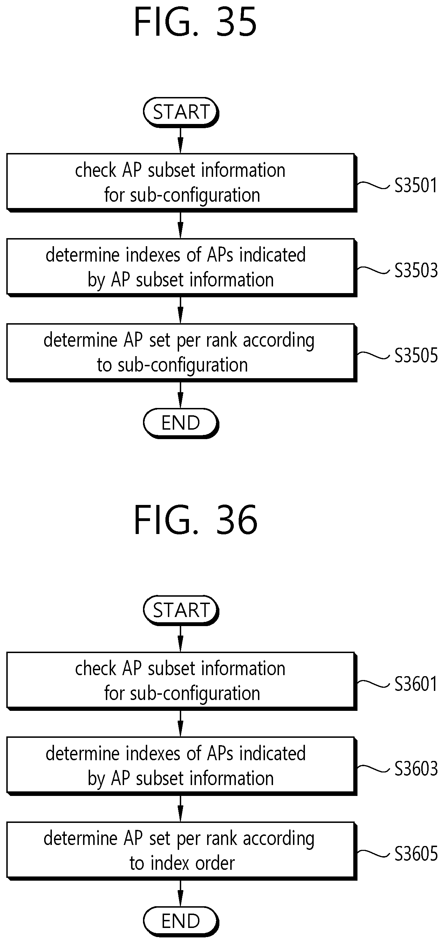

FIG. 35 illustrates an example of a procedure for determining an AP set corresponding to each rank for non-PMI feedback based on an AP subset of a sub-configuration according to an embodiment of the present disclosure. FIG. 35 illustrates a method performed by the UE. FIG. 35 illustrates operations for one sub-configuration, and when a plurality of sub-configurations are included, the procedure of FIG. 35 may be repeated.

Referring to FIG. 35, in step S3501, the UE checks AP subset information for a sub-configuration. That is, the UE checks information related to an AP subset associated with the sub-configuration. The AP subset may be indicated in a bitmap format, each bit of the bitmap corresponds to APs, and positions of bits configured as '1' indicate AP(s) used in the corresponding sub-configuration, that is, AP(s) that are turned on.

In step S3503, the UE determines indices of APs indicated by the AP subset information. APs have indices assigned in a full AP state corresponding to a configuration related to CSI reporting including the sub-configuration, however, when only some of the APs are used by the AP subset information, if the indexing result in the full AP state is used without change, APs within the AP subset may have discontinuous indices. Therefore, in order for APs within the AP subset to have consecutive indices, new indices may be assigned within the corresponding sub-configuration. That is, the UE re-indexes APs indicated by the AP subset information. In other words, the UE may re-map indices to APs. For example, CSI-RS port indices may be derived by mapping APs corresponding to bits having a value of 1 in a bitmap (e.g., port-subsetIndicator) included in the AP subset information as consecutive APs starting from CSI-RS port index 0 in increasing order of bit positions in the bitmap (the CSI-RS port indices are derived by mapping antenna ports corresponding to all bits with value of 1 in the bitmap as consecutive antenna ports starting at CSI-RS port index 0 in increasing order of the bit position in the bitmap).

In step S3505, the UE determines an AP set per rank according to the sub-configuration. The UE may determine an AP index set per rank based on a parameter related to rank-specific port mapping for non-PMI feedback (e.g., non-PMI-PortIndication) (hereinafter, referred to as 'rank-specific port mapping information') included in the sub-configuration and indices of APs re-indexed in step S3503. Here, the rank-specific port mapping information may be configured based on the number of bits having a value of 1 in a bitmap of the corresponding sub-configuration. That is, the rank-specific port mapping information may indicate AP index sets for ranks less than or equal to the number of bits having a value of 1 in the bitmap. In this case, indices indicated by the rank-specific port mapping information may be interpreted based on the re-indexed indices in step S3503.

As described with reference to FIG. 35, the UE may determine AP indices for APs indicated by AP subset information. Accordingly, in calculating RI and/or CQI, the UE may use AP indices determined based on the AP subset information. In this case, in order for the base station to interpret RI and/or CQI received from the UE, the base station may re-index AP indices for the sub-configuration, and accordingly, may perform index mapping for APs of the AP subset in the same scheme as the UE.

[Embodiment #5-2] For a sub-configuration in which a parameter related to rank-specific port mapping for non-PMI feedback (e.g., non-PMI-PortIndication) is not configured, ports that are in an on-state according to port subset indication information within the sub-configuration may be mapped to each rank in port index order. For example, 8-port NZP CSI-RS resource #1/#2 may be configured for CMR, port subset indication information of '1111 1111' may be configured for sub-configuration index #1, and port subset indication information of '0000 1111' may be configured for sub-configuration index #2. In this case, when non-PMI-PortIndication is not configured for sub-configuration #2, port index 4 may correspond to rank 1, port indices 4/5 may correspond to rank 2, port indices 4/5/6 may correspond to rank 3, and port indices 4/5/6/7 may correspond to rank 4, in order.

Alternatively, re-indexing or re-mapping of port indices may be performed for ports in an on-state. For example, for ports in an on-state, re-indexing or re-mapping may be performed in ascending order or descending order (e.g., port indices 0/1/2/3). In this case, port index 0 may correspond to rank 1, port indices 0/1 may correspond to rank 2, port indices 0/1/2 may correspond to rank 3, and port indices 0/1/2/3 may correspond to rank 4, in order.

FIG. 36 illustrates an example of a procedure for determining an AP set corresponding to each rank for non-PMI feedback based on an AP subset of a sub-configuration according to an embodiment of the present disclosure. FIG. 36 illustrates a method performed by the UE. FIG. 36 illustrates operations for one sub-configuration, and when a plurality of sub-configurations are included, the procedure of FIG. 36 may be repeated.

Referring to FIG. 36, in step S3601, the UE checks AP subset information for a sub-configuration. That is, the UE checks information related to an AP subset associated with the sub-configuration. The AP subset may be indicated in a bitmap format, each bit of the bitmap corresponds to APs, and positions of bits configured as '1' indicate AP(s) used in the corresponding sub-configuration, that is, AP(s) that are turned on.

In step S3603, the UE determines indices of APs indicated by the AP subset information. APs have indices assigned in a full AP state corresponding to a configuration related to CSI reporting including the sub-configuration, however, when only some of the APs are used by the AP subset information, if the indexing result in the full AP state is used without change, APs within the AP subset may have discontinuous indices. Therefore, in order for APs within the AP subset to have consecutive indices, new indices may be assigned within the corresponding sub-configuration. That is, the UE re-indexes APs indicated by the AP subset information. In other words, the UE may re-map indices to APs. For example, CSI-RS port indices may be derived by mapping APs corresponding to bits having a value of 1 in a bitmap (e.g., port-subsetIndicator) included in the AP subset information as consecutive APs starting from CSI-RS port index 0 in increasing order of bit positions in the bitmap (the CSI-RS port indices are derived by mapping antenna ports corresponding to all bits with value of 1 in the bitmap as consecutive antenna ports starting at CSI-RS port index 0 in increasing order of the bit position in the bitmap).

In step S3605, the UE determines an AP set per rank according to an index order. The UE may determine an AP index set per rank based on indices of APs re-indexed in step S3603. Here, ranks having values less than or equal to the number of bits having a value of 1 in the bitmap are considered. The UE may determine an AP set corresponding to a rank by selecting AP(s) as many as a value of the rank in ascending order of port indices.

As described with reference to FIG. 36, the UE may determine AP indices for APs indicated by AP subset information. Accordingly, in calculating RI and/or CQI, the UE may use AP indices determined based on the AP subset information. In this case, in order for the base station to interpret RI and/or CQI received from the UE, the base station may re-index AP indices for the sub-configuration, and accordingly, may perform index mapping for APs of the AP subset in the same manner as the UE.

[Embodiment #5-2A] For a sub-configuration in which a parameter related to rank-specific port mapping for non-PMI feedback (e.g., non-PMI-PortIndication) is not configured, non-PMI-PortIndication parameter information configured for another sub-configuration may be applied. The present embodiment may be applied when port subset indication information configured for two sub-configurations is identical. For example, 8-port NZP CSI-RS resource #1/#2 may be configured for CMR, port subset indication information of '1111 1111' may be configured for sub-configuration index #1, port subset indication information of '0000 1111' and a power offset delta value may be configured as A for sub-configuration index #2, and port subset indication information of '0000 1111' and a power offset delta value may be configured as B for sub-configuration index #3. In this case, when the non-PMI-PortIndication parameter is configured for sub-configuration index #2 and the non-PMI-PortIndication parameter is not configured for sub-configuration index #3, since the port subset indication information configured for the two sub-configurations is identical, the non-PMI-PortIndication parameter information configured for sub-configuration index #2 may be commonly applied to sub-configuration index #3 as well.

[Embodiment #5-3] A parameter related to rank-specific port mapping for non-PMI feedback (e.g., non-PMI-PortIndication) may not be configured per sub-configuration and may be configured within a CSI-ReportConfig. In this case, the corresponding non-PMI-PortIndication configuration may be applied to a sub-configuration that is a full AP, that is, a sub-configuration in which bitmap information including port subset indication information is all 1's. For other sub-configuration(s), as in [Embodiment #5-2], ports that are in an on-state according to port subset indication information within the corresponding sub-configuration may be mapped to each rank in port index order. If the corresponding non-PMI-PortIndication parameter is not configured, even for a sub-configuration that is a full AP, ports may be mapped to each rank in port index order.

According to Embodiment #5-3, for a sub-configuration configured as a full AP, the UE determines an AP set per rank based on non-PMI-PortIndication applied to an entire CSI report. And, for a sub-configuration configured as an AP subset rather than a full AP, the UE may determine an AP set per rank based on an order of indices of APs activated according to port subset indication information.

[Embodiment #5-4] Even when the number of APs differs per sub-configuration, CSI may be calculated based on a common port index order. In this case, in calculating CSI corresponding to a specific sub-configuration, the UE may exclude, from calculation/reporting, a rank value including a port index that is in an off-state. For example, 8-port NZP CSI-RS resource #1/#2 may be configured for CMR, port subset indication information of '1111 1111' may be configured for sub-configuration index #1, and port subset indication information of '0000 1111' may be configured for sub-configuration index #2. In this case, when a port index associated with rank=1 is 7 and port indices associated with rank=2 are 0/7, the UE may exclude, from calculation/reporting, rank=2 including port index 0 that is in an off state, in order to calculate CSI for sub-configuration #2.

According to Embodiment #5-4, the UE checks rank-specific AP sets that are commonly applied to a plurality of sub-configurations. For example, rank-specific AP sets that are commonly applied may be checked by a parameter related to rank-specific port mapping for non-PMI feedback (e.g., non-PMI-PortIndication) included in a configuration related to CSI reporting. And, in determining CSI for each sub-configuration, the UE may exclude, from CSI calculation, a rank mapped to an AP set including a port that is deactivated in the corresponding sub-configuration among the commonly applied rank-specific AP sets.

If, as a result of applying the rule according to Embodiment #5-4 for a specific sub-configuration, no reportable rank exists, CSI reporting may be performed according to another embodiment. For example, as in Embodiment #5-2, ports may be mapped to each rank in port index order among ports that are in an on-state according to port subset indication information within the corresponding sub-configuration. Alternatively, calculation/reporting may be allowed only for rank=1 through a first port among ports that are in an on-state according to port subset indication information within the corresponding sub-configuration.

Alternatively, when no reportable rank exists as a result of applying the rule according to Embodiment #5-4 for a specific sub-configuration, default CSI information may be reported. For example, the default CSI information may be a specific PMI/CQI value and may include PMI/CQI corresponding to the lowest index/value. Alternatively, CSI information corresponding to the sub-configuration may be dropped/omitted. Alternatively, the UE may not expect a configuration of a situation in which no reportable rank exists.

[Embodiment #5-5] For a configuration related to CSI reporting including at least one sub-configuration, when a parameter for a report quantity (e.g., reportQuantity) is configured as 'cri-RI-CQI', a constraint may be imposed such that a non-PMI-PortIndication parameter is always configured for each sub-configuration or for at least sub-configurations having different port subset indication information. Alternatively, it may be allowed that the non-PMI-PortIndication parameter is configured for all sub-configurations within the same CSI report configuration, or that the non-PMI-PortIndication parameter is not configured for any sub-configuration. When the non-PMI-PortIndication parameter is not configured for any sub-configuration, another embodiment may be applied. For example, as in Embodiment #5-2, ports may be corresponded to each rank in port index order among ports that are in an on-state according to port subset indication information within the corresponding sub-configuration.

[Embodiment #5-6] Different embodiments may be applied depending on whether a parameter related to rank-specific port mapping for non-PMI feedback (e.g., non-PMI-PortIndication) is configured within a sub-configuration. When the non-PMI-PortIndication parameter is configured within a sub-configuration, Embodiment #5-1 may be applied. When the non-PMI-PortIndication parameter is not configured for a certain sub-configuration but the non-PMI-PortIndication parameter is configured within a CSI report configuration, Embodiment #5-2, Embodiment #5-2A, or Embodiment #5-4 may be applied. When the non-PMI-PortIndication parameter is not configured in both the sub-configuration and the CSI report configuration, as in Embodiment #5-2, ports may be corresponded to each rank in port index order among ports that are in an on-state according to port subset indication information within the corresponding sub-configuration.

According to the various embodiments described above, in particular, according to Embodiment #5-1 and Embodiment #5-2, the TS 38.214 specification document may be modified as shown in [Table 19] below.

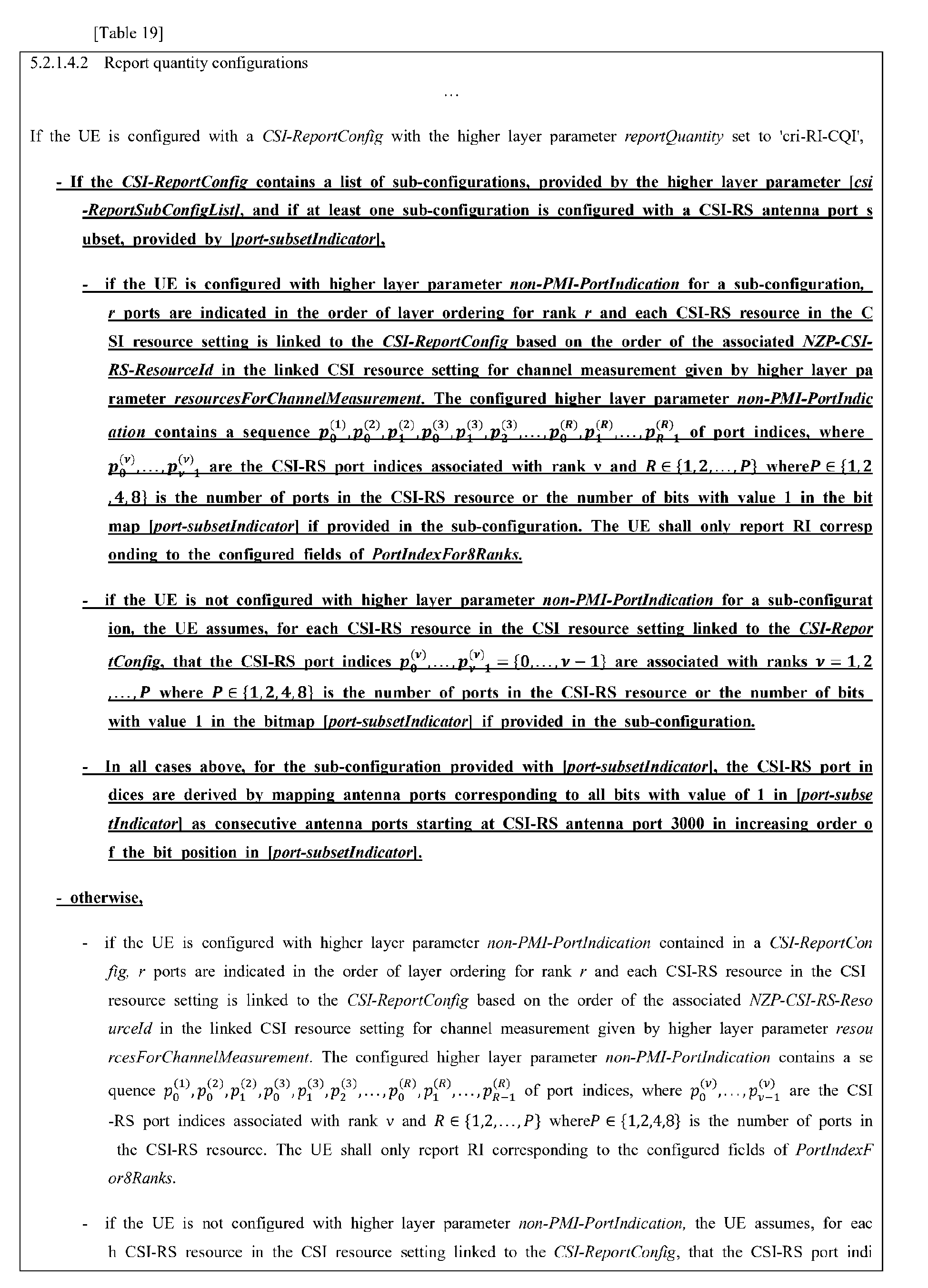

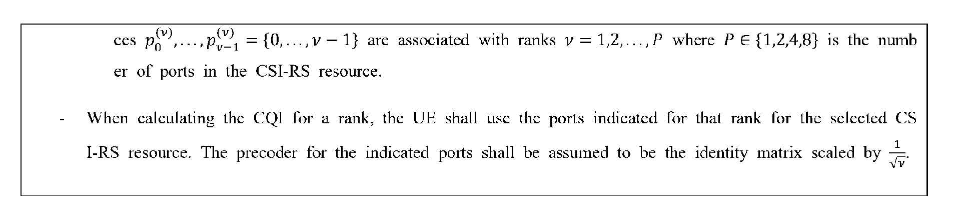

At least some of the various embodiments described above may also be applied to a case of type-2 spatial domain (SD) or type-2 SD + power domain (PD) adaptation.

[Embodiment #5-1'] A parameter related to rank-specific port mapping for non-PMI feedback (e.g., non-PMI-PortIndication) may be configured per sub-configuration. For example, 8-port NZP CSI-RS resource #1/#2 may be configured for CMR, resource #1 may be associated with sub-configuration index #1, and resource #2 may be associated with sub-configuration index #2. In this case, when Embodiment #5-1 is applied, the non-PMI-PortIndication parameter may be configured based on P=8 for sub-configuration #1, and the non-PMI-PortIndication parameter may also be configured based on P=8 for sub-configuration #2.

[Embodiment #5-2'] If non-PMI-PortIndication is not configured for a sub-configuration, ports may be mapped to each rank in port index order.

[Embodiment #5-2A'] For a sub-configuration for which non-PMI-PortIndication is not configured, non-PMI-PortIndication parameter information configured for another sub-configuration may be applied. This embodiment may be applied only when CSI-RS resource ID list information configured for two sub-configurations is identical. For example, 8-port NZP CSI-RS resource #1/#2/#3/#4 may be configured for CMR, CSI-RS resource ID list information may be configured as {#1,#2} for sub-configuration index #1, CSI-RS resource ID list information may be configured as {#3,#4} and a power offset delta value may be configured as A for sub-configuration index #2, and CSI-RS resource ID list information may be configured as {#3,#4} and a power offset delta value may be configured as B for sub-configuration index #3. In this case, when non-PMI-PortIndication parameter is configured for sub-configuration index #2 and non-PMI-PortIndication parameter is not configured for sub-configuration index #3, since CSI-RS resource ID list information configured for the two sub-configurations is identical, non-PMI-PortIndication parameter information configured for sub-configuration index #2 may be commonly applied to sub-configuration index #3 as well.

[Embodiment #5-3'] The non-PMI-PortIndication configuration may not be configured per sub-configuration and may be configured within a configuration related to CSI reporting (e.g., CSI-ReportConfig). In this case, the corresponding non-PMI-PortIndication configuration may be commonly applied to all sub-configurations.

[Embodiment #5-5'] For a configuration related to CSI reporting in which at least one sub-configuration is configured, when a parameter for a report quantity (e.g., reportQuantity) is configured as 'cri-RI-CQI', a constraint may be imposed such that a non-PMI-PortIndication parameter is always configured for each sub-configuration or at least for sub-configurations having different list information.

[Embodiment #5-6'] When the non-PMI-PortIndication parameter is configured within a sub-configuration, Embodiment #5-1' may be applied. In contrast, when the non-PMI-PortIndication parameter is not configured for a certain sub-configuration but the non-PMI-PortIndication parameter is configured within a CSI report configuration, Embodiment #5-2' or Embodiment #5-2A' may be applied. Alternatively, when the non-PMI-PortIndication parameter is not configured for both the sub-configuration and the CSI report configuration, Embodiment #5-2' may be applied.

The present disclosure may reduce base station power consumption by providing a mechanism to dynamically turn on and off some APs in consideration of communication states and data amounts with UEs associated with the base station. In addition, through AP indexing considering AP on/off and codebook structure, even if some APs are turned off, an existing CSI calculation method may be reused.

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

### INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method performed by a user equipment (UE) in a wireless communication system, the method comprising:
receiving configuration information for a channel state information (CSI) report including at least one sub-configuration;
checking information related to an antenna port subset related to the at least one sub-configuration;
checking a rank-to-port mapping for a non-precoding matrix indicator (PMI) feedback per sub-configuration;
generating CSI for the at least one sub-configurations, based on a measurement result based on at least one CSI-RS related to the CSI report; and
transmitting, to a base station, CSI report including the CSI,
wherein the CSI includes at least one a rank indicator (RI) or a channel quality information (CQI),
wherein the RI or the CQI is calculated based on the rank-to-port mapping determined based on antenna port indexes mapped to antenna ports included in the antenna port subset, and
wherein the antenna port indexes are determined by mapping the antenna ports to consecutive value starting from a starting value of index, in ascending order of index within an entire set.

2. The method of claim 1,
wherein the antenna port subset is indicated by using a bitmap.

3. The method of claim 1,
wherein the rank-to-port mapping is determined based on a parameter related to a port mapping per rank for non-PMI feedback included in the at least one sub-configuration.

4. The method of claim 3,
wherein the rank-to-port mapping includes a first antenna port set corresponding to a first rank and a second antenna port set corresponding to a second rank,
wherein a first rank is mapped to antenna ports indicated by parameter related to the port mapping per rank, a number of antenna ports being equal to a value of the first rank, and
wherein a second rank is mapped to antenna ports indicated by parameter related to the port mapping per rank, a number of antenna ports being equal to a value of the second rank.

5. The method of claim 1,
wherein the rank-to-port mapping is determined based on an order of the antenna port indexes.

6. The method of claim 5,
wherein the rank-to-port mapping includes a first AP set corresponding to a first rank and a second AP set corresponding to a second rank,
wherein the first rank is mapped to APs that are selected in ascending order of the antenna port indexes, a number of the APs being equal to a value of the first rank, and
wherein the second rank is mapped to APs that are selected in ascending order of the antenna port indexes, a number of the APs equal to a value of the second rank.

7. The method of claim 1,
wherein the at least one sub-configuration includes a first sub-configuration and a second sub-configuration, and
wherein the rank-to-port mapping for the first sub-configuration is determined based on a parameter related to a port mapping per rank for a non-PMI feedback included in the second sub-configuration.

8. The method of claim 7,
wherein the second sub-configuration is configured with an antenna port subset that is identical to an antenna port subset of the first sub-configuration.

9. The method of claim 1,
wherein the rank-to-port mapping is determined based on antenna port sets per rank commonly applied to the at least one sub-configuration, and
wherein a rank mapped to at least one port set including an antenna port that is turned off in a corresponding sub-configuration among the antenna port sets per rank is excluded in the generation of the CSI.

10. A user equipment (UE) in a wireless communication system, comprising:
a transceiver; and
a processor connected to the transceiver,
wherein the processor is configured to:
receive configuration information for a channel state information (CSI) report including at least one sub-configuration;
check information related to an antenna port subset related to the at least one sub-configuration;
check a rank-to-port mapping for a non-precoding matrix indicator (PMI) feedback per sub-configuration;
generate CSI for the at least one sub-configurations, based on a measurement result based on at least one CSI-RS related to the CSI report; and
transmit, to a base station, CSI report including the CSI,
wherein the CSI includes at least one a rank indicator (RI) or a channel quality information (CQI),
wherein the RI or the CQI is calculated based on the rank-to-port mapping determined based on antenna port indexes mapped to antenna ports included in the antenna port subset, and
wherein the antenna port indexes are determined by mapping the antenna ports to consecutive value starting from a starting value of index, in ascending order of index within an entire set.

11. A communication device comprising:
at least one processor; and
at least one computer memory connected to the at least one processor and storing instructions that direct operations when executed by the at least one processor, the operations comprising:
receiving configuration information for a channel state information (CSI) report including at least one sub-configuration;
checking information related to an antenna port subset related to the at least one sub-configuration;
checking a rank-to-port mapping for a non-precoding matrix indicator (PMI) feedback per sub-configuration;
generating CSI for the at least one sub-configurations, based on a measurement result based on at least one CSI-RS related to the CSI report; and
transmitting, to a base station, CSI report including the CSI,
wherein the CSI includes at least one a rank indicator (RI) or a channel quality information (CQI),
wherein the RI or the CQI is calculated based on the rank-to-port mapping determined based on antenna port indexes mapped to antenna ports included in the antenna port subset, and
wherein the antenna port indexes are determined by mapping the antenna ports to consecutive value starting from a starting value of index, in ascending order of index within an entire set.

12. A non-transitory computer-readable medium storing at least one instruction, the at least one instruction being executable by a processor, the at least one instruction causing a device, the processor, to:
receive configuration information for a channel state information (CSI) report including at least one sub-configuration;
check information related to an antenna port subset related to the at least one sub-configuration;
check a rank-to-port mapping for a non-precoding matrix indicator (PMI) feedback per sub-configuration;
generate CSI for the at least one sub-configurations, based on a measurement result based on at least one CSI-RS related to the CSI report; and
transmit, to a base station, CSI report including the CSI,
wherein the CSI includes at least one a rank indicator (RI) or a channel quality information (CQI),
wherein the RI or the CQI is calculated based on the rank-to-port mapping determined based on antenna port indexes mapped to antenna ports included in the antenna port subset, and
wherein the antenna port indexes are determined by mapping the antenna ports to consecutive value starting from a starting value of index, in ascending order of index within an entire set.
